# EUROPÄISCHE PATENTSCHRIFT

(11) **EP 4 055 473 B1**
(45) Veröffentlichungstag und Bekanntmachung des Hinweises auf die Patenterteilung: **26.07.2023**
(21) Anmeldenummer: 20824224.8
(22) Anmeldetag: 11.12.2020
(51) Int. Cl.: G06F 8/656, G06F 8/41

(54) **VERFAHREN ZUM AKTUALISIEREN EINES STEUERPROGRAMMS EINES AUTOMATISIERUNGSSYSTEMS MIT DATENMIGRATION EINES PROGRAMMZUSTANDS DES STEUERPROGRAMMS**
METHOD FOR UPDATING A CONTROL PROGRAM OF AN AUTOMATION SYSTEM WITH DATA MIGRATION FOR A PROGRAM STATE OF THE CONTROL PROGRAM
PROCÉDÉ DE MISE À JOUR D'UN PROGRAMME DE COMMANDE D'UN SYSTÈME D'AUTOMATISATION AVEC MIGRATION DE DONNÉES POUR UN ÉTAT DE PROGRAMME DU PROGRAMME DE COMMANDE

(30) Priorität: 13.12.2019 DE 102019134373
(43) Veröffentlichungstag der Anmeldung: 14.09.2022
(73) Patentinhaber: Beckhoff Automation GmbH, 33415 Verl (DE)
(72) Erfinder: DREESEN, Ralf, 33334 Gütersloh (DE)
(74) Vertreter: Patentanwaltskanzlei WILHELM & BECK
(86) Internationale Anmeldenummer: PCT/EP2020/085799
(87) Internationale Veröffentlichungsnummer: WO 2021/116429

(56) Entgegenhaltungen:
- EP-A1- 0 764 899
- DE-A1- 19 810 802

## Beschreibung

Die Erfindung betrifft ein Verfahren zum Aktualisieren eines Steuerprogramms eines Automatisierungssystems mit simultaner Migration von einen Programmzustand des Steuerprogramms beschreibenden Daten.

In der Automatisierungstechnik werden Teilnehmer eines Automatisierungssystems für gewöhnlich durch eine Steuerung des Automatisierungssystems mittels zyklischen Ausführens eines entsprechenden Steuerprogramms angesteuert und ausgelesen. Für jeden Zyklus, in dem die jeweiligen Teilnehmer den jeweiligen Steueranweisungen des Steuerprogramms entsprechend gesteuert werden, werden von der Steuerung Informationen aufgenommen und gespeichert, die den Zustand des Automatisierungssystems und des Steuerprogramms beschreiben. Ein sogenannter globaler Zustand umfasst die vollständige Information, die notwendig ist, den Zustand des Automatisierungssystems und des Steuerprogramms wiederzugeben. Ein globaler Zustand kann beispielsweise die im Steuerprogramm verwendeten Variablen, Funktionen, Datenbanken oder sonstige Objekte umfassen. Ferner kann der globale Zustand Informationen bezüglich der Teilnehmer des Automatisierungssystems oder bezüglich im Automatisierungssystem ablaufender Prozesse umfassen.

Ein derartiger globaler Zustand kann nach Abschluss jedes Steuerzyklus neu erstellt werden, sodass jederzeit der aktuelle Zustand des Automatisierungssystems und des Steuerprogramms wiedergegeben werden kann. Der globale Zustand ist der Inhalt eines entsprechenden globalen Speicherbereichs. Während der Ausführung eines Zyklus des Steuerungsprogramms kann der Speicher (ggf. mehrfach) geändert werden. Mit jeder Änderung des Speichers kann sich somit der Zustand ändern. Dabei können ggf. ungültige Zwischenzustände auftreten. Zum Ende des Zyklus ist der Globale Zustand konsistent und bleibt bis zum Beginn des nächsten Ausführungszyklus bestehen.

Bei erneutem Ausführen des Steuerprogramms in einem folgenden Steuerzyklus kann das Steuerprogramm auf die im globalen Zustand gespeicherten Daten zurückgreifen und somit die Steuerung des Automatisierungssystems in dem folgenden Zyklus auf Basis des Zustands des Automatisierungssystems des vorherigen Steuerzyklus fortsetzen.

Im laufenden Betrieb eines Automatisierungssystems ergeben sich häufig Situationen, in denen verschiedene Parameter nachgeregelt oder Abläufe verändert oder angepasst werden müssen, um einen optimierten Ablauf des Betriebs des Automatisierungssystems erreichen oder gewährleisten zu können. In diesem Zusammenhang besteht im laufenden Betrieb häufig die Notwendigkeit ein derzeit ausgeführtes Steuerprogramm durch eine aktuellere Version zu ersetzen, in der die notwendigen Anpassungen berücksichtigt sind. Um nach dem Ersetzen einen Neustart des Automatisierungssystems vermeiden zu können und stattdessen das Automatisierungssystem in dem derzeitigen Zustand weiter betreiben zu können, muss die aktuelle Version des Steuerprogramms auf die Information des globalen Zustands zugreifen können, der den Zustand des Steuerprogramms und des Automatisierungssystems zum Zeitpunkt des zuletzt ausgeführten Steuerzyklus beschreibt. Nur so kann gewährleistet werden, dass mit dem Ausführen der aktuellen Version des Steuerprogramms das Automatisierungssystem an den derzeitigen Zustand des Automatisierungssystems anknüpfend weitergesteuert werden und ein kompletter Neustart des Automatisierungssystems vermieden werden kann.

Problematisch ist nun, wenn Änderungen in der aktuellen Version des Steuerprogramms die im globalen Zustand gespeicherten Informationen betreffen. Beispielsweise können in der aktuellen Version des Steuerprogramms Variablen umbenannt, entfernt oder hinzugefügt werden oder Datentypen von Objekten des Steuerprogramms geändert sein. Derartige Änderungen oder Modifikationen können nun verhindern, dass die aktuelle Version des Steuerprogramms direkt auf die Information des globalen Zustands zugreifen kann, da eine Zuordnung zwischen den Variablen oder Objekten des aktualisierten Steuerprogramms und den im globalen Zustand gespeicherten Objekten gestört sein kann.

Anders ausgedrückt, kann der ausführbare Code des Steuerungsprogramms eine bestimmte Struktur des globalen Zustandes voraussetzen, zum Beispiel an welcher relativen Position des entsprechenden Speichers eine Variable liegt und wie der In-halt des dortigen Speichers zu interpretieren ist.

Es besteht daher die Notwendigkeit, die Information des globalen Zustands an die aktuelle Version des Steuerprogramms, und den darin vorgenommenen Änderungen, anzupassen, sodass bei erfolgreicher Anpassung das aktuelle Steuerprogramm auf die Information des globalen Zustands zugreifen und das Automatisierungssystem in dessen aktuellem Zustand ansteuern kann.

Aus der Druckschrift DE 198 10 802 A1 ist ein störungsfeies Aktualisieren von Daten bekannt. Aus der Druckschrift EP 0 764 899 A1 ist ein Verfahren zum Konvertieren sich unterscheidender Datenformate bekannt.

Es ist daher eine Aufgabe der Erfindung, ein verbessertes Verfahren zum Aktualisieren eines Steuerprogramms eines Automatisierungssystems mit simultaner Übertragung eines aktuellen Programmzustands bereitzustellen.

Die Aufgabe wird durch ein Verfahren gemäß dem unabhängigen Anspruch gelöst. Bevorzugte Ausführungsformen sind in den abhängigen Ansprüchen angegeben.

Nach einem ersten Aspekt der vorliegenden Erfindung wird ein Verfahren zum Aktualisieren eines Steuerprogramms eines Automatisierungssystems mit Datenmigration eines Programmzustands des Steuerprogramms bereitgestellt, wobei eine Steuerung des Automatisierungssystems ein erstes Steuerprogramm und ein zweites Steuerprogramm umfasst, wobei das erste Steuerprogramm zum Steuern des Automatisierungssystems ausgeführt wird, wobei das zweite Steuerprogramm eine Aktualisierung des ersten Steuerprogramms ist, wobei das erste Steuerprogramm ein erstes Datenelement von einem ersten Datentyp umfasst, das einen Programmzustand des ersten Steuerprogramms beschreibt und in einem ersten Speicherbereich der Steuerung gespeichert ist, und wobei das zweite Steuerprogramm ein zweites Datenelement eines zweiten Datentyps umfasst, das einen Programmzustand des zweiten Steuerprogramms beschreibt und in einem zweiten Speicherbereich gespeichert ist, umfassend: Initialisieren des zweiten Datenelements in einem Initialisierungsschritt, wobei das Initialisieren ein Setzen eines Werts des zweiten Datenelements auf einen vorbestimmten Initialwert umfasst, und wobei das Initialisieren des zweiten Datenelements ein Initialisieren aller zweiten Datenunterelemente des zweiten Datenelements umfasst, wobei das Initialisieren des Datenelements ein Initialisieren aller zweiter Datenunterelemente des zweiten Datenelements umfasst, Generieren einer ersten Migrationsfunktion zum Abbilden des ersten Datenelements auf das zweite Datenelement in einem ersten Generierungsschritt, Unterbrechen des Ausführens des ersten Steuerprogramms in einem Unterbrechungsschritt, Bestimmen eines Werts des ersten Datenelements in einem ersten Bestimmungsschritt, wobei der bestimmte Wert des ersten Datenelements einen Programmzustand des Steuerprogramms zum Zeitpunkt der Unterbrechung beschreibt, und Abbilden des Werts des ersten Datenelements auf das zweite Datenelement durch Ausführen der ersten Migrationsfunktion in einem Migrationsschritt, dadurch gekennzeichtnet, dass das erste Steuerprogramm zyklisch ausgeführt wird, und dass der Initialisierungsschritt zeitlich vor dem Migrationsschritt ausgeführt wird..

Hierdurch wird der technische Vorteil erreicht, dass ein verbessertes Verfahren zum Aktualisieren eines Steuerprogramms eines Automatisierungssystems bereitgestellt werden kann, mit dem simultan eine Datenmigration eines Programmzustands des Steuerprogramms ermöglicht ist. Das Verfahren ermöglicht ein Ersetzen eines Steuerprogramms, das für ein zyklisches Ansteuern eines Automatisierungssystems verwendet wird, durch eine aktualisierte Version des Steuerprogramms in einem laufenden Betrieb des Automatisierungssystems.

Hierzu sind in einem Speicher der Steuerung des Automatisierungssystems ein erstes Steuerprogramm, das zum Zeitpunkt des Ausführens des Verfahrens zum Steuern des Automatisierungssystems zyklisch aufgerufen und ausgeführt wird, und ein zweites Steuerprogramm, das eine aktualisierte Version des ersten Steuerprogramms sein kann und das erste Steuerprogramm ersetzen soll, gespeichert. Das erste Steuerprogramm umfasst ferner ein erstes Datenelement, das in einem ersten Speicherbereich des Speichers gespeichert ist und einen Zustand des Automatisierungssystems und des ersten Steuerprogramms beschreibt.

Das zweite Steuerprogramm kann eine aktualisierte Version des ersten Steuerprogramms sein und Veränderungen des ersten Steuerprogramms in Form eines Updates umfassen. Alternativ kann das zweite Steuerprogramm eine ältere Version des ersten Steuerprogramms sein, die von der derzeitigen Version des ersten Steuerprogramms abweicht. Alternativ kann das zweite Steuerprogramm ein eigenständig programmiertes Steuerprogramm sein, das nicht auf dem ersten Steuerprogramm basieren muss.

Das erste Datenelement kann als eine komplexe Datenstruktur aufgebaut sein und eine Mehrzahl von Objekten umfassen und einen globalen Zustand des ersten Steuerprogramms und des Automatisierungssystems beschreiben.

Objekte sind im Folgenden Datenobjekte oder Objekte eines Steuerprogramms und können ebenfalls eine komplexe Datenstruktur aufweisen und einen komplexen Informationsgehalt umfassen. Der globale Zustand ist durch die vom ersten Datenelement umfassten Objekte gebildet und umfasst sämtliche Information, die für die Steuerung des Automatisierungssystems benötigt wird.

In einem zweiten Speicherbereich ist ein zweites Steuerprogramm gespeichert, das eine aktualisierte Version des ersten Steuerprogramms sein kann und als Ersatz dieses dient.

Das zweite Steuerprogramm umfasst ein zweites Datenelement, in dem Informationen bezüglich des globalen Zustands des zweiten Steuerprogramms gespeichert werden können. Das zweite Datenelement kann wiederum eine komplexe Datenstruktur aufweisen und eine Mehrzahl vom im zweiten Steuerprogramm definierten Objekten umfassen. Die von den Objekten beziehungsweise vom zweiten Datenelement umfasste Information beschreibt einen globalen Zustand des zweiten Steuerprogramms.

Um das erste Steuerprogramm durch das zweite Steuerprogramm zu ersetzen und um den globalen Zustand des ersten Steuerprogramms in das zweite Steuerprogramm zu überführen, wird in einem ersten Generierungsschritt eine erste Migrationsfunktion generiert. Die erste Migrationsfunktion dient dazu, das erste Datenelement auf das zweite Datenelement abzubilden und somit die Information bezüglich des globalen Zustands des ersten Steuerprogramms in die Nomenklatur des zweiten Steuerprogramms zu überführen, beziehungsweise die Information des globalen Zustands des ersten Steuerprogramms in den im zweiten Datenelement gespeicherten Objekten des zweiten Steuerprogramms so auszudrücken, dass die Interpretation beziehungsweise Bedeutung des zweiten Zustandes weitestgehend dem ersten Zustand entspricht..

In einem Unterbrechungsschritt wird das zyklische Ausführen des ersten Steuerprogramms unterbrochen und in einem ersten Bestimmungsschritt wird darauffolgend ein Wert des ersten Datenelements bestimmt. Bei Unterbrechung des zyklischen Ausführens des ersten Steuerprogramms wird die Information bezüglich des globalen Zustands des ersten Steuerprogramms und des Automatisierungssystems zum Zeitpunkt des Unterbrechens des zyklischen Ausführens des ersten Steuerprogramms in dem ersten Datenelement gespeichert. Der Wert des ersten Datenelements beschreibt somit den globalen Zustand des Automatisierungssystems zum Zeitpunkt des Unterbrechens des zyklischen Ausführens, beziehungsweise zum Zeitpunkt oder nach Beendigung des zuletzt ausgeführten Steuerzyklus.

Das Unterbrechen des zyklischen Ausführens des ersten Steuerprogramms kann während eines Steuerzyklus, zwischen zwei Steuerzyklen, vor Start eines Steuerzyklus oder nach Beendigung eines Steuerzyklus durchgeführt werden.

In einem Migrationsschritt wird darauffolgend der Wert des ersten Datenelements auf das zweite Datenelement durch ein Ausführen der ersten Migrationsfunktion abgebildet. Die erste Migrationsfunktion liest hierzu den Wert des ersten Datenelements aus und schreibt den ausgelesenen Wert in das zweite Datenelement. Die erste Migrationsfunktion bildet somit den Wert des ersten Datenelements auf einen Wert des zweiten Steuerprogramms ab und schreibt den ausgelesenen Wert in das zweite Datenelement.

Durch das Abbilden des Werts des ersten Datenelements, der den globalen Zustand des ersten Steuerprogramms und des Automatisierungssystems zum Zeitpunkt des zuletzt ausgeführten Steuerzyklus beschreibt, auf das zweite Datenelement wird erreicht, dass der globale Zustand des ersten Steuerprogramms in das zweite Steuerprogramm überführt werden kann. Wird in einem folgenden Schritt das Automatisierungssystem durch Ausführen des zweiten Steuerprogramms angesteuert, so kann das zweite Steuerprogramm auf die Information des globalen Zustands des Automatisierungssystems zum Zeitpunkt des zuletzt ausgeführten Steuerzyklus, die durch den Migrationsschritt auf das zweite Datenelement abgebildet ist, zugreifen, und das Automatisierungssystem kann nahtlos in dem Zustand des zuletzt ausgeführten Steuerzyklus auf Basis des zweiten Steuerprogramms angesteuert werden.

Durch das Übertragen des globalen Zustands in das zweite Steuerprogramm kann die Steuerung des Automatisierungssystems auf Basis des zweiten Steuerprogramms in den zuletzt bestimmten Zustand fortgesetzt werden und ein Neustart des Automatisierungssystems, bei dem die Information des globalen Zustands des ersten Steuerprogramms verloren geht und jeder Prozess des Automatisierungssystems neu gestartet werden muss und die Steuerung mit dem Startzustand beginnt, vermieden werden.

Somit kann ein fließender Übergang zwischen der Steuerung auf Basis des ersten Steuerprogramms und der Steuerung auf Basis des zweiten Steuerprogramms des Automatisierungssystems erreicht werden, ohne dass ein substanzieller Stillstand des Automatisierungssystems eintritt. Vorzugsweise kann ein Ersetzen des ersten Steuerprogramms durch das zweite Steuerprogramm innerhalb einer Unterbrechung zwischen zwei aufeinanderfolgenden Steuerzyklen vorgenommen werden, sodass ein Stillstand des Automatisierungssystems vollständig vermieden werden kann.

Indem der globale Zustand des ersten Steuerprogramms A und des Automatisierungssystems zum Zeitpunkt des zuletzt auf Basis des ersten Steuerprogramms ausgeführten Steuerzyklus nach der Datenmigration auf das zweite Datenelement im zweiten Speicherbereich abgebildet ist, ist der globale Zustand im zweiten Datenelement ohne nicht nutzbare Speicherlücken gespeichert. Das zweite Datenelement bildet im zweiten Speicherbereich einen zusammenhängenden Bereich, in dem alle Objekte des zweiten Datenelements dicht gepackt und ohne nicht nutzbare Speicherlücken angeordnet sind. Indem der globale Zustand des ersten Steuerprogramms und des Automatisierungssystems zum Zeitpunkt des zuletzt auf Basis des ersten Steuerprogramms A ausgeführten Steuerzyklus im Migrationsschritt Objekt für Objekt auf die entsprechenden Objekte des zweiten Datenelements abgebildet wird, ist der globale Zustand nach erfolgreicher Datenmigration als eine zusammenhängende Einheit im zweiten Speicherbereich gespeichert. Da der globale Zustand durch die Datenmigration in einem neuen Speicherbereich vollständig neu aufgebaut wird, anstatt einerseits Objekte des ersten Datenelements anzuhängen und andererseits die Nutzung von Objektes inmitten des ersten Datenelements einzustellen, kann eine Fragmentierung des Speicherbereichs verhindert werden.

Ein erstes Datenelement und ein zweites Datenelement können im Folgenden eine komplexe Datenstruktur aufweisen, die jeweils mehrere Komponenten oder Objekte umfasst, die wiederum komplexe Datentypen sein können. Das erste Datenelement beschreibt einen globalen Zustand des ersten Steuerprogramms und des Automatisierungssystems und umfasst somit die Information, die zur Beschreibung des jeweiligen Zustands, in dem sich das Automatisierungssystem bzw. das erste Steuerprogramm befindet, benötigt wird. Das zweite Datenelement ist dafür eingerichtet, einen globalen Zustand des zweiten Steuerprogramms und des Automatisierungssystems zu beschreiben. Zum Zeitpunkt des Durchführens des Verfahrens kann das zweite Datenelement bereits alle im zweiten Steuerprogramm definierten Objekte umfassen.

Ein globaler Zustand kann alle Variablen oder anders gestaltete Objekte umfassen, die ein Steuerprogramm benötigt, um das Automatisierungssystem anzusteuern. Im globalen Zustand können die jeweiligen Objekte des Steuerprogramms entsprechende Werte bzw. Messwerte, die durch den Betrieb des Automatisierungssystems erzeugt wurden und den jeweiligen Zustand des Automatisierungssystems beschreiben, umfassen.

Eine Datenmigration ist im Folgenden eine Übertragung von Daten aus einem ersten Speicherbereich in einen zweiten Speicherbereich. Neben dem Auslesen der Daten im ersten Speicherbereich und dem Schreiben der Daten in den zweiten Speicherbereich kann eine Datenmigration eine Konvertierung des jeweiligen Datentyps umfassen. So können im Zuge der Datenmigration Daten eines ersten Datentyps im ersten Speicherbereich in Daten eines zweiten Datentyps konvertiert und im zweiten Speicherbereich gespeichert werden.

Durch das Initialiserien des zweiten Datenelements wird der technische Vorteil erreicht, dass unter Berücksichtigung des zweiten Datenelements und auf Basis des zweiten Steuerprogramms die Steuerung des Automatisierungssystems durchgeführt werden kann. Durch das Initialisieren des zweiten Datenelementes, bei der alle Werte des zweiten Datenelements auf einen Initialwert gesetzt werden, kann das zweite Steuerprogramm die Werte des zweiten Datenelements direkt für die Steuerung des Automatisierungssystems berücksichtigen. Dies entspricht einem Start des zweiten Steuerprogramms aus dem Startzustand. Das Initialisieren des zweiten Datenelements umfasst hierbei das Initialisieren aller zweiten Datenunterelemente des zweiten Datenelements.

Nach einer Ausführungsform umfasst das Verfahren ferner:
Überprüfen, ob der Wert des ersten Datenelements hinreichend genau auf das zweite Datenelement abbildbar ist in einem ersten Überprüfungsschritt, wobei der Wert des ersten Datenelements hinreichend genau auf das zweite Datenelement abbildbar ist, wenn der Wert des ersten Datenelements in dem zweiten Datentyp darstellbar ist, falls der Wert des ersten Datenelements auf das zweite Datenelement abbildbar ist, zyklisches Aufrufen des zweiten Steuerprogramms unter Berücksichtigung des zweiten Datenelements und Steuern des Automatisierungssystems auf Basis des zweiten Steuerprogramms in einem ersten Steuerschritt, und falls der Wert des ersten Datenelements nicht auf das zweite Datenelement abbildbar ist, Fortsetzen des zyklischen Aufrufens des ersten Steuerprogramms unter Berücksichtigung des ersten Datenelements und Steuern des Automatisierungssystems auf Basis des ersten Steuerprogramms in einem zweiten Steuerschritt.

Hierdurch wird der technische Vorteil erreicht, dass ein Verfahren zum Aktualisieren eines Steuerprogramms mit simultaner Datenmigration eines Programmzustands des Steuerprogramms bereitgestellt werden kann, bei dem die Datenmigration des Programmzustands abgebrochen werden kann, falls diese nicht zu einem zufriedenstellenden Ergebnis führen kann, und bei dem nach abgebrochener Datenmigration die Steuerung des Automatisierungssystems auf Basis des ursprünglichen Steuerprogramms und des dazugehörigen Programmzustands fortgesetzt werden kann.

In einem Überprüfungsschritt wird überprüft, ob der Wert des ersten Datenelements hinreichend genau auf das zweite Datenelement abbildbar ist. Eine hinreichend genaue Abbildung des ersten Datenelements auf das zweite Datenelement kann behindert sein, wenn der Datentyp des ersten Datenelements und der Datentyp des zweiten Datenelements nicht ineinander konvertiert werden können, ohne durch die Konvertierung den Informationsgehalt des Werts des ersten Datenelements substanziell zu verändern.

Die Überprüfung im Überprüfungsschritt kann je nach Datentyp des ersten Datenelements und des zweiten Datenelements variiert werden. Sind das erste Datenelement und das zweite Datenelement beispielsweise von einem skalaren Datentyp, so wird eine explizite Überprüfung durchgeführt. Sind das erste Datenelement und das zweite Datenelement von einem Verbundtyp oder einem Feldtyp so wird die Überprüfung indirekt durchgeführt, indem überprüft wird, ob die Komponenten der Verbundtypen oder die Elemente der Feldtypen hinreichend genau aufeinander abbildbar sind, sofern diese von skalaren Datentypen sind. Sind diese nicht hinreichend genau aufeinander abbildbar, so sind auch das erste Datenelement und das zweite Datenelement nicht hinreichend genau aufeinander abbildbar. Sind die Komponenten der Verbundtypen oder die Elemente der Feldtypen wieder Verbundtypen oder Feldtypen, so werden für die Überprüfung deren Komponenten oder Elemente herangezogen. So wird bei der Überprüfung solange verfahren, bis Komponenten von Verbundtypen oder Elemente von Feldtypen skalare Datentypen aufweisen.

Im Folgenden gelten Datenelemente als nicht hinreichend genau aufeinander abbildbar, wenn durch die Abbildung der Informationsgehalt des ursprünglichen Datenelements verändert wird. Alternativ können Datenelemente auch als nicht hinreichend genau aufeinander abbildbar gelten, wenn durch die Abbildung der Informationsgehalt des ursprünglichen Datenelements derart gravierend verändert wird, dass für eine Weiterberücksichtigung der veränderte Informationsgehalt unbrauchbar ist. Dies kann gegebenenfalls im Einzelfall zu entscheiden sein.

Im Folgenden gelten ein Datenelement mit einem Datentyp eines Verbundtyps und ein Datenelement mit einem Datentyp eines Feldtyps als nicht hinreichend genau aufeinander abbildbar. Ferner gelten ein Datenelement mit einem Datentyp eines Verbundtyps und ein Datenelement mit einem Datentyp eines Skalartyps als nicht hinreichend genau aufeinander abbildbar. Ferner gelten ein Datenelement vom Datentyp eines Feldtyps und ein Datenelement von Datentyp eines Skalartyps als nicht hinreichend genau aufeinander abbildbar. Darüber hinaus können zwei Datenelemente vom Datentyp eines Skalartyps ebenfalls nicht hinreichend genau aufeinander abbildbar sein.

Neben den Fällen, in denen aufgrund unterschiedlicher Arten von Datentypen das erste Datenelement nicht hinreichend genau auf das zweite Datenelement abbildbar ist, kann ferner eine hinreichend genaue Abbildung fehlschlagen, wenn trotz prinzipiell kompatibler Datentypen der Datentyp des zweiten Datenelements nicht geeignet ist, den Wert des ersten Datenelements vollständig auszudrücken. Ist der Datentyp des ersten Datenelements beispielsweise ein vorzeichenloser 16-Bit Integer und der Datentyp des zweiten Datenelements ein vorzeichenloser 8-Bit Integer und ist im ersten Datenelement ein Wert von beispielsweise 1000 gespeichert, so kann dieser Wert von 1000 nicht vollständig durch den vorzeichenlosen 8-Bit Integer des zweiten Datenelements, dessen maximaler Zahlenwert 255 beträgt, dargestellt werden. Neben den Datentypen des ersten Datenelements und des zweiten Datenelements und der jeweiligen Kompatibilität der beiden Datentypen wird im ersten Überprüfungsschritt zusätzlich der Wert des ersten Datenelements auf Darstellbarkeit durch den Datentyp des zweiten Datenelements überprüft. Ist der tatsächliche Wert des ersten Datenelements nicht vollständig beziehungsweise nicht mit einer geforderten Genauigkeit im Datentyp des zweiten Datenelements darstellbar, so gelten das erste Datenelement und das zweite Datenelement nicht als hinreichend genau aufeinander abbildbar.

Falls im Überprüfungsschritt erkannt wird, dass der Wert des ersten Datenelements hinreichend genau auf das zweite Datenelement abbildbar ist, wird in einem ersten Steuerschritt das zweite Steuerprogramm unter Berücksichtigung des zweiten Datenelements, auf das in dem Migrationsschritt der Wert des ersten Datenelements abgebildet worden ist, zum Steuern des Automatisierungssystems zyklisch aufgerufen. Das erste Steuerprogramm ist somit erfolgreich durch das zweite Steuerprogramm ersetzt und durch die erfolgreiche Datenmigration des ersten Datenelements, das den Programmzustand bzw. den globalen Zustand des ersten Steuerprogramms und damit verbunden des Automatisierungssystems beschreibt, kann nach Ersetzen des ersten Steuerprogramms durch das zweite Steuerprogramm das Automatisierungssystem auf Basis des zweiten Steuerprogramms in dem aktuellen Zustand weiterbetrieben werden.

Durch die erfolgreiche Datenmigration und die hinreichend genaue Abbildung des Werts des ersten Datenelements auf das zweite Datenelement kann das zweite Steuerprogramm auf die im zweiten Datenelement gespeicherten Informationen bezüglich des globalen Zustands des ersten Steuerprogramms zugreifen und das Automatisierungssystem ausgehend von diesem Zustand ansteuern. Ein Neustart des Automatisierungssystems nach Aktualisierung des Steuerprogramms kann somit vermieden werden, da die Information bezüglich des globalen Zustands des Automatisierungssystems durch die erfolgreiche Datenmigration in die Nomenklatur des zweiten Steuerprogramms überführt werden konnte und somit das zweite Steuerprogramm auf die Information des globalen Zustands des Automatisierungssystems zugreifen kann.

Wird im Überprüfungsschritt hingegen festgestellt, dass der Wert des ersten Datenelements nicht hinreichend genau auf das zweite Datenelement abbildbar ist, wird in einem zweiten Steuerschritt das zyklische Aufrufen des ersten Steuerprogramms unter Berücksichtigung des ersten Datenelements fortgesetzt. Wenn die Datenmigration des globalen Zustands fehlschlägt und der Wert des ersten Datenelements nicht hinreichend genau auf das zweite Datenelement abgebildet werden kann, wird die Aktualisierung des ersten Steuerprogramms verworfen und das Automatisierungssystem auf Basis des unveränderten ersten Steuerprogramms unter Berücksichtigung des ursprünglichen globalen Zustands angesteuert. Hierdurch kann vermieden werden, dass aufgrund einer fehlerhaften Datenmigration des globalen Zustands bzw. einer fehlerhaften Abbildung des Werts des ersten Datenelements auf das zweite Datenelement der Betrieb des Automatisierungssystems unterbrochen werden muss.

Dadurch, dass das erste Steuerprogramm und das erste Datenelement in einem ersten Speicherbereich und das zweite Steuerprogramm und das zweite Datenelement in einem zweiten Speicherbereich gespeichert sind, bleiben sowohl das erste Steuerprogramm als auch das erste Datenelement von der Datenmigration und dem Abbilden des Werts des ersten Datenelements auf das zweite Datenelement unbeeinflusst und stehen nach erfolgreicher wie auch nach fehlerhafter Datenmigration weiterhin zur Verfügung. Somit wird erreicht, dass bei einer fehlgeschlagenen Datenmigration des globalen Zustands bzw. einem fehlerhaften Abbilden des Werts des ersten Datenelements auf das zweite Datenelement jederzeit auf das ursprüngliche erste Steuerprogramm und den im ersten Datenelement gespeicherten globalen Zustand des ersten Steuerprogramms und des Automatisierungssystems zurückgegriffen werden kann, und somit eine Steuerung des Automatisierungssystems fortgesetzt werden kann. Ein Stillstand des Automatisierungssystems bzw. ein Neustart des Automatisierungssystems können somit vermieden werden. Eine erneute Aktualisierung des ersten Steuerprogramms mit Datenmigration des globalen Zustands des ersten Steuerprogramms kann zu einem späteren Zeitpunkt erneut vorgenommen werden.

Nach einer Ausführungsform ist der Wert des ersten Datenelements ferner nicht hinreichend genau auf das zweite Datenelement abbildbar, wenn ein Abbilden des Werts des ersten Datenelements auf das zweite Datenelement im Migrationsschritt einen vorbestimmten Zeitabschnitt überschreitet.

Hierdurch wird der technische Vorteil erreicht, dass ein längerer Stillstand des Automatisierungssystems vermieden werden kann. Falls der Migrationsschritt einen vorbestimmten Zeitabschnitt überschreitet, wird in dem zweiten Steuerschritt das zyklische Aufrufen des ersten Steuerprogramms unter Berücksichtigung des ersten Datenelements zum Steuern des Automatisierungssystems fortgesetzt. Ist die Datenmigration des im ersten Datenelement gespeicherten globalen Zustands nicht in einem vorbestimmten Zeitfenster erfolgreich durchführbar, so wird die Aktualisierung des ersten Steuerprogramms durch das zweite Steuerprogramm und die damit verbundene Datenmigration des globalen Zustands des ersten Steuerprogramms verworfen und die Steuerung des Automatisierungssystems auf Basis des ersten Steuerprogramms und des im ersten Datenelement gespeicherten globalen Zustands fortgesetzt. Ein kontinuierlicher Betrieb des Automatisierungssystems kann somit gewährleistet werden.

Nach einer Ausführungsform umfasst das Verfahren ferner:
Überprüfen, ob im ersten Generierungsschritt die erste Migrationsfunktion generiert werden konnte, in einem zweiten Überprüfungsschritt, und falls im ersten Generierungsschritt die erste Migrationsfunktion nicht generiert werden konnte, Fortsetzen des zyklischen Aufrufens des ersten Steuerprogramms unter Berücksichtigung des ersten Datenelements und Steuern des Automatisierungssystems auf Basis des ersten Steuerprogramms in einem zweiten Steuerschritt.

Hierdurch wird der technische Vorteil erreicht, dass bei einer fehlerhaften oder unvollständigen Datenmigration des im ersten Datenelement gespeicherten globalen Zustands eine Steuerung des Automatisierungssystems auf Basis des ersten Steuerprogramms und des im ersten Datenelement gespeicherten globalen Zustands fortgesetzt werden kann. Falls der Überprüfungsschritt ergibt, dass eine erste Migrationsfunktion zum Abbilden des ersten Datenelements auf das zweite Datenelement nicht generiert werden konnte, wird die Steuerung des Automatisierungssystems auf Basis des ersten Steuerprogramms unter Berücksichtigung des ersten Datenelements in dem zweiten Steuerschritt fortgesetzt.

Ein Generieren der ersten Migrationsfunktion im ersten Generierungsschritt kann insbesondere dann fehlschlagen, wenn das erste Datenelement nicht hinreichend genau auf das zweite Datenelement abbildbar ist, weil das erste Datenelement und das zweite Datenelement jeweils unterschiedliche Datentypen aufweisen, die nicht hinreichend genau ineinander überführbar sind, ohne eine substanzielle Modifikation des vom ersten Datenelement umfassten Informationsgehalts zu bewirken.

Weisen das erste Datenelement und das zweite Datenelement somit zwei Datentypen auf, die aufgrund der Beschaffenheit der jeweiligen Datentypen nicht hinreichend genau aufeinander abbildbar sind, wird die Datenmigration nach dem zweiten Überprüfungsschritt abgebrochen und die Steuerung des Automatisierungssystems im zweiten Steuerschritt auf Basis des ersten Steuerprogramms und des ersten Datenelements fortgesetzt. Hierdurch kann wiederum vermieden werden, dass aufgrund einer fehlgeschlagenen Datenmigration des im ersten Datenelement gespeicherten globalen Zustands des Automatisierungssystems ein Betrieb des Automatisierungssystems ausgesetzt werden muss.

Nach einer Ausführungsform ist die erste Migrationsfunktion eingerichtet, Daten des ersten Datentyps im ersten Speicherbereich auszulesen, ausgelesene Daten des ersten Datentyps in den zweiten Datentyp zu konvertieren und in den zweiten Datentyp konvertierte Daten im zweiten Speicherbereich zu speichern, wobei der Migrationsschritt umfasst: Auslesen des Werts des ersten Datenelements an einer Stelle des ersten Datenelements im ersten Speicherbereich durch die erste Migrationsfunktion in einem ersten Leseschritt, Konvertieren des Werts des ersten Datenelements in den zweiten Datentyp durch die erste Migrationsfunktion in einem ersten Konvertierungsschritt, und Schreiben des in den zweiten Datentyp umgewandelten Werts des ersten Datenelements an eine Stelle des zweiten Datenelements im zweiten Speicherbereich durch die erste Migrationsfunktion in einem ersten Schreibschritt.

Hierdurch wird der technische Vorteil erreicht, dass eine zuverlässige Abbildung des ersten Datenelements auf das zweite Datenelement im Migrationsschritt gewährleistet werden kann. Die erste Migrationsfunktion ist ausgebildet, Daten vom ersten Datentyp des ersten Datenelements auf Daten vom zweiten Datentyp des zweiten Datenelements abzubilden. Hierzu ist die erste Migrationsfunktion eingerichtet, den Wert des ersten Datenelements an einer Stelle im ersten Speicherbereich, an der das erste Datenelement gespeichert ist, auszulesen, den ausgelesenen Wert des ersten Datenelements ggf. in den zweiten Datentyp des zweiten Datenelements zu konvertieren und den konvertierten Wert an eine Stelle im zweiten Speicherbereich, an der das zweite Datenelement gespeichert ist, zu schreiben. Sind das erste Datenelement und das zweite Datenelement vom gleichen Datentyp, entfällt die Konvertierung des ausgelesenen Werts des ersten Datenelements, und die erste Migrationsfunktion speichert den ausgelesenen Wert unmittelbar an der entsprechenden Stelle im zweiten Speicherbereich. Bei gleichen Datentypen der ersten und zweiten Datenelemente kann der Wert des ersten Datenelements blockweise an die Stelle des zweiten Datenelements im zweiten Speicherbereich kopiert werden. Hierdurch kann der Migrationsvorgang beschleunigt werden. Insbesondere ist das blockweise Kopieren bei Feld- und/oder Verbundtypen mit einem großen Speicherplatzbedarf vorteilhaft.

Die erste Migrationsfunktion ist dadurch gekennzeichnet, dass diese beliebige Daten vom ersten Datentyp des ersten Datenelements auf zulässige Daten vom zweiten Datentyp des zweiten Datenelements abbilden kann, sofern das Datum des ersten Datentyps im zweiten Datentyp hinreichend darstellbar ist. Die erste Migrationsfunktion ist somit nicht auf eine Abbildung des ersten Datenelements auf das zweite Datenelement beschränkt, sondern kann für beliebige unterschiedliche Datenelemente vom ersten Datentyp und Datenelemente vom zweiten Datentyp verwendet werden. Für den Fall, dass eine Mehrzahl von Datenelementen des ersten Datentyps auf eine Mehrzahl von Datenelementen des zweiten Datentyps abzubilden ist, kann die erste Migrationsfunktion für jede Abbildung eines Datenelements vom ersten Datentyp auf ein Datenelement vom zweiten Datentyp wiederverwendet werden.

Die erste Migrationsfunktion muss nicht immer surjektiv sein. Wird beispielsweise ein Typ einer Variablen von einem 8-bit Integer auf ein 16-bit Integer geändert, kann eine Datenmigration gegebenenfalls kein Datum erzeugen, obwohl dies ein gültiger Wert des zweiten Typen ist.

Die erste Migrationsfunktion wird jedoch stets einen Wert des Bildbereichs liefern, also einen gültigen Wert des Zieltyps. Bei n-Bit Integer-Typen ist zwar jede Folge von n-Bit ein gültiger Integer, bei Floating-Point Typen kann es jedoch ungültige Bitfolgen geben, die keiner Fließkommazahl zugeordnet sind. Gleiches kann für Unterbereichstypen gültig sein, also für Integer Typen mit einem absichtlich eingeschränkten Wertebereich.

Der Definitionsbereich der Migrationsfunktion kann eingeschränkt sein, wenn der Zieltyp nicht alle Werte des Quelltyps hinreichend genau darstellen kann. Die Migrationsfunktion kann somit entweder nicht auf alle Daten des ersten Datentyps anwendbar sein. Alternativ kann die Migrationsfunktion auf alle Daten des Quelltyps anwendbar sein, zur Laufzeit aber gegebenenfalls eine Abbildung der Daten aufeinander verweigern.

Hierdurch wird der Vorteil erreicht, dass im ersten Generierungsschritt lediglich eine erste Migrationsfunktion generiert werden muss. Hierdurch kann selbst für den Fall, dass eine Mehrzahl von ersten Datenelementen auf eine Mehrzahl von zweiten Datenelementen abzubilden ist, das Verfahren substanziell beschleunigt werden, indem für die Abbildungen der einzelnen ersten Datenelemente auf die jeweiligen zweiten Datenelemente lediglich die für eine derartige Abbildung eingerichtete erste Migrationsfunktion jeweils erneut aufgerufen und ausgeführt werden muss.

Insbesondere kann Programmspeicher zur Aufnahme der Migrationsfunktionen gespart werden. In der Folge kann die Generierungs-, Übersetzung- und Ladezeit verringert werden. Durch Cache-Effekte können sich darüber hinaus die geringere Code-Größe bei typischen Prozessoren günstig auf die Migrationszeit auswirken.

Für eine Generierung einer Mehrzahl von ersten Migrationsfunktionen zum Abbilden der Mehrzahl von ersten und zweiten Datenelementen kann somit verzichtet werden.

Nach einer Ausführungsform umfasst der erste Generierungsschritt ferner: Identifizieren des Datentyps des ersten Datenelements als den ersten Datentyp und identifizieren des Datentyps des zweiten Datenelements als den zweiten Datentyp in einem ersten Identifikationsschritt, wobei die erste Migrationsfunktion auf Basis des identifizierten ersten Datentyps und des identifizierten zweiten Datentyps generiert wird.

Hierdurch wird der technische Vorteil erreicht, dass eine erste Migrationsfunktion individuell angepasst auf die ersten und zweiten Datentypen der ersten und zweiten Datenelemente generiert werden kann. Durch die Identifikation des ersten Datentyps des ersten Datenelements und des zweiten Datentyps des zweiten Datenelements im ersten Generierungsschritt kann die erste Migrationsfunktion darauf ausgerichtet werden, Daten des ersten Datentyps auf Daten des zweiten Datentyps abzubilden.

Ferner kann durch die Identifikation der ersten und zweiten Datentypen der ersten und zweiten Datenelemente im ersten Identifikationsschritt gewährleistet werden, dass im zweiten Überprüfungsschritt überprüft werden kann, ob die erste Migrationsfunktion zum Abbilden von Daten des ersten Datentyps auf Daten des zweiten Datentyps generiert werden kann. Während der Identifikation des ersten Datentyps und des zweiten Datentyps kann analysiert werden, ob der erste Datentyp auf den zweiten Datentyp hinreichend genau abbildbar beziehungsweise der erste Datentyp in den zweiten Datentyp hinreichend genau konvertierbar ist.

Ferner wird erreicht, dass für ein beliebiges Datenelement von einem beliebigen ersten Datentyp und ein beliebiges zweites Datenelement von einem beliebigen zweiten Datentyp eine entsprechende erste Migrationsfunktion von Daten des ersten Datentyps auf Daten des zweiten Datentyps generiert werden kann, indem zu jedem ersten Datenelement und jedem zweiten Datenelement der entsprechende erste Datentyp und zweite Datentyp im ersten Identifikationsschritt identifiziert werden. Die derart generierte erste Migrationsfunktion ist nicht auf die beiden ersten und zweiten Datenelemente beschränkt, sondern ist allgemein auf Daten beziehungsweise Datenelemente der ersten und zweiten Datentypen anwendbar. Hierdurch wird die Zahl benötigter Migrationsfunktionen beschränkt und eine Wiederverwertbarkeit der generierten Migrationsfunktionen erreicht.

Nach einer Ausführungsform umfasst der erste Generierungsschritt ferner: Falls der erste Datentyp des ersten Datenelements und der zweite Datentyp des zweiten Datenelements jeweils ein Verbundtyp ist und falls das erste Datenelement wenigstens ein erstes Datenunterelement von einem dritten Datentyp und das zweite Datenelement wenigstens ein zweites Datenunterelement von einem vierten Datentyp umfassen, Identifizieren des Datentyps des ersten Datenunterelements als den dritten Datenuntertyp und des Datentyps des zweiten Datenunterelements als den vierten Datentyp in einem zweiten Identifikationsschritt, Generieren einer zweiten Migrationsfunktion zum Abbilden des ersten Datenunterelements auf das zweite Datenunterelement auf Basis des identifizierten dritten Datentypsund des identifizierten vierten Datentyps in einem zweiten Generierungsschritt, wobei die zweite Migrationsfunktion eingerichtet ist, Datenelemente des dritten Datentyps im ersten Speicherbereich auszulesen, ausgelesene Daten des dritten Datentyps in den vierten Datentyp zu konvertieren und in den vierten Datentyp konvertierte Daten im zweiten Speicherbereich zu speichern.

Hierdurch wird der technische Vorteil erreicht, dass für erste und zweite Datenelemente, die jeweils von einem Verbundtyp sind, eine hinreichend genaue Datenmigration eines im ersten Datenelement gespeicherten globalen Zustands ermöglicht ist.

In der Praxis wird für gewöhnlich das erste Datenelement und das zweite Datenelement, die jeweils den globalen Zustand des ersten Steuerprogramms und des zweiten Steuerprogramms beschreiben, vom Datentyp eines Verbundtyps sein und eine Mehrzahl von Objekten beziehungsweise untergeordneten Datenelementen oder Datenunterelementen umfassen. Die einzelnen Datenunterelemente der jeweiligen ersten und zweiten Datenelemente können hierbei jeweils einzelne Variablen, komplexe Datenobjekte oder andere Objekte der entsprechenden ersten und zweiten Steuerprogramme sein.

Sind das erste Datenelement und das zweite Datenelement jeweils von einem Verbundtyp und das erste Datenelement weist wenigstens ein erstes Datenunterelement und das zweite Datenelement wenigstens ein zweites Datenunterelement auf, so werden in einem zweiten Identifikationsschritt der Datentyp des ersten Datenunterelements und der Datentyp des zweiten Datenunterelements identifiziert.

Nach Identifikation der Datentypen des ersten Datenunterelements und des zweiten Datenunterelements wird in einem zweiten Generierungsschritt eine zweite Migrationsfunktion generiert zum Abbilden des ersten Datenunterelements auf das zweite Datenunterelement. Die zweite Migrationsfunktion ist eingerichtet, beliebige Daten des Datentyps des ersten Datenunterelements auf beliebige Daten des Datentyps des zweiten Datenunterelements abzubilden. Hierzu ist die zweite Migrationsfunktion eingerichtet, entsprechende Datenelemente des Datentyps des ersten Datenunterelements im ersten Speicherbereich auszulesen, ausgelesene Daten in den Datentyp des zweiten Datenunterelements zu konvertieren und die konvertierten Daten im zweiten Speicherbereich zu speichern. Für den Fall, dass das erste Datenelement und das zweite Datenunterelement vom gleichen Datentyp sind, entfällt die Konvertierung, und die zweite Migrationsfunktion liest die Daten des Datentyps des ersten Datenunterelements im ersten Speicherbereich aus und speichert diese im zweiten Speicherbereich. Bei gleichen Datentypen der ersten und zweiten Datenunterelemente kann der Wert des ersten Datenunterelements blockweise an die Stelle des zweiten Datenunterelements im zweiten Speicherbereich kopiert werden. Hierdurch kann der Migrationsvorgang beschleunigt werden.

Analog zur ersten Migrationsfunktion ist auch die zweite Migrationsfunktion nicht auf eine Abbildung des ersten Datenunterelements auf das zweite Datenunterelement beschränkt. Vielmehr ist die zweite Migrationsfunktion eingerichtet, beliebige Datenelemente des dritten Datentyps auf beliebige Datenelemente des vierten Datentyps abzubilden. Dies hat den Vorteil, dass bei einer Abbildung einer Mehrzahl von ersten Datenunterelementen, die jeweils vom gleichen Datentyp sind, auf eine Mehrzahl von zweiten Datenunterelementen, die ebenfalls untereinander den gleichen Datentyp aufweisen, lediglich eine zweite Migrationsfunktion generiert werden muss. Eine Abbildung der Mehrzahl von ersten Datenunterelementen auf die Mehrzahl von zweiten Datenunterelementen kann dann durch ein wiederholtes Aufrufen und Anwenden der zweiten Migrationsfunktion auf erste Datenunterelemente und zweite Datenunterelemente erreicht werden.

Hierdurch kann wiederum eine zeitliche Beschleunigung der Migration des globalen Zustands erreicht werden, indem lediglich eine geringe Zahl von ersten und zweiten Migrationsfunktionen generiert werden muss, mittels denen eine Mehrzahl von ersten und zweiten Datenelementen bzw. ersten und zweiten Datenunterelementen aufeinander abgebildet werden kann. Insbesondere kann eine Einsparung von Migrationscode erreicht werden, beispielsweise wenn bei zwei Paaren von ersten und zweiten Datenunterelementen die zwei ersten Datenelemente den gleichen Datentyp und die zwei zweiten Datenelemente jeweils den gleichen Datentyp aufweisen. In diesem Fall muss zur Datenmigration der beiden Paare nur eine zweite Migrationsfunktion generiert werden. Darüber hinaus kann Programmspeicher zur Aufnahme der Migrationsfunktionen gespart werden. In der Folge kann die Generierungs-, Übersetzung- und Ladezeit verringert werden. Durch Cache-Effekte können sich darüber hinaus die geringere Code-Größe bei typischen Prozessoren günstig auf die Migrationszeit auswirken.

Nach einer Ausführungsform umfasst der erste Generierungsschritt ferner:
Identifizieren einer ersten Relation zwischen dem ersten Datenunterelement und dem zweiten Datenunterelement in einem dritten Identifikationsschritt, die eine Zuordnung zwischen dem ersten Datenunterelement und dem zweiten Datenunterelement ermöglicht.

Hierdurch wird der technische Vorteil einer präzisen und schnelle Migration erreicht. Die identifizierte Relation kann für die Abbildung des ersten Datenunterelements auf das zweite Datenunterelement herangezogen werden, indem die Relation aussagt, welches erste Datenunterelement auf welches zweite Datenunterelement abzubilden ist. Darüber hinaus kann eine Relation zwischen Datenunterelementen und eine Lageinformation der Datenunterelemente im Speicherbereich können verwendet werden, um zu ermitteln, an welcher relativen Stelle im zweiten Speicherbereich das zweite Datenunterelement angeordnet ist.

In einem dritten Identifikationsschritt wird ferner eine erste Relation zwischen dem ersten Datenunterelement und dem zweiten Datenunterelement bestimmt. Die erste Relation ermöglicht eine hinreichend genaue Zuordnung zwischen dem ersten Datenunterelement und dem zweiten Datenunterelement und besteht wenigstens dann, wenn das erste Datenunterelement und das zweite Datenunterelement gleich benannt sind.

Die identifizierten Relationen zwischen ersten Datenunterelementen und zweiten Datenunterelementen ermöglichen eine Zuordnung zwischen den jeweiligen Elementen, worüber bestimmt werden kann, welche ersten Datenunterelemente auf welche zweiten Datenunterelemente zur Datenmigration des globalen Zustands abgebildet werden müssen. Um bei der Datenmigration gewährleisten zu können, dass der Informationsgehalt des globalen Zustands im ersten Datenelement durch die Abbildung auf das zweite Datenelement unverändert beibehalten wird, werden erste Datenelemente ausschließlich auf zweite Datenelemente abgebildet, für die eine Relation zwischen den ersten Datenelementen und den zweiten Datenelementen besteht. Die identifizierten Relationen zwischen ersten Datenelementen und zweiten Datenelementen gewährleisten, dass die jeweils in Relation stehenden ersten Datenelemente und zweiten Datenelemente entsprechend dem ersten Steuerprogramm und zweiten Steuerprogramm die gleiche Funktion und Bedeutung aufweisen. Es werden nur Datenunterelemente aufeinander abgebildet, die über eine Relation zueinander assoziiert sind. Hierdurch kann eine hinreichend genaue Datenmigration erreicht werden.

Im Mathematischen Sinne kann für ein Paar von Datenelementen, die jeweils vom Verbundtyp sind, eine zweistellige Relation bestehen, die die Komponenten des einen Datenelements mit den Komponenten des jeweils anderen Datenelements in Relation setzt.

Es kann dabei bei beiden Datenelementen Komponenten geben, die nicht in Relation mit einer Komponente des jeweils anderen Datenelements in Beziehung stehen. Eine Komponente des einen Datenelements kann nur mit höchstens einer Komponente des jeweils anderen Datenelements in Relation stehen. Formal kann die Relation damit eine partielle Funktion sein, die die Komponenten des einen Datenelements den Komponenten des jeweils anderen Datenelements zuordnet.

Nach einer Ausführungsform umfasst der Migrationsschritt: Aufrufen der zweiten Migrationsfunktion durch die erste Migrationsfunktion und Ausführen der zweiten Migrationsfunktion zum Abbilden eines Werts des ersten Datenunterelements auf das zweite Datenunterelement in einem ersten Teilmigrationsschritt, wobei der erste Teilmigrationsschritt umfasst: Auslesen eines Werts des ersten Datenunterelements an einer Stelle des ersten Datenunterelements im ersten Speicherbereich durch die zweite Migrationsfunktion in einem zweiten Leseschritt, Konvertieren des Werts des ersten Datenunterelements in den vierten Datentyp durch die zweite Migrationsfunktion in einem zweiten Konvertierungsschritt, und Schreiben des in den vierten Datentyp umgewandelten Werts des ersten Datenunterelements an eine Stelle des zweiten Datenunterelements im zweiten Speicherbereich durch die zweite Migrationsfunktion in einem zweiten Schreibschritt.

Hierdurch wird der technische Vorteil erreicht, dass eine hinreichend genaue Migration des globalen Zustands erreicht wird, indem erste Datenunterelemente des ersten Datenelements hinreichend genau auf entsprechende zweite Datenunterelemente des zweiten Datenelements abgebildet werden.

Hierzu wird in einem Teilmigrationsschritt durch die erste Migrationsfunktion die zweite Migrationsfunktion zum Abbilden eines Werts des ersten Datenunterelements auf das zweite Datenunterelement aufgerufen. Nachdem die erste Migrationsfunktion zum Abbilden des ersten Datenelements auf das zweite Datenelement aufgerufen worden ist und identifiziert wurde, dass das erste Datenelement wenigstens ein erstes Datenunterelement und das zweite Datenelement wenigstens ein zweites Datenunterelement umfasst, das mit dem ersten Datenunterelement in Relation steht, wird zum Abbilden des ersten Datenunterelements auf das zweite Datenunterelement durch die erste Migrationsfunktion die zweite Migrationsfunktion aufgerufen und ausgeführt.

Hierzu können zunächst eine Speicheradresse des ersten Datenunterelements und eine Speicheradresse des zweiten Datenunterelements bestimmt werden. Dies kann durch die erste Migrationsfunktion durchgeführt werden. Beim Aufrufen der zweiten Migrationsfunktion können die Speicheradresse des ersten Datenunterelements und die Speicheradresse des zweiten Datenunterelements von der ersten Migrationsfunktion an die zweite Migrationsfunktion übergeben werden.

Zum Abbilden des ersten Datenunterelements auf das zweite Datenunterelement liest die zweite Migrationsfunktion einen Wert des ersten Datenunterelements ab dem ersten Speicherbereich aus, konvertiert den Wert ggf. in den Datentyp des zweiten Datenunterelements und schreibt den ausgelesenen und ggf. konvertieren Wert an eine Stelle des zweiten Datenunterelements im zweiten Speicherbereich. Haben das erste Datenunterelement und das zweite Datenunterelement jeweils identische Datentypen, entfällt die Konvertierung des ausgelesenen Werts, und die zweite Migrationsfunktion schreibt den ausgelesenen Wert des ersten Datenunterelements direkt an die Stelle des zweiten Datenunterelements im zweiten Speicherbereich.

Umfasst das erste Datenelement eine Mehrzahl von ersten Datenunterelementen und das zweite Datenelement eine Mehrzahl von zweiten Datenunterelementen, wobei die ersten Datenunterelemente jeweils von einem gleichen dritten Datentyp und die zweiten Datenunterelemente jeweils von einem identischen vierten Datentyp sind, wobei eine Mehrzahl von Paaren von ersten Datenunterelementen und zweiten Datenunterelementen bestehen, zwischen denen eine Relation vorliegt, so wird durch die erste Migrationsfunktion die zweite Migrationsfunktion mehrfach aufgerufen, um jedes der Paare von ersten Datenunterelementen und zweiten Datenunterelementen aufeinander abzubilden.

Umfasst das erste Datenelement eine Mehrzahl von ersten Datenunterelementen von verschiedenen Datentypen und umfasst das zweite Datenelement eine Mehrzahl von zweiten Datenunterelementen verschiedener Datentypen, so wird für jedes Paar von ersten Datenunterelementen und zweiten Datenunterelementen, zwischen denen eine Relation besteht, eine zweite Migrationsfunktion generiert. Zur Migration des globalen Zustands und zum Abbilden der ersten Datenunterelemente auf die zu diesen in Relation stehenden zweiten Datenunterelementen werden durch die erste Migrationsfunktion nacheinander die jeweils relevanten zweiten Migrationsfunktionen aufgerufen und ausgeführt, um so paarweise die ersten Datenunterelemente auf die zu diesen jeweils in Relation stehenden zweiten Datenunterelemente abzubilden.

Durch das nacheinander Aufrufen und Ausführen der zweiten Migrationsfunktion durch die erste Migrationsfunktion kann das Verfahren zur Datenmigration des globalen Zustands wiederum zeitlich beschleunigt werden. Insbesondere kann eine Einsparung von Migrationscode erreicht werden, beispielsweise wenn bei zwei Paaren von ersten und zweiten Datenunterelementen die zwei ersten Datenelemente den gleichen Datentyp und die zwei zweiten Datenelemente jeweils den gleichen Datentyp aufweisen. In diesem Fall wird zur Datenmigration der beiden Paare nur eine zweite Migrationsfunktion benötigt, die jedoch zweimal ausgeführt wird. Darüber hinaus kann Programmspeicher zur Aufnahme der Migrationsfunktionen gespart werden. In der Folge kann die Generierungs-, Übersetzung- und Ladezeit verringert werden. Durch Cache-Effekte können sich darüber hinaus die geringere Code-Größe bei typischen Prozessoren günstig auf die Migrationszeit auswirken.

Durch das Aufrufen der zweiten Migrationsfunktion durch die erste Migrationsfunktion im ersten Teilmigrationsschritt kann wiederum die Komplexität der Datenmigration des globalen Zustands verringert werden.

Nach einer Ausführungsform umfasst der erste Teilmigrationsschritt: Falls der erste Datentyp des ersten Datenelements und der zweite Datentyp des zweiten Datenelements jeweils ein Verbundtyp ist und falls der dritte Datentyp des ersten Datenunterelements und der vierte Datentyp des zweiten Datenunterelements ein gleicher Skalartyp sind, Auslesen des Werts des ersten Datenunterelements an der Stelle des ersten Datenunterelements im ersten Speicherbereich durch die zweite Migrationsfunktion in dem zweiten Leseschritt, und Schreiben des ausgelesenen Werts an die Stelle des zweiten Datenunterelements im zweiten Speicherbereich durch die zweite Migrationsfunktion in dem zweiten Schreibschritt.

Hierdurch wird der technische Vorteil erreicht, dass eine Beschleunigung der Datenmigration des globalen Zustands erreicht werden kann. Für den Fall, dass das erste und zweite Datenelement jeweils ein Verbundtyp sind und wenigstens ein erstes Datenunterelement und ein zweites Datenunterelement umfassen, und für den Fall, dass das erste und zweite Datenunterelement von einem identischen Skalartyp sind, so beschränkt sich das Abbilden des ersten Datenunterelements auf das zweite Datenunterelement auf das Auslesen des Werts des ersten Datenunterelements im ersten Speicherbereich durch die zweite Migrationsfunktion und das Schreiben des ausgelesenen Werts an die Stelle des zweiten Datenunterelements im zweiten Speicherbereich durch die zweite Migrationsfunktion.

Hierdurch kann der technische Vorteil erreicht werden, dass bei identischen Datentypen, insbesondere bei identischen Skalartypen, ein Abbilden von ersten und zweiten Datenunterelementen durch ein blockweises Kopieren der Werte der im ersten Speicherbereich gespeicherten ersten Datenunterelemente in die jeweils entsprechenden Stellen des zweiten Speicherbereichs erreicht wird. Hierdurch kann eine substanzielle Beschleunigung des Migrationsvorgangs des globalen Zustands erreicht werden. Für das blockweise Kopieren der Werte der ersten Datenunterelemente im ersten Speicherbereich an die entsprechenden Stellen im zweiten Speicherbereich liest die zweite Migrationsfunktion, bzw. die Mehrzahl von zweiten Migrationsfunktionen, die Werte der ersten Datenunterelemente im ersten Speicherbereich ein und schreibt die eingelesenen Werte unmittelbar an die entsprechenden Stellen im zweiten Speicherbereich. Zusätzliche Konvertierungsschritte sind nicht notwendig.

Nach einer Ausführungsform umfasst der erste Generierungsschritt ferner: Falls der dritte Datentyp des ersten Datenunterelements und der vierte Datentyp des zweiten Datenunterelements ein Verbundtyp sind, und falls das erste Datenunterelement wenigstens eine erste Komponente eines fünften Datentyps und das zweite Datenunterelement wenigstens eine zweite Komponente eines sechsten Datentyps umfassen, Identifizieren des Datentyps der ersten Komponente als den fünften Datentyp und des Datentyps der zweiten Komponente als den sechsten Datentyp in einem vierten Identifikationsschritt, und Generieren einer dritten Migrationsfunktion zum Abbilden der ersten Komponente auf die zweite Komponente auf Basis des identifizierten fünften Datentyps und sechsten Datentyps in einem dritten Generierungsschritt, wobei die dritte Migrationsfunktion eingerichtet ist, Daten des fünften Datentyps im ersten Speicherbereich auszulesen, ausgelesene Daten in den sechsten Datentyp zu konvertieren und in den sechsten Datentyp konvertierte Daten im zweiten Speicherbereich zu speichern.

Hierdurch wird der technische Vorteil erreicht, dass eine flexible und zuverlässige Datenmigration eines komplexen globalen Zustands ermöglicht ist. Für den Fall, dass das erste Datenelement und das zweite Datenelement jeweils von einem Verbundtyp sind und das erste Datenelement wenigstens ein erstes Datenunterelement und das zweite Datenelement wenigstens ein zweites Datenunterelement umfasst, und für den Fall, dass das erste Datenunterelement und das zweite Datenunterelement ebenfalls jeweils von einem Verbundtyp sind und das erste Datenunterelement wenigstens eine erste Komponente und das zweite Datenunterelement wenigstens eine zweite Komponente umfasst, werden in einem vierten Identifikationsschritt der Datentyp der ersten Komponente und der Datentyp der zweiten Komponente identifiziert.

Auf Basis der identifizierten Datentypen der ersten Komponente und der zweiten Komponente wird in einem dritten Generierungsschritt eine dritte Migrationsfunktion zum Abbilden der ersten Komponente auf die zweite Komponente generiert. Die dritte Migrationsfunktion ist hierbei eingerichtet, beliebige Daten vom fünften Datentyp der ersten Komponente im ersten Speicherbereich auszulesen, die ausgelesenen Daten in den sechsten Datentyp der zweiten Komponente zu konvertieren und die konvertierten Daten im zweiten Speicherbereich zu speichern.

Analog zu der ersten Migrationsfunktion und der zweiten Migrationsfunktion ist die dritte Migrationsfunktion ebenfalls nicht auf eine Abbildung einer ersten Komponente auf eine zweite Komponente beschränkt. Vielmehr ist auch die dritte Migrationsfunktion für eine allgemeine Abbildung von beliebigen Daten des fünften Datentyps der ersten Komponente auf beliebige Daten des sechsten Datentyps der zweiten Komponente eingerichtet. Hierdurch wird wiederum der Vorteil erreicht, dass für den Fall, dass das erste Datenunterelement eine Mehrzahl von ersten Komponenten umfasst und das zweite Datenunterelement eine Mehrzahl von zweiten Komponenten umfasst, und für den Fall, dass jede der ersten Komponenten den gleichen Datentyp aufweist und jede der zweiten Komponenten einen identischen Datentyp aufweist, zum Abbilden der Mehrzahl von ersten Komponenten auf die Mehrzahl von zweiten Komponenten lediglich eine dritte Migrationsfunktion generiert werden muss, die ausgebildet ist, Daten des fünften Datentyps der ersten Komponente auf Daten des sechsten Datentyps der zweiten Komponente abzubilden. Hierdurch wird wiederum der Vorteil erreicht, dass der Migrationsvorgang des globalen Zustands vereinfacht wird und somit zeitlich verkürzt durchführbar ist.

Insbesondere kann Programmspeicher zur Aufnahme der Migrationsfunktionen gespart werden. In der Folge kann die Generierungs-, Übersetzung- und Ladezeit verringert werden. Durch Cache-Effekte können sich darüber hinaus die geringere Code-Größe bei typischen Prozessoren günstig auf die Migrationszeit auswirken.

Dadurch, dass die dritte Migrationsfunktion auf Basis der identifizieren Datentypen der ersten Komponente und der zweiten Komponente generiert wird, ist gewährleistet, dass die dritte Migrationsfunktion eingerichtet ist, Daten des Datentyps der ersten Komponente auf Daten des Datentyps der zweiten Komponente abzubilden.

Erste und zweite Komponenten sind im Folgenden Datenelemente oder Datenobjekte und können eine komplexe Datenstruktur aufweisen.

Nach einer Ausführungsform umfasst der erste Generierungsschritt:
Identifizieren einer zweiten Relation zwischen der ersten Komponente und der zweiten Komponente in einem fünften Identifikationsschritt, die eine hinreichend genaue Zuordnung zwischen der ersten Komponente und der zweiten Komponente ermöglicht.

Hierdurch wird der technische Vorteil erreicht, dass eine präzise Migration ermöglicht ist. Die identifizierte Relation kann für die Abbildung der ersten Komponente auf die zweite Komponente herangezogen werden, indem die Relation aussagt, welche erste Komponente auf welche zweite Komponente abzubilden ist. Darüber hinaus kann eine Relation zwischen Komponenten und eine Lageinformation der Komponenten im Speicherbereich verwendet werden, um zu ermitteln, an welcher relativen Stelle im zweiten Speicherbereich die zweite Komponente angeordnet ist.

Durch die Identifikation der Relation zwischen der ersten Komponente und der zweiten Komponente kann wiederum gewährleistet werden, dass ein Wert der ersten Komponente ausschließlich auf eine zweite Komponente des zweiten Datenunterelements abgebildet wird, die zu der ersten Komponente in Relation steht. Eine Relation zwischen einer ersten Komponente und einer zweiten Komponente ist hierbei gegeben, wenn beide Komponenten jeweils gleich benannt sind. Eine bestehende Relation zwischen einer ersten Komponente des ersten Datenunterelements und einer zweiten Komponente des zweiten Datenunterelements besagt, dass die erste Komponente des ersten Datenunterelements im ersten Steuerprogramm eine gleiche Bedeutung und Funktion bzw. Rolle hat wie die zur ersten Komponente in Relation stehende zweite Komponente des zweiten Datenunterelements im zweiten Steuerprogramm.

Umfasst das erste Datenunterelement eine Mehrzahl von ersten Komponenten und umfasst das zweite Datenunterelement eine Mehrzahl von zweiten Komponenten, so kann über die Identifikation von Relationen zwischen den ersten Komponenten und den zweiten Komponenten ermittelt werden, welche der ersten Komponenten auf welche der zweiten Komponenten mittels Anwendung der dritten Migrationsfunktion abzubilden sind. Alternativ können die ersten Komponenten und die zweiten Komponenten über eine einzige Relation zueinander assoziiert sein. Erste Komponenten, für die keine Relation zu einer der zweiten Komponenten identifizierbar ist, werden nicht durch eine dritte Migrationsfunktion auf zweite Komponenten des zweiten Datenunterelements abgebildet. Gleiches gilt für zweite Komponenten, für die ebenfalls keine Relation zu einer der ersten Komponenten identifizierbar ist. Auf diese zweiten Komponenten werden keine Werte von ersten Komponenten des ersten Datenunterelements abgebildet. Wie im Fall der ersten und zweiten Datenunterelemente werden nur erste Komponenten und zweite Komponenten aufeinander abgebildet, für die eine Relation identifizierbar sind. Die Informationen der ersten Komponenten können in diesem Fall verworfen werden. Die zweiten Komponenten können hingegen auf einen Initialwert gesetzt werden.

Alternativ können die Relationen zwischen den ersten Komponenten des ersten Datenunterelements und den zweiten Komponenten des zweiten Datenunterelements von der ersten Relation zwischen des entsprechenden ersten Datenunterelements und dem entsprechenden zweiten Datenunterelement umfasst sein, sodass durch die erste Relation zwischen dem ersten Datenunterelement und dem zweiten Datenunterelement auch erste Komponenten des ersten Datenunterelements mit zweiten Komponenten des zweiten Datenunterelements assoziiert sind.

Alternativ kann einer Mehrzahl von ersten Komponenten des ersten Datenunterelements mit einer Mehrzahl von zweiten Komponenten des zweiten Datenunterelements über eine zweite Relation assoziiert sein.

Nach einer Ausführungsform umfasst der Migrationsschritt:
Aufrufen der dritten Migrationsfunktion durch die zweite Migrationsfunktion und Ausführen der dritten Migrationsfunktion in einem zweiten Teilmigrationsschritt, und wobei der zweite Teilmigrationsschritt umfasst: Auslesen eines Werts der ersten Komponente an einer Stelle der ersten Komponente im ersten Speicherbereich durch die dritte Migrationsfunktion in einem dritten Leseschritt, Konvertieren des Werts der ersten Komponente in den sechsten Datentyp durch die dritte Migrationsfunktion in einem dritten Konvertierungsschritt, und

Schreiben des in den sechsten Datentyp konvertierten Werts der ersten Komponente an eine Stelle der zweiten Komponente im zweiten Speicherbereich durch die dritte Migrationsfunktion in einem dritten Schreibschritt.

Hierdurch wird der technische Vorteil erreicht, dass ein flexibler und präziser Migrationsvorgang der Datenmigration des globalen Zustands bereitgestellt werden kann. Nach Generierung der dritten Migrationsfunktion und nach Identifikation des dritten Datentyps des ersten Datenunterelements und des vierten Datentyps des zweiten Datenunterelements und nach Identifikation der ersten Komponenten und der zweiten Komponenten wird in einem zweiten Teilmigrationsschritt die dritte Migrationsfunktion von der zweiten Migrationsfunktion aufgerufen und ausgeführt, um erste Komponenten des ersten Datenunterelements auf zu den ersten Komponenten in Relation stehende zweite Komponenten des zweiten Datenunterelements abzubilden.

Hierzu können zunächst eine Speicheradresse der ersten Komponenten und eine Speicheradresse der zweiten Komponenten bestimmt werden. Dies kann durch die zweite Migrationsfunktion durchgeführt werden. Beim Aufrufen der dritten Migrationsfunktion können die Speicheradresse der ersten Komponente und die Speicheradresse der zweiten Komponente von der zweiten Migrationsfunktion an die dritte Migrationsfunktion übergeben werden.

Zum Abbilden liest die dritte Migrationsfunktion den Wert der ersten Komponente im ersten Speicherbereich aus, konvertiert den Wert ggf. in den sechsten Datentyp der zweiten Komponente und speichert den konvertierten Wert an einer Stelle der zweiten Komponente im zweiten Speicherbereich. Sind die erste Komponente und die zweite Komponente vom gleichen Datentyp, so entfällt eine Konvertierung des ausgelesenen Werts in den Datentyp der zweiten Komponente und der ausgelesene Wert der ersten Komponente wird direkt an der entsprechenden Stelle im zweiten Speicherbereich gespeichert. Bei identischen Datentypen der ersten und zweiten Komponenten können Werte der ersten Komponenten blockweise an die Stelle der zweiten Komponenten im zweiten Speicherbereich kopiert werden. Hierdurch kann der Migrationsprozess beschleunigt werden.

Für den Fall, dass das erste Datenunterelement eine Mehrzahl von ersten Komponenten und das zweite Datenunterelement eine Mehrzahl von zweiten Komponenten umfasst, und für den Fall, dass zwischen einer Mehrzahl der ersten Komponente und einer Mehrzahl der zweiten Komponenten Relationen bestehen, die eine hinreichend genaue Zuordnung von ersten Komponenten auf zweite Komponenten ermöglichen, und für den Fall, dass wenigstens einige der in Relation stehenden ersten Komponenten und zweiten Komponenten einen unterschiedlichen Datentyp aufweisen, so wird zum Abbilden der Mehrzahl von ersten Komponenten auf die Mehrzahl der zweiten Komponenten eine Mehrzahl von dritten Migrationsfunktionen aufgerufen und ausgeführt, wobei jede der Mehrzahl der Migrationsfunktionen jeweils eingerichtet ist, Daten eines fünften Datentyps wenigstens einer der ersten Komponenten auf Daten eines sechsten Datentyps wenigstens einer der zweiten Komponenten abzubilden.

Die Mehrzahl von dritten Migrationsfunktionen wird jeweils nacheinander durch die zweite Migrationsfunktion aufgerufen und ausgeführt, sodass jeweils nacheinander eine erste Komponente auf eine zu der ersten Komponente in Relation stehende zweite Komponente abgebildet wird. Hierdurch kann ein an Komplexität reduzierter und zeitlich beschleunigter Migrationsvorgang des globalen Zustands des ersten Steuerprogramms erreicht werden, indem die benötigten Migrationsfunktionen auf ein Minimum verringert werden kann.

Nach einer Ausführungsform umfasst der erste Generierungsschritt ferner: Falls der dritte Datentyp und der vierte Datentyp ein Feldtyp sind, falls das erste Datenunterelement und das zweite Datenunterelement eine identische Anzahl von Dimensionen umfassen, wobei das erste Datenunterelement in wenigstens einer Dimension gemäß einem ersten Indexbereich [U0,..., UM] indizierte erste Elemente von einem siebten Datentyp und das zweite Datenunterelement in wenigstens einer Dimension gemäß einem zweiten Indexbereich [X0,..., XN] indizierte zweite Elemente von einem achten Datentyp aufweisen, und falls der erste Indexbereich [U0,..., UM] und der zweite Indexbereich [X0,..., XN] gleich sind, Identifizieren des Datentyps jedes gemäß dem ersten Indexbereich [U0,..., UM] indizierte ersten Elements als den siebten Datentyp und den Datentyp jedes gemäß dem zweiten Indexbereich [X0,..., XN] indizierten zweiten Elements als den achten Datentyp, in einem sechsten Identifikationsschritt, Generieren einer vierten Migrationsfunktion zum Abbilden von ersten Elementen auf zweite Elemente auf Basis des identifizierten siebten Datentyps und achten Datentyps in einem vierten Generierungsschritt, wobei die vierte Migrationsfunktion eingerichtet ist, Daten des siebten Datentyps im ersten Speicherbereich auszulesen, ausgelesene Daten in den achten Datentyp umzuwandeln und umgewandelte Daten im zweiten Speicherbereich zu speichern.

Hierdurch wird der technische Vorteil erreicht, dass ein flexibles und präzises Verfahren zur Aktualisierung eines Steuerprogramms mit Datenmigration eines Programmzustands bereitgestellt werden kann. Für den Fall, dass das erste Datenunterelement und das zweite Datenunterelement jeweils von einem Feldtyp sind, wobei die Feldtypen jeweils eine identische Anzahl von Dimensionen umfassen, und für den Fall, dass das erste Datenunterelement in wenigstens einer Dimension gemäß einem ersten Indexbereich indizierte erste Elemente von einem identischen siebten Datentyp aufweist, und für den Fall, dass das zweite Datenunterelement in wenigstens einer Dimension gemäß einem zweiten Indexbereich indizierte zweite Elemente von einem identischen achten Datentyp aufweist, werden in einem sechsten Identifikationsschritt der siebte Datentyp der ersten Elemente des ersten Indexbereichs und der achte Datentyp der zweiten Elemente des zweiten Indexbereichs identifiziert. Darüber hinaus werden in einem dritten Identifikationsschritt Relationen zwischen ersten Elementen und zweiten Elementen identifiziert, wobei erste Elemente zu zweiten Elementen in Relation stehen, wenn die ersten Elemente und die zweiten Elemente jeweils gleich indiziert sind.

Nach der Identifikation des siebten Datentyps der ersten Elemente, des achten Datentyps der zweiten Elemente und der Relationen zwischen den ersten und zweiten Elementen wird in einem vierten Generierungsschritt auf Basis der identifizierten Datentypen und der identifizierten Relationen eine vierte Migrationsfunktion zum Abbilden von ersten Elementen auf zweite Elemente generiert.

Analog zu der ersten Migrationsfunktion, der zweiten Migrationsfunktion und der dritten Migrationsfunktion ist die vierte Migrationsfunktion nicht auf die Abbildung der ersten Elemente auf die zweiten Elemente beschränkt. Vielmehr ist die vierte Migrationsfunktion eingerichtet, beliebige Daten des siebten Datentyps auf beliebige Daten des achten Datentyps abzubilden. Hierzu ist die vierte Migrationsfunktion eingerichtet, Daten des siebten Datentyps im ersten Speicherbereich einzulesen, die eingelesenen Daten ggf. in den achten Datentyp zu konvertieren und die ausgelesenen und ggf. konvertierten Daten im zweiten Speicherbereich zu speichern.

Zum Abbilden des ersten Datenunterelements auf das zweite Datenunterelement wird somit lediglich eine vierte Migrationsfunktion generiert, die ausgebildet ist, Daten des siebten Datentyps auf Daten des achten Datentyps abzubilden. Zum Abbilden der Mehrzahl von ersten Elementen auf die Mehrzahl von zweiten Elementen wird die entsprechende vierte Migrationsfunktion mehrfach nacheinander aufgerufen und auf Paare zueinander in Relation stehender erster und zweiter Elemente ausgeführt. Eine Vielzahl von vierten Migrationsfunktionen, die jeweils darauf beschränkt sind, ein erstes Element des ersten Datenunterelements auf ein zweites Element des zweiten Datenunterelements abzubilden, kann somit vermieden werden. Hierdurch kann der Migrationsvorgang des globalen Zustands des ersten Steuerprogramms vereinfacht und somit zeitlich beschleunigt werden.

Alternativ weist das erste Datenunterelement in einer Mehrzahl von Dimensionen gemäß einer Mehrzahl von ersten Indexbereichen indizierte erste Elemente auf. Analog weist das zweite Datenunterelement in einer Mehrzahl von Dimensionen gemäß einer Mehrzahl von zweiten Indexbereichen indizierte zweite Elemente auf. Die ersten Indexbereiche können gleich sein und eine gleiche Anzahl von ersten Elementen aufweisen. Analog können die zweiten Indexbereiche gleich sein und eine gleiche Anzahl von zweiten Elementen aufweisen. Alternativ können erste Indexbereiche unterschiedlich sein und eine unterschiedliche Anzahl von ersten Elementen aufweisen. Analog können zweite Indexbereiche unterschiedlich sein und eine unterschiedliche Anzahl von zweiten Elementen aufweisen.

Nach einer Ausführungsform umfasst der erste Generierungsschritt:
Identifizieren einer dritten Relation zwischen einem ersten Element und einem zweiten Element in einem siebten Identifikationsschritt, die eine hinreichend genaue Zuordnung zwischen dem ersten Element und dem zweiten Element ermöglicht.

Hierdurch wird der technische Vorteil erreicht, dass eine präzise Migration ermöglicht ist. Die identifizierte Relation kann für die Abbildung des ersten Elements auf das zweite Element herangezogen werden, indem die Relation aussagt, welches erste Element auf welches zweite Element abzubilden ist. Darüber hinaus kann eine Relation zwischen Elementen und eine Lageinformation der Elemente im Speicherbereich verwendet werden, um zu ermitteln, an welcher relativen Stelle im zweiten Speicherbereich das zweite Elemente angeordnet ist.

Alternativ kann die dritte Relation zwischen dem ersten Element des ersten Datenunterelements und den zweiten Element des zweiten Datenunterelements von der ersten Relation zwischen dem entsprechenden ersten Datenunterelements und dem entsprechenden zweiten Datenunterelement umfasst sein, sodass durch die erste Relation zwischen dem ersten Datenunterelement und dem zweiten Datenunterelement auch das erste Element des ersten Datenunterelements mit dem zweiten Element des zweiten Datenunterelements assoziiert sind. Alternativ kann über die erste Relation zwischen dem ersten Datenunterelement und dem zweiten Datenunterelement eine Mehrzahl von ersten Elementen mit einer Mehrzahl von zweiten Elementen assoziiert sein.

Alternativ kann über die dritte Relation eine Mehrzahl von ersten Komponenten des ersten Datenunterelements mit einer Mehrzahl von zweiten Komponenten des zweiten Datenunterelements assoziiert sein. Alternativ können Paare von ersten Elementen und zweiten Elementen durch eine Mehrzahl von dritten Relationen assoziiert sein.

Nach einer Ausführungsform umfasst der erste Generierungsschritt ferner: falls der erste Indexbereich [U0,..., UM] und der zweite Indexbereich [X0,..., XN] nicht gleich sind, Bestimmen eines Intervalls [R, S] in den Indexbereichen des ersten Datenunterelements und des zweiten Datenunterelements mit R = max(X0, U0) und S = min(XN, UM) in einem Indexbestimmungsschritt, wobei R die größere der beiden unteren Grenzen X0, U0 und S die kleinere der beiden oberen Grenzen XN, UM ist, Identifizieren des Datentyps jedes gemäß dem Intervall [R, S] indizierten ersten Elements als den siebten Datentyp und den Datentyp jedes gemäß einem Intervall [R, S] indizierten zweiten Elements als den achten Datentyp in einem sechsten Identifikationsschritt, und Generieren einer vierten Migrationsfunktion zum Abbilden von ersten Elementen auf zweite Elemente auf Basis des identifizierten siebten Datentyps und des achten Datentyps in einem vierten Generierungsschritt, wobei die vierte Migrationsfunktion eingerichtet ist, Daten des siebten Datentyps im ersten Speicherbereich auszulesen, ausgelesene Daten in den achten Datentyp zu konvertieren und in den achten Datentyp konvertierte Daten im zweiten Speicherbereich zu speichern.

Hierdurch wird der technische Vorteil erreicht, dass ein flexibler und präziser Migrationsvorgang des globalen Zustands des ersten Steuerprogramms bereitgestellt werden kann. Für den Fall, dass der erste Indexbereich des ersten Datenunterelements und der zweite Indexbereich des zweiten Datenunterelements nicht identisch sind, sprich die Indizierung des ersten Indexbereichs und des zweiten Indexbereichs nicht vollständig übereinstimmt und sich wenigstens in einem Wert unterscheiden, wird in einem sechsten Identifikationsschritt ein Schnittbereich beider Indexbereiche ermittelt. Für den ermittelten Schnittbereich sind die Indizierungen im ersten Indexbereich und im zweiten Indexbereich identisch.

Für die ersten und zweiten Elemente des Schnittbereichs wird eine vierte Migrationsfunktion zum Abbilden der ersten Elemente auf die zweiten Elemente generiert. Es werden ausschließlich die ersten Elemente des Schnittbereichs auf die zweiten Elemente des Schnittbereichs abgebildet. Erste und zweite Elemente mit Indizes außerhalb des Schnittbereichs bleibe von der Datenmigration unberührt.

Nach einer Ausführungsform umfasst der erste Teilmigrationsschritt: Aufrufen der vierten Migrationsfunktion durch die zweite Migrationsfunktion und Ausführen der vierten Migrationsfunktion zum Abbilden der ersten Elemente auf die zweiten Elemente in einem dritten Teilmigrationsschritt, und wobei der dritte Teilmigrationsschritt umfasst: Auslesen eines Werts eines ersten Elements an einer Stelle des ersten Elements im ersten Speicherbereich durch die vierte Migrationsfunktion in einem vierten Leseschritt, Konvertieren des Werts des ersten Elements in den achten Datentyp durch die vierte Migrationsfunktion in einem vierten Konvertierungsschritt, und Schreiben des in den achten Datentyp konvertierten Werts des ersten Elements an eine Stelle des zweiten Elements im zweiten Speicherbereich durch die vierte Migrationsfunktion in einem vierten Schreibschritt.

Hierdurch wird der technische Vorteil erreicht, dass eine flexible und präzise Migration des globalen Zustands des ersten Steuerprogramms bereitgestellt werden kann. Für erste Datenunterelemente und zweite Datenunterelemente, die jeweils von einem Feldtyp sind und eine gleiche Anzahl von Dimensionen aufweisen und für die im vierten Generierungsschritt eine vierte Migrationsfunktion generiert wurde, wird in einem dritten Teilmigrationsschritt die vierte Migrationsfunktion durch die zweite Migrationsfunktion aufgerufen und ausgeführt.

Hierzu können zunächst eine Speicheradresse eines ersten Elements und eine Speicheradresse eines zweiten Elements bestimmt werden. Dies kann durch die zweite Migrationsfunktion durchgeführt werden. Beim Aufrufen der vierten Migrationsfunktion können die Speicheradresse des ersten Elements und die Speicheradresse des zweiten Elements von der zweiten Migrationsfunktion an die vierte Migrationsfunktion übergeben werden.

Der dritte Teilmigrationsschritt umfasst hierzu das Auslesen eines Werts eines ersten Elements an einer Stelle des ersten Elements im ersten Speicherbereich durch die vierte Migrationsfunktion, das Konvertieren des ausgelesenen Werts in den Datentyp der zweiten Elemente des zweiten Datenunterelements und das Schreiben des ausgelesenen Werts und ggf. konvertierten Werts an eine Stelle des zweiten Elements im zweiten Speicherbereich. Für den Fall, dass der Datentyp der ersten Elemente und der Datentyp der zweiten Elemente identisch sind, entfällt eine Konvertierung durch die vierte Migrationsfunktion. Bei gleichen Datentypen der ersten und zweiten Elemente können Werte der ersten Elemente blockweise an die Stelle der zweiten Elemente im zweiten Speicherbereich kopiert werden. Hierdurch kann der Migrationsprozess beschleunigt werden. Insbesondere kann bei gleichen Feldtypen der ersten und zweiten Datenunterelemente, das erste Datenunterelement blockweise kopiert werden. Bei ersten und zweiten Elementen mit identischen siebten und achten Datentypen, kann jedes Element blockweise kopiert werden. Gegebenenfalls können auch (abhängig von der Indexrelation) mehrere nebeneinanderliegende Elemente in einem Block kopiert werden.

Die vierte Migrationsfunktion bildet jeweils nur einen Wert eines ersten Elements auf ein zweites Element ab. Bei einer Mehrzahl von ersten Elementen und zweiten Elementen durchläuft die vierte Migrationsfunktion nacheinander die ersten Elemente und zweiten Elemente und bildet jeweils nacheinander ein erstes Element auf ein zweites Element ab. Hierzu kann die Migrationsfunktion nacheinander für jedes abzubildende erste Element von der zweiten Migrationsfunktion aufgerufen und ausgeführt werden.

Für das Abbilden einer Mehrzahl von ersten Elementen auf eine Mehrzahl von zweiten Elementen wird hierzu jeweils nur eine Migrationsfunktion benötigt, die ausgebildet ist, Daten des siebten Datentyps auf Daten des achten Datentyps abzubilden, wobei die Daten Werte, Daten und Datenelemente umfassen können. Analog zu der ersten Migrationsfunktion, der zweiten Migrationsfunktion und der dritten Migrationsfunktion ist auch die vierte Migrationsfunktion nicht auf das Abbilden der ersten Elemente des ersten Datenunterelements auf die zweiten Elemente des zweiten Datenunterelements beschränkt. Auch die vierte Migrationsfunktion ist eingerichtet, beliebige Daten vom siebten Datentyp auf Daten vom achten Datentyp abzubilden. Hierdurch wird die Komplexität des Migrationsvorgangs verringert und somit der Migrationsvorgang zeitlich beschleunigt.

Nach einer Ausführungsform ist der Wert des ersten Datenelements ferner nicht hinreichend genau auf das zweite Datenelement abbildbar, wenn ein Wert eines ersten Datenunterelements nicht hinreichend genau auf ein zweites Datenunterelement abbildbar ist, und/oder wenn ein Wert einer ersten Komponente nicht hinreichend genau auf eine zweite Komponente abbildbar ist, und/oder wenn ein Wert eines ersten Elements nicht hinreichend genau auf ein zweites Element abbildbar ist, und wobei der erste Überprüfungsschritt ferner umfasst: Überprüfen, ob ein Wert eines ersten Datenunterelements hinreichend genau auf ein zweites Datenunterelement abbildbar ist, Überprüfen, ob ein Wert einer ersten Komponente hinreichend genau auf eine zweite Komponente abbildbar ist, und Überprüfen, ob ein Wert eines ersten Elements hinreichend genau auf ein zweites Element abbildbar ist.

Hierdurch wird der technische Vorteil erreicht, dass der Migrationsvorgang abgebrochen werden kann, wenn eine Migration nicht fehlerfrei durchführbar ist. Hierdurch wird der Vorteil erreicht, dass, wenn der globale Zustand des ersten Steuerprogramms nicht hinreichend genau oder fehlerfrei auf das zweite Datenelement abgebildet werden kann, kann die Migration des globalen Zustands des ersten Steuerprogramms bzw. das Abbilden des ersten Datenelements auf das zweite Datenelement verworfen und das Steuern des Automatisierungssystems mit dem zyklischen Aufrufen des ersten Steuerprogramms unter Berücksichtigung des ersten Datenelements und des darin gespeicherten globalen Zustands in den zweiten Steuerschritt fortgesetzt werden.

Ist ein erstes Datenunterelement nicht hinreichend genau auf ein zweites Datenunterelement abbildbar, weil beispielsweise der Datentyp des ersten Datenunterelements und der Datentyp des zweiten Datenunterelements nicht kompatibel sind oder weil ein Wert des ersten Datenunterelements nicht vollständig im Datentyp des zweiten Datenunterelements darstellbar ist, so kann das erste Datenelement nicht hinreichend genau auf das zweite Datenelement abgebildet werden und somit der globale Zustand des ersten Steuerprogramms nicht hinreichend genau in den globalen Zustand des zweiten Steuerprogramms integriert werden. In diesem Fall wird die Migration abgebrochen und das Automatisierungssystem auf Basis des ersten Steuerprogramms und des entsprechenden globalen Zustands weiterhin angesteuert.

Ein erstes Datenunterelement kann beispielsweise nicht hinreichend genau auf ein zweites Datenunterelement abbildbar sein, wenn erste Komponenten des ersten Datenunterelements nicht hinreichend genau auf zweite Komponenten des zweiten Datenunterelements abbildbar sind, oder wenn erste Elemente des ersten Datenunterelements nicht hinreichend genau auf zweite Elemente des zweiten Datenunterelements abbildbar sind. In beiden Fällen kann die Migration des ersten Datenelements auf das zweite Datenelement abgebrochen werden.

Die ersten Komponenten können wiederum nicht hinreichend genau auf die zweiten Komponenten abbildbar sein, wenn die ersten Komponenten und zweiten Komponenten Datentypen aufweisen, die nicht kompatibel sind, oder aber, wenn Werte der ersten Komponenten nicht vollständig im Datentyp der zweiten Komponenten darstellbar sind. Erste Elemente des ersten Datenunterelements können wiederum nicht hinreichend genau auf zweite Elemente des zweiten Datenunterelements abbildbar sein, wenn der Datentyp der ersten Datenelemente nicht kompatibel zum Datentyp des zweiten Datenelements ist. Ferner können die ersten Elemente nicht hinreichend genau auf die zweiten Elemente abbildbar sein, wenn Werte der ersten Elemente nicht vollständig im Datentyp der zweiten Elemente darstellbar sind.

Nach einer Ausführungsform sind für erste Datenunterelemente und zweite Datenunterelemente, für erste Komponenten und zweite Komponenten und für erste Elemente und zweite Elemente Relationen identifizierbar, wenn erste Datenunterelemente und zweite Datenunterelemente gleich benannt sind, wenn erste Komponenten und zweite Komponenten gleich benannt sind, und wenn erste Elemente und zweite Elemente gleich indiziert sind.

Hierdurch wird der technische Vorteil erreicht, dass Relationen automatisch erzeugt sind. Bei gleicher Benennung stehen Objekte automatisch in Relation zueinander und hinreichend genaue Assoziationen zwischen ersten Datenunterelementen und zweiten Datenunterelementen, zwischen ersten Komponenten und zweiten Komponenten und zwischen ersten Elementen und zweiten Elementen identifizierbar sind. Hierdurch wird ein präziser und verlässlicher Migrationsvorgang gewährleistet.

Ein erstes Datenunterelement und ein zweites Datenunterelement stehen in Relation zueinander, wenn das erste Datenunterelement und das zweite Datenunterelement gleich benannt sind. Eine erste Komponente eines ersten Datenunterelements und eine zweite Komponente eines zweiten Datenunterelements stehen in Relation zueinander, wenn die erste Komponente und die zweite Komponente gleich benannt sind. Ein erstes Element eines ersten Datenunterelements und ein zweites Element eines zweiten Datenunterelements stehen in Relation zueinander, wenn das erste Element und das zweite Element gleich indiziert sind.

Alternativ zu diesen Relationen können ein erstes Datenunterelement und ein zweites Datenunterelement in Relation zueinanderstehen, wenn im zweiten Steuerprogramm oder einer dem Steuerprogramm zugeordnete Bibliothek eine derartige Relation benannt ist. Beispielsweise kann für nicht gleich benannte erste Datenunterelemente und zweite Datenunterelemente im Steuerprogramm definiert sein, dass das erste Datenunterelement und das zweite Datenunterelement zueinander in Relation stehen. Gleiches gilt für die ersten Komponenten und die zweiten Komponenten und ersten Elemente und zweiten Elemente, für die ebenfalls im zweiten Steuerprogramm Relationen definiert sein können, wenn die ersten Komponenten und zweiten Komponenten nicht gleich benannt sind bzw. die ersten Elemente und zweiten Elemente nicht gleich indiziert sind.

Darüber hinaus kann eine Relation zwischen ersten Datenunterelementen und zweiten Datenunterelementen, zwischen ersten Komponenten und zweiten Komponenten und zwischen ersten Elementen und zweiten Elementen bestehen, wenn für das Umbenennen der ersten Datenunterelemente in die zweiten Datenunterelemente bzw. der ersten Komponenten in die zweiten Komponenten oder das Anpassen der Indexbereiche der ersten Elemente in die zweiten Elemente ein Refaktorisierungswerkzeug beziehungsweise Indexanpassungswerkzeug verwendet wurde. Durch die Verwendung eines solchen Anpassungswerkzeugs kann eine Relation zwischen den entsprechenden ersten Datenunterelementen und zweiten Datenunterelementen, den ersten Komponenten und zweiten Komponenten und den ersten Elementen und zweiten Elementen identifiziert werden.

Da im Migrationsvorgang ausschließlich Werte von ersten Datenunterelementen auf zweite Datenunterelemente abgebildet werden, die zu den ersten Datenunterelementen in Relation stehen, bzw. Werte der ersten Komponenten ausschließlich auf zweite Komponenten abgebildet werden, die zu den ersten Komponenten in Relation stehen, und Werte von ersten Elementen ausschließlich auf zweite Elemente abgebildet werden, die zu den ersten Elementen in Relation stehen, kann durch die zusätzlich identifizierbaren Relationen gewährleistet werden, dass ein möglichst umfassender Wert des ersten Datenelements auf das zweite Datenelement abgebildet werden kann. Somit kann erreicht werden, dass ein möglichst umfassender Wert des globalen Zustands des ersten Steuerprogramms auf den globalen Zustand des zweiten Steuerprogramms übertragen werden kann.

Nach einer Ausführungsform umfasst die Steuerung ferner ein Übersetzermodul zum Übersetzen beziehungsweise Interpretieren eines Steuerprogramms, wobei der erste Generierungsschritt durch das Übersetzermodul ausgeführt wird.

Hierdurch wird der technische Vorteil erreicht, dass eine komfortable Lösung zum Generieren der Migrationsfunktionen bereitgestellt werden kann. Das Übersetzermodul dient dazu, erstellten Quellcode, beispielsweise des zweiten Steuerprogramms, in ausführbaren Code zu übersetzen, der von der Steuerung zum Steuern des Automatisierungssystems ausgeführt werden kann. Simultan ist das Übersetzermodul eingerichtet, den ersten Generierungsschritt, den zweiten Generierungsschritt, den dritten Generierungsschritt und den vierten Generierungsschritt zum Generieren der ersten Migrationsfunktion, der zweiten Migrationsfunktion, der dritten Migrationsfunktion und der vierten Migrationsfunktion auszuführen. Darüber hinaus ist das Übersetzermodul eingerichtet, den ersten Identifikationsschritt zum Identifizieren des ersten Datentyps des ersten Datenelements und des zweiten Datentyps des zweiten Datenelements, den zweiten Identifikationsschritt zum Identifizieren des dritten Datentyps des ersten Datenunterelements und des vierten Datentyps des zweiten Datenunterelements, den dritten Identifikationsschritt zum Identifizieren einer ersten Relation zwischen dem ersten Datenunterelement und dem zweiten Datenunterelement, den vierten Identifikationsschritt zum Identifizieren des fünften Datentyps einer ersten Komponente und des sechsten Datentyps einer zweiten Komponente, den fünften Identifikationsschritt zum Identifizieren einer Relation zwischen der ersten Komponente und der zweiten Komponente, den sechsten Identifikationsschritt zum Identifizieren eines siebten Datentyps eines ersten Elements und eines achten Datentyps eines zweiten Elements und den siebten Identifikationsschritt zum Identifizieren einer Relation zwischen dem ersten Element und dem zweiten Element durchzuführen.

Darüber hinaus ist das Übersetzermodul eingerichtet, den zweiten Überprüfungsschritt zum Überprüfen, ob im ersten Generierungsschritt die erste Migrationsfunktion generiert werden konnte, zum Überprüfen, ob im zweiten Generierungsschritt die zweite Migrationsfunktion generiert werden konnte, zum Überprüfen, ob im dritten Generierungsschritt die dritte Migrationsfunktion generiert werden konnte, und zum Überprüfen, ob im vierten Generierungsschritt die vierte Migrationsfunktion generiert werden konnte, durchzuführen.

Durch das so ausgestaltete Übersetzermodul, das eingerichtet ist, alle Migrationsfunktionen zu generieren bzw. alle Datentypen und alle Relationen der Datenelement und Datenunterelement wie auch Komponenten und Elemente der Datenunterelemente zu identifizieren, wird eine einfache Möglichkeit zum Generieren der Migrationsfunktionen bereitgestellt. Das Übersetzermodul ist eingerichtete, während des Kompiliervorgangs des geänderten oder neu erstellten Quellcodes des aktualisierten zweiten Steuerprogramms die genannten Datentypen und Relationen der Objekte beziehungsweise der ersten Datenunterelemente des ersten Datenelements und der Objekte beziehungsweise der zweiten Datenunterelemente des zweiten Datenelements zu identifizieren und zugleich die entsprechenden ersten bis vierten Migrationsfunktionen zu generieren. Im Folgenden können Objekte des ersten Datenelements durch erste Datenunterelemente und Objekte des zweiten Datenelements durch zweite Datenunterelemente gegeben sein. Wenn all diese Schritte während des Kompiliervorgangs durchgeführt werden, kann nach Beendigung des Kompiliervorgangs die Migration des globalen Zustands des ersten Steuerprogramms durchgeführt werden. Hierdurch ist die Komplexität des Kompiliervorgangs weiter reduziert. Durch Synergieeffekte kann die Summe der Einzelaufwände für Übersetzung, Relationsbestimmung, Typbestimmung und Generierung der Migrationsfunktion reduziert werden.

Nach einer Ausführungsform umfasst das Initialisieren des zweiten Datenelements ein Initialisieren zweiter Datenunterelement und/oder zweiter Komponenten und/oder zweiter Elemente umfasst.

Das Initialisieren aller zweiten Datenunterelemente umfasst hierbei das Initialisieren aller zweiten Komponenten bzw. zweiten Elemente aller zweiten Datenunterelemente.

Im Migrationsschritt und in den ersten bis dritten Teilmigrationsschritten werden Werte der ersten Datenunterelemente bzw. der ersten Komponenten und ersten Elemente der ersten Datenunterelemente ausschließlich auf zweite Datenunterelemente bzw. zweite Komponenten oder zweite Elemente der zweiten Datenunterelemente abgebildet, für die eine Relation zu den jeweiligen ersten Datenunterelementen bzw. ersten Komponenten und ersten Elementen besteht. Zweite Datenunterelemente, zweite Komponenten oder zweite Elemente, für die keine Relationen zu entsprechenden ersten Datenunterelementen, ersten Komponenten oder ersten Elementen identifiziert werden konnten, bleiben bei der Datenmigration unberücksichtigt. Diese zweiten Datenunterelemente, zweiten Komponenten oder zweiten Elemente werden in der Initialisierung auf einen vorbestimmten Initialwert gesetzt. Hierdurch können alle Objekte des zweiten Datenelements mit einem gültigen Zahlenwert versehen werden, der entweder einem Wert eines entsprechenden Objekts des ersten Datenelements entspricht oder ein Initialwert ist. So kann auf Basis des zweiten Datenelements das zweite Steuerprogramm ausgeführt werden.

Hierdurch wird der technische Vorteil erreicht, dass eine vereinfachte Datenmigration erreicht wird, indem in einem Schritt alle Objekte des zweiten Datenelements auf einen Initialwert gesetzt werden.

Alternativ können im Initialisierungsschritt nur ausgewählte zweite Datenunterelemente und/oder zweite Komponenten und/oder zweite Elemente initialisiert werden.

Alternativ kann der Initialisierungsschritt zeitlich vor dem Migrationsschritt durchgeführt werden. Insbesondere kann der Initialisierungsschritt bereits ausgeführt werden, während das erste Steuerprogramm noch ausgeführt wird. Hierdurch kann der Migrationsvorgang verkürzt werden, und damit die Zeit, in der ein Ausführen des ersten Steuerprogramms und des zweiten Steuerprogramms unterbrochen ist und das Automatisierungssystem nicht betrieben wird.

In diesem Fall können vor Beginn der Datenmigration des ersten Datenelements auf das zweite Datenelemente alle zweiten Datenunterelemente sowie alle zweiten Komponenten und/oder alle zweiten Elemente auf Initialwerte gesetzt werden. Bei den zweiten Datenunterelementen und/oder zweiten Komponenten und/oder zweiten Elementen, für die gemäß dem erfindungsgemäßen Verfahren eine Datenmigration durchführbar ist, wird im Migrationsschritt der jeweilige Initialwert darauffolgend mit einem Wert eines entsprechenden ersten Datenunterelements, einer ersten Komponente und/oder eines ersten Elements des ersten Datenelements überschrieben.

Insbesondere wird durch die Initialisierung der Vorteil erreicht, dass für eine selektive Initialisierung keine weiteren Berechnungs- beziehungsweise Speicher-Ressourcen verbraucht werden, da auf bereits bestehende Initialisierungsfunktionen zurückgegriffen werden kann, um im Falle eines regulären Starts den Startzustand zu konstruieren. Ferner wird der Vorteil erreicht, dass eine Initialisierungsfunktion bereits ausgeführt werden kann, während das erste Steuerprogramm noch ausgeführt wird. Die Initialisierung fällt somit nicht in den zeitkritischen Zeitraum, in dem das zyklische Ausführen der ersten und zweiten Steuerprogramme ausgesetzt wird.

Nach einer Ausführungsform umfasst das erste Datenelement eine Mehrzahl von ersten Datenunterelementen vom dritten Datentyp und das zweite Datenelement eine Mehrzahl von zweiten Datenunterelementen vom vierten Datentyp, wobei für jedes erste Datenunterelement der dritte Datentyp ein Verbundtyp, ein Feldtyp, ein Skalartyp oder ein Zeigertyp ist, und wobei für jedes zweite Datenunterelement der vierte Datentyp ein Verbundtyp, ein Feldtyp, ein Skalartyp oder ein Zeigertyp ist.

Hierdurch wird der technische Vorteil erreicht, dass ein flexibles und breit anwendbares Verfahren zum Aktualisieren eines Steuerprogramms mit simultaner Datenmigration eines Programmzustands bereitgestellt werden kann. Das erste Datenelement und das zweite Datenelement können jeweils eine Mehrzahl von ersten Datenunterelementen und zweiten Datenunterelementen umfassen. Jedes der ersten Datenunterelemente und jedes der zweiten Datenunterelemente kann jeweils von einem Verbundtyp, einem Feldtyp, einem Skalartyp oder einem Zeigertyp sein. Ist ein erstes Datenunterelement oder ein zweites Datenunterelement von einem Verbundtyp, so kann das erste Datenunterelement oder das zweite Datenunterelement jeweils eine Mehrzahl von ersten Komponenten oder zweiten Komponenten umfassen. Jede der ersten Komponenten oder zweiten Komponenten kann wiederum von einem Verbundtyp, einem Feldtyp, einem Skalartyp oder einem Zeigertyp sein. Ist ein erstes Datenunterelement oder ein zweites Datenunterelement von einem Feldtyp, so können die ersten Elemente des ersten Datenunterelements oder die zweiten Elemente des zweiten Datenunterelements jeweils von einem Skalartyp oder einem Zeigertyp sein. Hierdurch wird erreicht, dass der Migrationsvorgang des globalen Zustands des ersten Steuerprogramms auf den globalen Zustand des zweiten Steuerprogramms für eine Vielzahl von verschiedenen Datenstrukturen mit unterschiedlichen Datentypen durchgeführt werden kann. Dadurch wird eine hohe Flexibilität und Anwendbarkeit des erfindungsgemäßen Verfahrens zum Aktualisieren eines Steuerprogramms mit Datenmigration eines Programmzustands erreicht.

Die Erfindung wird anhand der beigefügten Figuren näher erläutert. Hierbei zeigen:
- Fig. 1: eine schematische Darstellung eines Automatisierungssystems gemäß einer Ausführungsform;
- Fig. 2: eine schematische Darstellung eines Aktualisierungsvorgangs eines Steuerprogramms eines Automatisierungssystems gemäß einer Ausführungsform;
- Fig. 3: ein Flussdiagramm eines Verfahrens zum Aktualisieren eines Steuerprogramms eines Automatisierungssystems mit Datenmigration gemäß einer Ausführungsform;
- Fig. 4: ein Flussdiagramm des Verfahrens zum Aktualisieren eines Steuerprogramms eines Automatisierungssystems mit Datenmigration gemäß einer weiteren Ausführungsform;
- Fig. 5: ein Flussdiagramm des Verfahrens zum Aktualisieren eines Steuerprogramms eines Automatisierungssystems mit Datenmigration gemäß einer weiteren Ausführungsform;
- Fig. 6: eine schematische Darstellung eines Generierungsvorgangs einer aktualisierten Version eines Steuerprogramms eines Automatisierungssystems gemäß einer Ausführungsform; und
- Fig. 7: eine schematische Darstellung eines Migrationsvorgangs von Datenelementen eines Steuerprogramms eines Automatisierungssystems gemäß einer Ausführungsform; und
- Fig. 8: eine schematische Darstellung eines Migrationsvorgangs von Datenelementen eines Steuerprogramms eines Automatisierungssystems gemäß einer weiteren Ausführungsform.

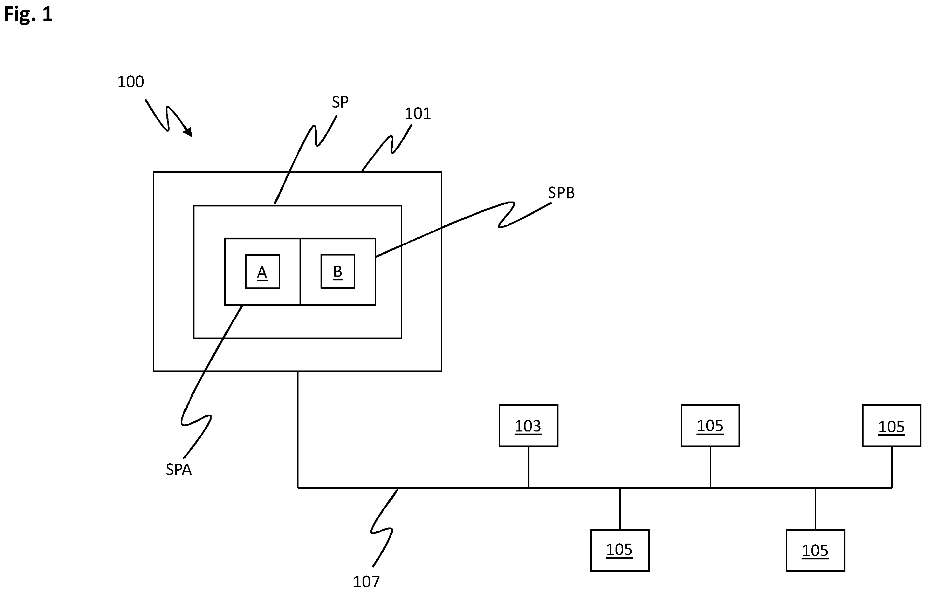

Fig. 1 zeigt eine schematische Darstellung eines Automatisierungssystems 100 gemäß einer Ausführungsform.

Das Automatisierungssystem 100 in Fig. 1 umfasst eine Steuerung 101, einen Masterteilnehmer 103 und vier Slaveteilnehmer 105, die jeweils miteinander und mit der Steuerung 101 über ein Bussystem 107 verbunden sind. Alternativ kann auch die Steuerung 101 selbst einen Masterteilnehmer ausbilden. In einem Speicher SP der Steuerung 101 ist in einem ersten Speicherbereich SPA ein erstes Steuerprogramm A und in einem zweiten Speicherbereich SPB ein zweites Steuerprogramm B gespeichert. Das erste Steuerprogramm A dient zum zyklischen Ansteuern des Masterteilnehmers 103 und der Slaveteilnehmer 105. Das zweite Steuerprogramm B kann eine aktualisierte Version des ersten Steuerprogramms A und dient ebenfalls zum zyklischen Ansteuern der Teilnehmer des Automatisierungssystems 100. Eine aktualisierte Version kann beispielsweise ein Update des ersten Steuerprogramms A beziehungsweise eine geänderte Version des ersten Steuerprogramms A sein. Alternativ kann die aktualisierte Version auch ein komplett neu programmiertes Steuerprogramm sein, wobei vorteilhafterweise ein Bezug der aktualisierten Version zu der ursprünglichen Version des ersten Steuerprogramms besteht. Das zweite Steuerprogramm B basiert somit auf dem ersten Steuerprogramm A und kann in verschiedenen Bereichen des Steuerprogramms von dem ersten Steuerprogramm A abweichen.

Das in Figur 1 gezeigte Automatisierungssystem 100 dient lediglich als beispielhafte Illustration eines Automatisierungssystems. Das erfindungsgemäße Verfahren soll nicht auf das in Figur 1 gezeigte Automatisierungssystem beschränkt sein.

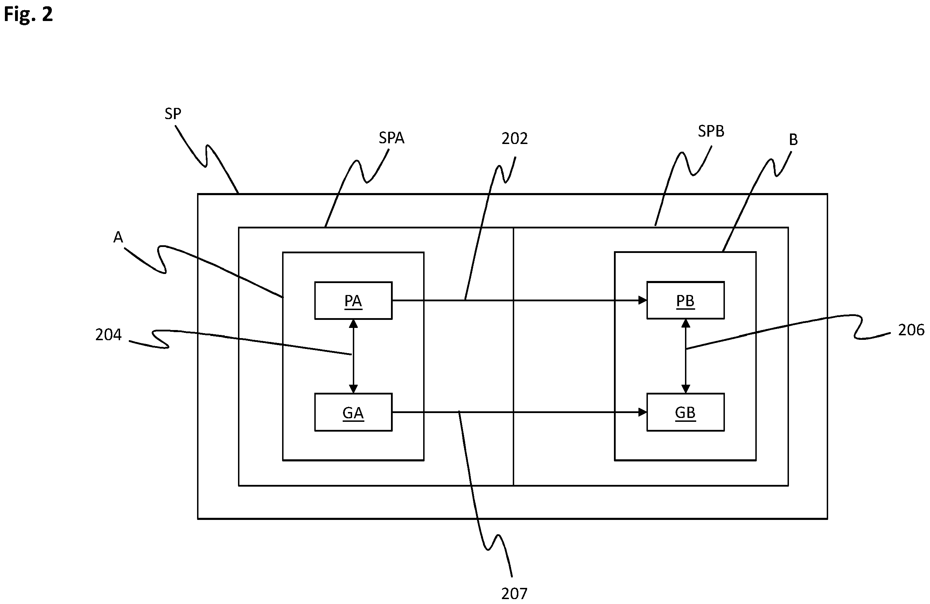

Fig. 2 zeigt eine schematische Darstellung eines Aktualisierungsvorgangs eines Steuerprogramms A eines Automatisierungssystems 100 gemäß einer Ausführungsform.

In Figur 2 ist der Speicher SP der Steuerung 101 des Automatisierungssystems 100 aus Fig. 1 gezeigt. Der Speicher SP ist in den ersten Speicherbereich SPA und den zweiten Speicherbereich SPB unterteilt. Im ersten Speicherbereich SPA ist das erste Steuerprogramm A gespeichert und in dem zweiten Speicherbereich SPB ist das zweite Steuerprogramm B gespeichert. Das erste Steuerprogramm A umfasst einen ausführbaren Code PA und ein erstes Datenelement GA, und das zweite Steuerprogramm B umfasst einen zweiten ausführbaren Code PB und ein zweites Datenelement GB.

Der erste ausführbare Code PA des ersten Steuerprogramms A dient zum Ausführen des Steuerprogramms A und kann durch die Steuerung 101 ausgeführt werden. Der zweite ausführbare Code PB des zweiten Steuerprogramms B dient zum Ausführen des zweiten Steuerprogramms B und kann durch die Steuerung 101 ausgeführt werden. Das erste Datenelement GA beschreibt einen Programmzustand des ersten Steuerprogramms A. Der Programmzustand des ersten Steuerprogramms A entspricht dem globalen Zustand des ersten Steuerprogramms A und umfasst Information die zum Ausführen des ersten Steuerprogramms A benötigt wird. Darüber hinaus umfasst der globale Zustand des ersten Steuerprogramms A sämtliche Informationen bezüglich des Automatisierungsprogramms 100 und beschreibt den Zustand, in dem sich das durch das erste Steuerprogramm A zyklisch angesteuerte Automatisierungssystem 100 befindet.

In einem ersten Lese/Schreibschritt 204 kann der erste ausführbare Code PA Informationen aus dem ersten Datenelement GA lesen bzw. Informationen in das erste Datenelement GA schreiben. Der zweite ausführbare Code PB des zweiten Steuerprogramms B dient zum Ausführen des Steuerprogramms B und kann durch die Steuerung 101 des Automatisierungssystems 100 ausgeführt werden. Das zweite Datenelement GB beschreibt einen Programmzustand des zweiten Steuerprogramms B und umfasst Information, die zum Ausführen des zweiten Steuerprogramms B benötigt wird.

Zum Zeitpunkt der Datenmigration wird das zweite Steuerprogramm B nicht ausgeführt, und das zweite Datenelement GB umfasst daher keine Information bezüglich des Zustands des Automatisierungssystems 100. Zum Zeitpunkt der Datenmigration sind im zweiten Datenelement GB alle Objekte enthalten, die zum Ausführen des zweiten Steuerprogramms B und zum Steuern des Automatisierungssystems 100 benötigt werden, gespeichert. Die einzelnen Objekte sind aber lediglich mit einem Initialwert initiiert. Das Datenelement GB enthält seinen Initialwert, der einem Startzustand entspricht. Somit sind alle Objekte des zweien Datenelements mit einem Zahlenwert versehen und damit initialisiert.

Nach erfolgreicher Datenmigration des im ersten Datenelement GA gespeicherten globalen Zustands des ersten Steuerprogramms A in das zweite Datenelement GB umfasst das zweite Datenelement sämtliche Information, die zum Ausführen des zweiten Steuerprogramms B benötigt wird. Darüber hinaus umfasst das zweite Datenelement GB nach erfolgreicher Datenmigration des globalen Zustands des ersten Steuerprogramms A die Information bezüglich des Zustands, in dem sich das Automatisierungssystem 100 zum Zeitpunkt vor der durchgeführten Datenmigration befand, insbesondere zum Zeitpunkt direkt nach dem zuletzt ausgeführten Steuerzyklus. In einem zweiten Lese/Schreibschritt 206 kann der zweite ausführbare Code PB des zweiten Steuerprogramms B Daten in das zweite Datenelement GB schreiben bzw. Daten aus dem zweiten Datenelement GB lesen. Gegebenenfalls kann nach durchgeführter Datenmigration die Information des ersten Datenelements GA nicht vollständig auf das zweite Datenelement GB abgebildet werden. Die Objekte beziehungsweise zweiten Datenunterelement, die nicht mit einem Wert eines entsprechenden ersten Datenunterelements des ersten Datenelements GA versehen werden können, behalten den Initialwert bei.

Zum Aktualisieren des ersten Steuerprogramms A durch das zweite Steuerprogramm B mit simultaner Datenmigration des Programmzustands des ersten Steuerprogramms A gemäß dem erfindungsgemäßen Verfahren zum Aktualisieren eines Steuerprogramms eines Automatisierungssystems mit Datenmigration eines Programmzustands des Steuerprogramms wird in einem ersten Ersetzungsschritt 202 der erste ausführbare Code PA des ersten Steuerprogramms A durch den zweiten ausführbaren Code PB des zweiten Steuerprogramms B ersetzt. Der in Fig. 2 dargestellte Pfeil zwischen dem ersten ausführbaren Code PA und dem zweiten ausführbaren Code PB impliziert, dass der erste ausführbare Code PA und den zweiten ausführbaren Code PB ersetzt wird, und dass der zweite ausführbare Code PB wenigstens teilweise auf den ersten ausführbaren Code PA aufbaut beziehungsweise aus diesem hergeleitet wurde, und wenigstens die Gemeinsamkeit haben, dass beide Codes zum Steuern des gleichen Automatisierungssystems 100 dienen. Dies soll nicht ausschließen, dass der zweite ausführbare Code PB vollständig unabhängig vom ersten ausführbaren Code PA generiert wurde. Darüber hinaus wird ein Wert des ersten Datenelements GA, der den Programmzustand des ersten Steuerprogramms A, insbesondere den Globalzustand des ersten Steuerprogramms A und des Automatisierungssystems 100 beschreibt, in einem Migrationsschritt 207 auf das zweite Datenelement GB abgebildet.

Durch die Abbildung des Werts des ersten Datenelements GA auf das zweite Datenelement GB im Migrationsschritt 207 wird der Programmzustand des ersten Steuerprogramms A bzw. der globale Zustand des ersten Steuerprogramms A und des Automatisierungssystems 100, der durch den Wert des ersten Datenelements GA beschrieben ist, in das zweite Datenelement GB gespeichert. Nach erfolgreicher Datenmigration im Migrationsschritt 207 beschreibt damit das zweite Datenelement GB den Programmzustand des ersten Steuerprogramms A und damit den Globalzustand des ersten Steuerprogramms A und des Automatisierungssystems 100. Damit umfasst das zweite Datenelement GB wenigstens einen Teil der Information von GA, wobei die Information in der Form dargestellt ist, die zur Ausführung des zweiten ausführbaren Codes PB benötigt wird.

Nach erfolgreichem Ersetzen des ersten ausführbaren Codes PA durch den zweiten ausführbaren Code PB im ersten Ersetzungsschritt 202 und der erfolgreichen Datenmigration des globalen Zustands des ersten Steuerprogramms A bzw. des Automatisierungssystems 100 in das zweite Datenelement GB des zweiten Steuerprogramms B im Migrationsschritt 207 ist das zweite Steuerprogramm B durch die Steuerung 101 des Automatisierungssystems 100 ausführbar und kann auf den globalen Zustand des ersten Steuerprogramms A bzw. des Automatisierungssystems 100 zum Zeitpunkt nach dem zuletzt ausgeführten Steuerzyklus zugreifen, sodass das Automatisierungssystem 100 durch das zweite Steuerprogramm B im Zustand zum Zeitpunkt des zuletzt ausgeführten Steuerzyklus angesteuert werden kann. Der globale Zustand des ersten Steuerprogramms A kann somit als ein globaler Zustand nach der letzten Ausführung des ersten Steuerprogramms A interpretiert werden, während der durch die Datenmigration generierte und durch das zweite Datenelement GB dargestellte Zustand als ein weiterer globaler Zustand vor der ersten Ausführung des zweiten Steuerprogramms B interpretiert werden kann, wobei beide Zustände weitestgehend gleichbedeutend bezüglich der Interpretation durch den ersten ausführbaren Code PA und den zweiten ausführbaren Code PB sind.

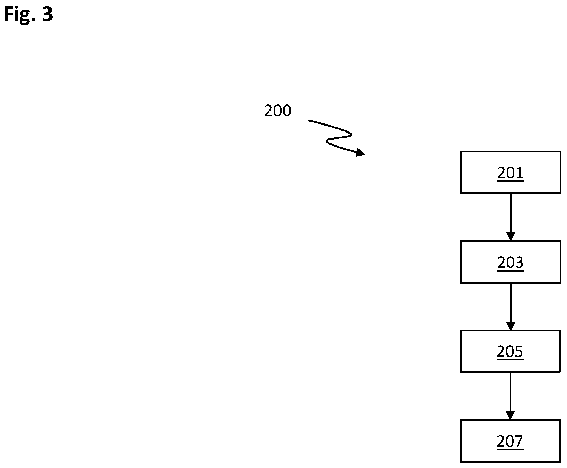

Fig. 3 zeigt ein Flussdiagramm eines Verfahrens 200 zum Aktualisieren eines Steuerprogramms A eines Automatisierungssystems 100 mit Datenmigration gemäß einer Ausführungsform.

Gemäß der in Figur 3 gezeigten Ausführungsform bezieht sich ein Verfahren 200 zum Aktualisieren eines Steuerprogramms eines Automatisierungssystems 100 mit Datenmigration eines Programmzustands des Steuerprogramms auf ein Automatisierungssystem 100 gemäß den Figuren 1 und 2. Eine Steuerung 101 des Automatisierungssystems 100 umfasst hierbei ein erstes Steuerprogramm A und ein zweites Steuerprogramm B, wobei das erste Steuerprogramm A zum Steuern des Automatisierungssystems zyklisch ausgeführt wird, wobei das zweite Steuerprogramm B eine Aktualisierung des ersten Steuerprogramms A ist, wobei das erste Steuerprogramm A ein erstes Datenelement GA von einem ersten Datentyp umfasst, das einen Programmzustand des ersten Steuerprogramms A beschreibt und in einem ersten Speicherbereich SPA der Steuerung 101 gespeichert ist, und wobei das zweite Steuerprogramm B ein zweites Datenelement GB eines zweiten Datentyps umfasst, das einen Programmzustand des zweiten Steuerprogramms B beschreibt und in einem zweiten Speicherbereich SPB gespeichert ist.

Gemäß der Ausführungsform in Fig. 3 umfasst das Verfahren 200 die folgenden Verfahrensschritte:
Generieren einer ersten Migrationsfunktion MIG1 zum Abbilden des ersten Datenelements GA auf das zweite Datenelement GB in einem ersten Generierungsschritt 201, Unterbrechen des zyklischen Ausführens des ersten Steuerprogramms A in einem Unterbrechungsschritt 203,
Bestimmen eines Werts des ersten Datenelements GA in einem ersten Bestimmungsschritt 205, wobei der bestimmte Wert des ersten Datenelements GA einen Programmzustand des Steuerprogramms A zum Zeitpunkt der Unterbrechung beschreibt, und Abbilden des Werts des ersten Datenelements GA auf das zweite Datenelement GB durch Ausführen der ersten Migrationsfunktion MIG1 in einem Migrationsschritt 207.

Das Automatisierungssystem 100 wird über die Steuerung 101 durch zyklisches Ausführen des ersten Steuerprogramms A angesteuert. Im ersten Datenelement GA sind Informationen bezüglich des ersten Steuerprogramms A gespeichert, die zum Ausführen des ersten Steuerprogramms A benötigt werden. Diese Informationen können Variablen, Funktionen oder Bibliotheken oder anders eingerichtete Objekte umfassen, auf die das erste Steuerprogramm zum Steuern des Automatisierungssystems 100 zugreifen muss.

Während des zyklischen Ausführens des ersten Steuerprogramms A greift das erste Steuerprogramm A auf das erste Datenelement GA zu und kann hierbei Daten aus dem ersten Datenelement GA auslesen bzw. Daten in das erste Datenelement GA einschreiben. Die Information im ersten Datenelement GA beschreibt somit einen Programmzustand des ersten Steuerprogramms A, der den Zustand beschreibt, in dem sich das erste Steuerprogramm A befindet. Im ersten Datenelement GA sind ferner Informationen bezüglich des Automatisierungssystems 100 gespeichert, über die ein Zustand definiert ist, in dem sich das Automatisierungssystem 100 befindet. Die im ersten Datenelement GA gespeicherte Information wird im Folgenden als globaler Zustand des ersten Steuerprogramms A und des Automatisierungssystems 100 interpretiert. Der globale Zustand beschreibt den Programmzustand des ersten Steuerprogramms A und gleichzeitig den Zustand des Automatisierungssystems 100.

Das zweite Steuerprogramm B stellt eine aktualisierte Version des ersten Steuerprogramms A dar und dient dazu, das erste Steuerprogramm A zu ersetzen. Im zweiten Datenelement GB sind Informationen gespeichert, die einen Programmzustand des zweiten Steuerprogramms B beschreiben. Während des Ausführens des Verfahrens 200 wird das zweite Steuerprogramm B nicht ausgeführt, und im zweiten Datenelement GB befinden sich keine Informationen bezüglich des Zustands des Automatisierungssystems 100. Alternativ kann das zweite Datenelemente GB mit einem Initialwert initialisiert sein. Während des Ausführens des Verfahrens 200 und somit zeitlich vor dem Abschluss einer Datenmigration gemäß dem Migrationsschritt 207 sind im zweiten Datenelemente GB sämtliche Variablen, Funktionen, Datenbanken, Parameter oder andere Objekte, die zur Ausführung des zweiten Steuerprogramms B benötigt werden, gespeichert. Die im zweiten Datenelement GB gespeicherten Objekte weisen jedoch keine Werte auf, die geeignet sind, den aktuellen Zustand des Automatisierungssystems 100 zu beschreiben.

Ziel des Verfahrens 200 zum Aktualisieren eines Steuerprogramms eines Automatisierungssystems mit Datenmigration eines Programmzustands des Steuerprogramms ist es, das erste Steuerprogramm A durch das zweite Steuerprogramm B zu ersetzen und die im ersten Datenelement GA gespeicherte Information bezüglich des Zustands des Automatisierungssystems 100 in das zweite Datenelement GB zu überführen, sodass nach erfolgreichem Ersetzen des ersten Steuerprogramms A durch das zweite Steuerprogramm B das zweite Steuerprogramm B durch Einlesen der Information im zweiten Datenelement GB auf den Zustand des Automatisierungssystems 100 zugreifen kann, sodass eine Steuerung des Automatisierungssystems 100 nach Ersetzen des ersten Steuerprogramms A durch das zweite Steuerprogramm B nahtlos fortgesetzt werden kann.

Hierzu wird eine Überführung eines Werts des ersten Datenelements GA, der die Information bezüglich des Programmzustands des ersten Steuerprogramms A bzw. bezüglich des Zustands des Automatisierungssystems 100 umfasst, in das zweite Datenelement GB benötigt.

Hierzu wird in einem ersten Generierungsschritt 201 eine erste Migrationsfunktion MIG1 zum Abbilden des ersten Datenelements GA auf das zweite Datenelement GB generiert.

Die erste Migrationsfunktion MIG1 dient dazu, die im ersten Datenelement GA gespeicherte Information auf das zweite Datenelement GB zu übertragen. Die im ersten Datenelemente GA gespeicherte Information wird im Folgenden als der Wert des ersten Datenelements GA interpretiert, und die im zweiten Datenelement GB gespeicherte Information wird im Folgenden als der Wert des zweiten Datenelements GB interpretiert.

Nach Generieren der ersten Migrationsfunktion MIG1 im ersten Generierungsschritt 201 wird das zyklische Ausführen des ersten Steuerprogramms A in einem Unterbrechungsschritt 203 unterbrochen. Durch das Unterbrechen des zyklischen Ausführens des ersten Steuerprogramms A wird der Betrieb des Automatisierungssystems 100 unterbrochen. Im ersten Datenelement GA ist der Zustand des Automatisierungssystems 100 nach dem zuletzt ausgeführten Steuerzyklus beschrieben. Durch die Unterbrechung des zyklischen Ausführens des ersten Steuerprogramms A im Unterbrechungsschritt 203 ist gewährleistet, dass der Wert des ersten Datenelements GA nicht weiter geändert wird, sodass eine konsistente Übertragung des Werts des ersten Datenelements GA auf das zweite Datenelement GB ermöglicht ist. Nach Unterbrechen des zyklischen Aufrufens des ersten Steuerprogramms A im Unterbrechungsschritt 203 entspricht der Wert des ersten Datenelements GA dem Programmzustand des ersten Steuerprogramms A zum Ende des zuletzt ausgeführten Steuerzyklus. Analog beschreibt der Wert des ersten Datenelements GA den Zustand des Automatisierungssystems 100 zum Ende des zuletzt ausgeführten Steuerzyklus.

Das Unterbrechen des zyklischen Ausführens des ersten Steuerprogramms A im Unterbrechungsschritt 203 wird vorzugsweise nach Beendigung eines zuvor ausgeführten Steuerzyklus vorgenommen und damit nach einem vollständigen Ausführen des Steuerprogramms A. Alternativ kann der Unterbrechungsschritt 203 jedoch auch zu einem beliebigen Zeitpunkt innerhalb eines ausgeführten Steuerzyklus durchgeführt werden.

Nach Unterbrechen des zyklischen Ausführens des ersten Steuerprogramms A im Unterbrechungsschritt 203 wird in einem ersten Bestimmungsschritt 205 der Wert des ersten Datenelements GA bestimmt. Wie bereits erwähnt, beschreibt der Wert des ersten Datenelements GA den Programmzustand des ersten Steuerprogramms A bzw. den Zustand des Automatisierungssystems 100 zum Zeitpunkt des zuletzt ausgeführten Steuerzyklus beziehungsweise zum Zeitpunkt der Unterbrechung der Ausführung des ersten Steuerprogramms A. Nach Unterbrechen des zyklischen Ausführens des ersten Steuerprogramms A im Unterbrechungsschritt 203 wird der Wert des ersten Datenelements GA nicht mehr geändert, da das erste Steuerprogramm A nicht weiter ausgeführt wird und somit keine Werte aus dem ersten Datenelement GA auslesen bzw. in dieses schreiben kann.

Nach Bestimmen des Werts des ersten Datenelements GA im ersten Bestimmungsschritt 205 wird die erst Migrationsfunktion MIG1 in einem Migrationsschritt 207 ausgeführt und der Wert des ersten Datenelements GA auf das zweite Datenelement GB abgebildet, indem der Wert des ersten Datenelements GA in das zweite Datenelement GB übertragen wird. Hierbei werden Werte von im zweiten Datenelement GB enthaltenden Objekten durch Werte entsprechender Objekte des ersten Datenelements GA überschrieben. Durch das Abbilden des Werts des ersten Datenelements GA auf das zweite Datenelement GB wird der globale Zustand des ersten Steuerprogramms A bzw. des Automatisierungssystems 100 zum Zeitpunkt des zuletzt ausgeführten Steuerzyklus auf das zweite Datenelement GB übertragen. Bei Ausführung des zweiten Steuerprogramms B durch Einlesen der im zweiten Datenelement GB gespeicherten Werte kann auf den globalen Zustand des Automatisierungssystems 100 zum Zeitpunkt des zuletzt ausgeführten Steuerzyklus zugegriffen werden, sodass eine Steuerung des Automatisierungssystems 100 durch Ausführen des zweiten Steuerprogramms B nahtlos an den zuletzt ausgeführten Steuerzyklus anknüpfen kann.

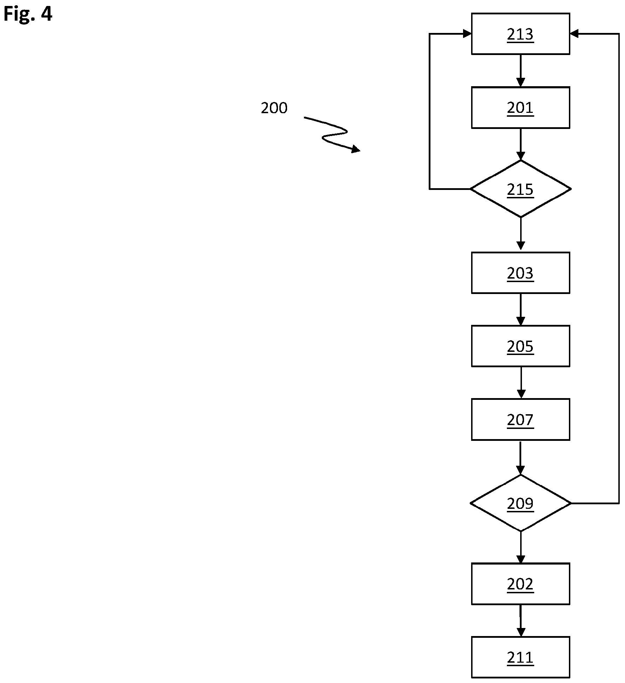

Fig. 4 zeigt ein Flussdiagramm des Verfahrens 200 zum Aktualisieren eines Steuerprogramms A eines Automatisierungssystems 100 mit Datenmigration gemäß einer weiteren Ausführungsform.

Die in Figur 4 dargestellte Ausführungsform des Verfahrens 200 baut auf der Ausführungsform des Verfahrens 200 aus Figur 3 auf und umfasst alle Verfahrensschritte der in Figur 3 dargestellten Ausführungsform.

Abweichend zu der in Figur 3 dargestellten Ausführungsform wird in der Ausführungsform des Verfahrens 200 in Figur 4 nach Abschluss des ersten Generierungsschritts 201 in einem zweiten Überprüfungsschritt 215 überprüft, ob im ersten Generierungsschritt 201 die erste Migrationsfunktion MIG1 generiert werden konnte. Eine Generierung der ersten Migrationsfunktion MIG1 im ersten Generierungsschritt 201 kann beispielsweise fehlschlagen, wenn das erste Datenelement GA und das zweite Datenelement GB nicht kompatible Datentypen aufweisen, für die eine Konvertierung des Werts des ersten Datenelements GA in den Datentyp des zweiten Datenelements GB nicht hinreichend genau durchführbar ist.

Wird im zweiten Überprüfungsschritt 215 erkannt, dass eine Migrationsfunktion MIG1 nicht generiert werden konnte, wird das zyklische Aufrufen des ersten Steuerprogramms A unter Berücksichtigung des ersten Datenelements GA und das Steuern des Automatisierungssystems 100 auf Basis des ersten Steuerprogramms A in einem zweiten Steuerschritt 213 fortgesetzt. Kann in dem ersten Generierungsschritt 201 keine erste Migrationsfunktion MIG1 generiert werden, so wird der Migrationsvorgang abgebrochen, und das erste Steuerprogramm A wird nicht durch das zweite Steuerprogramm B ersetzt. Stattdessen wird die Steuerung des Automatisierungssystems 100 auf Basis des ersten Steuerprogramms A unter Berücksichtigung des im ersten Datenelement GA gespeicherten globalen Zustands fortgesetzt.

Wird im zweiten Überprüfungsschritt 215 hingegen erkannt, dass im ersten Generierungsschritt 201 eine erste Migrationsfunktion MIG1 generiert werden konnte, so wird das Verfahren 200 mit dem Unterbrechen des zyklischen Ausführens des ersten Steuerprogramms A in dem Unterbrechungsschritt 203 fortgesetzt.

Ebenfalls abweichend zu der in Figur 3 dargestellten Ausführungsform wird in der Ausführungsform gemäß Figur 4 nach Ausführen des Migrationsschritts 207 in einem ersten Überprüfungsschritt 209 überprüft, ob im Migrationsschritt 207 durch Ausführen der ersten Migrationsfunktion MIG1 der Wert des ersten Datenelements GA hinreichend genau auf das zweite Datenelement GB abgebildet werden konnte. Der Wert des ersten Datenelements GA ist hierbei hinreichend genau auf das zweite Datenelement GB abbildbar, wenn der Wert des ersten Datenelements GA im zweiten Datentyp des zweiten Datenelements GB darstellbar ist. Der Wert des ersten Datenelements GA ist beispielsweise nicht hinreichend genau im zweiten Datentyp des zweiten Datenelements GB darstellbar, wenn der Zahlenwert des Werts des ersten Datenelements GA einen maximalen Zahlenwert überschreitet, der im zweiten Datentyp des zweiten Datenelements GA darstellbar ist.

Wird im ersten Überprüfungsschritt 209 festgestellt, dass der Wert des ersten Datenelements GA im Migrationsschritt 207 nicht hinreichend genau auf das zweite Datenelement GB abgebildet werden konnte, so wird das zyklische Aufrufen des ersten Steuerprogramms A und das Steuern des Automatisierungssystems 100 auf Basis des ersten Steuerprogramms A unter Berücksichtigung des im ersten Datenelement GA gespeicherten globalen Zustands in dem zweiten Steuerschritt 213 fortgesetzt. Die Migration des globalen Zustands wird an diesem Punkt abgebrochen und die Steuerung auf Basis des ersten Steuerprogramms A fortgesetzt. Durch Speicherung des ersten Steuerprogramms A und des ersten Datenelements GA im ersten Speicherbereich SPA und des zweiten Steuerprogramms B und des zweiten Datenelements GB im zweiten Speicherbereich SPB bleibt das erste Datenelement GA von der Datenmigration unberührt. Schlägt eine solche Datenmigration aus den oben genannten, oder anderen, Gründen fehl, kann die Steuerung des Automatisierungssystems 100 problemlos auf Basis des ersten Steuerprogramms A und des ersten Datenelements GA in dem Zustand des zuletzt ausgeführten Steuerzyklus fortgesetzt werden. Die Migration wird hingegen verworfen.

Wird im ersten Überprüfungsschritt 209 hingegen festgestellt, dass der Wert des ersten Datenelements GA hinreichend genau auf das zweite Datenelement GB durch Ausführen der ersten Migrationsfunktion MIG1 im Migrationsschritt 207 hinreichend genau abgebildet werden konnte, so wird das erste Steuerprogramm A durch das zweite Steuerprogramm B in einem Ersetzungsschritt 202 ersetzt.

Nach Ersetzen des ersten Steuerprogramms A durch das zweite Steuerprogramm B im Ersetzungsschritt 202 wird in einem ersten Steuerschritt 211 das Automatisierungssystem 100 durch ein zyklisches Aufrufen des zweiten Steuerprogramms B unter Berücksichtigung des zweiten Datenelements GB gesteuert. Nach erfolgreicher Migration im Migrationsschritt 207 beschreibt der Wert des zweiten Datenelements GB den globalen Zustand des ersten Steuerprogramms A und des Automatisierungssystems 100 zum Zeitpunkt des zuletzt auf Basis des ersten Steuerprogramms A ausgeführten Steuerzyklus. Nach erfolgreicher Migration des Werts des ersten Datenelements GA auf das zweite Datenelement GB im Migrationsschritt 207 kann das Automatisierungssystem 100 auf Basis des zweiten Steuerprogramms B in dem Zustand des zuletzt auf Basis des ersten Steuerprogramm A ausgeführten Steuerzyklus angesteuert werden. Hierdurch ist eine nahtlose Steuerung des Automatisierungssystems 100 mit aktualisiertem Steuerprogramm ermöglicht.

Das Ersetzen des ersten Steuerprogramms A durch das zweite Steuerprogramm B im Ersetzungsschritt 202 betrifft die Ausführung und die Steuerung des Automatisierungssystems 100 auf Basis des zweiten Steuerprogramms B anstatt auf Basis des ersten Steuerprogramms A. Das Ersetzen des ersten Steuerprogramms A durch das zweite Steuerprogramm B schließt nicht aus, dass das erste Steuerprogramm A weiterhin im ersten Speicherbereich SPA gespeichert bleiben kann.

Indem der globale Zustand des ersten Steuerprogramms A und des Automatisierungssystems 100 zum Zeitpunkt des zuletzt auf Basis des ersten Steuerprogramms A ausgeführten Steuerzyklus nach der Datenmigration auf das zweite Datenelement GB im zweiten Speicherbereich SPB abgebildet ist, ist der globale Zustand im zweiten Datenelement GB ohne nicht nutzbare Speicherlücken gespeichert. Das zweite Datenelement GB bildet im zweiten Speicherbereich SPB einen zusammenhängenden Bereich, in dem alle Objekte des zweiten Datenelements GB dicht gepackt und ohne nicht nutzbare Speicherlücken angeordnet sind. Indem der globale Zustand des ersten Steuerprogramms A und des Automatisierungssystems 100 zum Zeitpunkt des zuletzt auf Basis des ersten Steuerprogramms A ausgeführten Steuerzyklus im Migrationsschritt 207 Objekt für Objekt auf die entsprechenden Objekte des zweiten Datenelements GB abgebildet wird, ist der globale Zustand nach erfolgreicher Datenmigration als eine zusammenhängende Einheit im zweiten Speicherbereich SPB gespeichert.

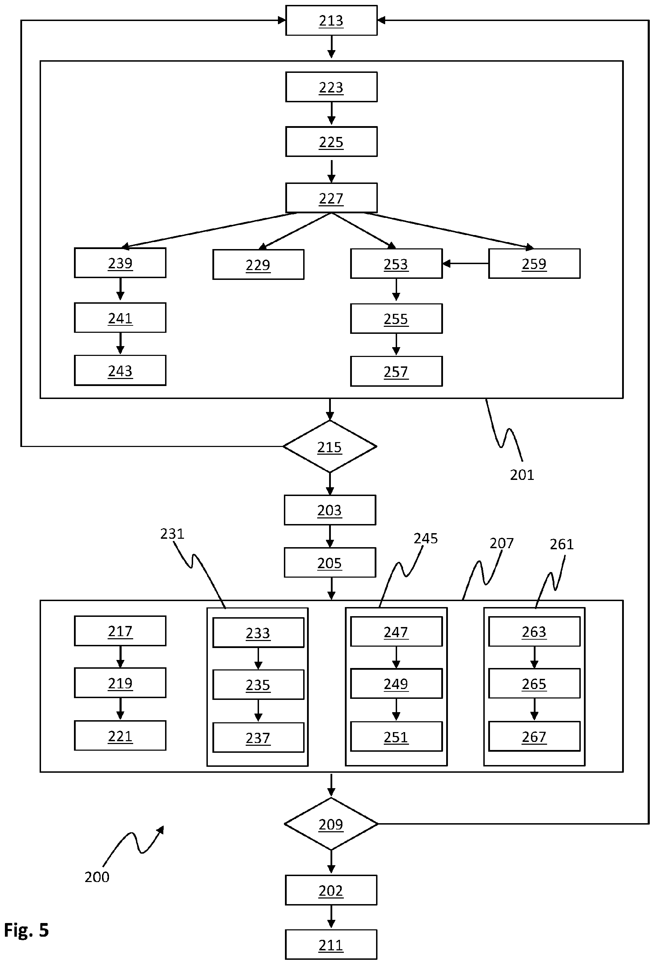

Fig. 5 zeigt ein Flussdiagramm des Verfahrens 200 zum Aktualisieren eines Steuerprogramms A eines Automatisierungssystems 100 mit Datenmigration gemäß einer weiteren Ausführungsform. Die in Figur 5 dargestellte Ausführungsform des Verfahrens 200 basiert auf den in Figur 3 und Figur 4 dargestellten Ausführungsformen und umfasst sämtliche in diesen Figuren dargestellten Verfahrensschritte.

Abweichend zu den in Figur 3 und Figur 4 dargestellten Ausführungsformen umfasst der erste Generierungsschritt 201 in der in Figur 5 dargestellten Ausführungsform das Identifizieren des Datentyps des ersten Datenelements GA als einen ersten Datentyp und das Identifizieren des Datentyps des zweiten Datenelements GB als einen zweiten Datentyp in einem ersten Identifikationsschritt 223. Nach Identifikation des ersten Datentyps des ersten Datenelements GA und des zweiten Datentyps des zweiten Datenelements GB wird im ersten Generierungsschritt 201 die erste Migrationsfunktion MIG1 auf Basis des identifizierten ersten Datentyps und des identifizierten zweiten Datentyps generiert.

Der erste Datentyp des ersten Datenelements GA und der zweite Datentyp des zweiten Datenelements GB kann beispielsweise ein Verbundtyp, ein Feldtyp oder ein anderer üblicher Datentyp sein. In der Anwendung wird der erste Datentyp des ersten Datenelements GA und der zweite Datentyp des zweiten Datenelements GB üblicherweise ein Verbundtyp sein und das erste Datenelement GA und das zweite Datenelement GB jeweils eine Mehrzahl von Objekten umfassen, die im Folgenden als erste Datenunterelemente GA1 und zweite Datenunterelemente GB1 definiert sind.

Ist der im ersten Identifikationsschritt 223 identifizierte erste Datentyp des ersten Datenelements GA ein Verbundtyp und umfasst das erste Datenelement GA wenigstens ein Datenunterelement GA1 und ist der identifizierte zweite Datentyp des zweiten Datenelements GB ebenfalls ein Verbundtyp und umfasst das zweite Datenelement GB wenigstens ein zweites Datenunterelement GB1, so werden in einem zweiten Identifikationsschritt 225 der Datentyp des ersten Datenunterelements GA1 als ein dritter Datentyp und der Datentyp des zweiten Datenunterelements GB1 als ein vierter Datentyp identifiziert. Der dritte Datentyp des ersten Datenunterelements GA1 und der vierte Datentyp des zweiten Datenunterelements GB1 können wiederum ein Verbundtyp, ein Feldtyp, ein Skalartyp oder ein Zeigertyp sein.

Darauffolgend wird in einem dritten Identifikationsschritt 227 eine erste Relation R1 zwischen dem ersten Datenunterelement GA1 und dem zweiten Datenunterelement GB1 identifiziert. Die erste Relation R1 ermöglicht eine hinreichend genaue Zuordnung zwischen dem ersten Datenunterelement GA1 und dem zweiten Datenunterelement GB1.

Identifizierte Relationen zwischen Objekten beziehungsweise ersten Datenunterelementen GA1 des ersten Datenelements GA und Objekten beziehungsweise zweiten Datenunterelementen GB1 des zweiten Datenelements GB geben an, welche Objekte beziehungsweise ersten Datenunterelemente GA1 des ersten Datenelements GA im Migrationsschritt 207 auf welche Objekte beziehungsweise zweiten Datenunterelemente GB1 des zweiten Datenelements GB abzubilden sind.

Eine erste Relation R1 besteht zwischen dem ersten Datenunterelement GA1 und dem zweiten Datenunterelement GB1 mindestens, wenn das erste Datenunterelement GA1 und das zweite Datenunterelement GB1 gleich benannt sind. Das erste Datenunterelement GA1 und das zweite Datenunterelement GB1 beschreiben jeweils Objekte des ersten Steuerprogramms A und des zweiten Steuerprogramms B. Je nach Datentyp des ersten Datenunterelements GA1 und des Datenunterelements GB1 können diese Objekte komplexe Objekte beschreiben, oder Skalare Werte, Zeiger, Zahlenwerte, Zeichenketten oder unstrukturierte Werte darstellen. Eine Variable kann auch einen komplexen Datentypen aufweisen.. Durch die erste Relation R1 zwischen dem ersten Datenunterelement GA1 und dem zweiten Datenunterelement GB1 ist dargestellt, dass das erste Datenunterelement GA1 in dem ersten Steuerprogramm A und das zweite Datenunterelement GB1 in dem zweiten Steuerprogramm B eine gleiche Bedeutung und Rolle haben. Eine identische Bedeutung von Objekten im ersten Steuerprogramm A und Objekten im zweiten Steuerprogramm B erfordert, dass bei einer Datenmigration des Werts des ersten Datenelements GA auf das zweite Datenelement GB der Wert des Objekts im ersten Datenelement GA so auf dass auf das Objekt im zweiten Datenelement GB abgebildet werden muss, dass die Interpretation von GA durch PB und die Interpretation von GB durch PB gleichbedeutend sind. Die identifizierte erste Relation R1 zwischen dem ersten Datenunterelement GA1 und dem zweiten Datenunterelement GB1 indiziert somit, dass bei der Datenmigration des ersten Datenelements GA auf das zweite Datenelement GB im Migrationsschritt 207 der Wert des ersten Datenunterelements GA1 auf das zweite Datenunterelement GB1 abgebildet werden muss.

Nach Identifikation des dritten Datentyps und des vierten Datentyps im zweiten Identifikationsschritt 225 und der Identifikation der ersten Relation R1 im dritten Identifikationsschritt 227 wird auf Basis des identifizierten dritten Datentyps, des identifizierten vierten Datentyps und der identifizierten ersten Relation R1 in einem zweiten Generierungsschritt 229 eine zweite Migrationsfunktion MIG2 zum Abbilden des ersten Datenunterelements GA1 auf das zweite Datenunterelement GB1 generiert. Die zweite Migrationsfunktion MIG2 ist dabei eingerichtet, Daten des dritten Datentyps auf Daten des vierten Datentyps abzubilden, indem die zweite Migrationsfunktion MIG2 Daten des dritten Datentyps im ersten Speicherbereich SPA ausliest, ausgelesene Daten des dritten Datentyps in den vierten Datentyp konvertiert und in den vierten Datentyp konvertierte Daten im zweiten Speicherbereich SPB speichert. Für den Fall, dass der dritte Datentyp des ersten Datenunterelements GA1 und der vierte Datentyp des zweiten Datenunterelements GB1 identisch sind, entfällt die Konvertierung der ausgelesenen Daten. Bei identischen dritten Datentypen und vierten Datentypen können der Wert des ersten Datenunterelements GA1 blockweise an eine Stelle PGB1 des zweiten Datenunterelements GB1 im zweiten Speicherbereich SPB kopiert werden.

Für den Fall, dass der dritte Datentyp des ersten Datenunterelements GA1 und der vierte Datentyp des zweiten Datenunterelements GB1 ein Verbundtyp sind und falls das erste Datenunterelement GA1 wenigstens eine erste Komponente MA und das zweite Datenunterelement GB1 wenigstens eine zweite Komponente MB umfasst, werden in einem vierten Identifikationsschritt 239 der Datentyp der ersten Komponente MA als ein fünfter Datentyp und der Datentyp der zweiten Komponente MB als ein sechster Datentyp identifiziert. Der fünfte Datentyp der ersten Komponente MA und der sechste Datentyp der zweiten Komponente MB können jeweils ein Verbundtyp, ein Feldtyp, ein Skalartyp oder ein Zeigertyp sein. Darüber hinaus kann das erste Datenunterelement GA1 eine Mehrzahl von ersten Komponenten MA aufweisen, wobei jede der ersten Komponenten MA einen identischen fünften Datentyp aufweisen kann. Alternativ kann ein Teil der ersten Komponenten MA einen gleichen fünften Datentyp aufweisen. Alternativ kann jede der Mehrzahl von ersten Komponenten MA unterschiedliche Datentypen aufweisen. Das zweite Datenunterelement GB1 kann eine Mehrzahl von zweiten Komponenten MB aufweisen, wobei jede der zweiten Komponenten MB vom sechsten Datentyp sein kann. Alternativ kann jede der zweiten Komponenten MB einen unterschiedlichen Datentyp aufweisen.

Nach Identifikation des fünften Datentyps der ersten Komponente MA und des sechsten Datentyps der zweiten Komponente MB im vierten Identifikationsschritt 239 wird in einem fünften Identifikationsschritt 241 eine zweite Relation R2 zwischen der ersten Komponente MA und der zweiten Komponente MB identifiziert. Die zweite Relation R2 ermöglicht eine hinreichend genaue Zuordnung zwischen der ersten Komponente MA und der zweiten Komponente MB. Die erste Komponente MA und die zweite Komponente MB sind wenigstens über die zweite Relation R2 assoziiert, wenn die erste Komponente MA und die zweite Komponente MB gleich benannt sind. Umfassen das erste Datenunterelement GA1 eine Mehrzahl von ersten Komponenten MA und das zweite Datenunterelement GB1 eine Mehrzahl von zweiten Komponenten MB, so wird eine Mehrzahl von zweiten Relationen R2 zwischen jeweils Paaren von ersten Komponenten MA und zweiten Komponenten MB identifiziert. Alternativ kann die Mehrzahl der ersten Komponenten MA und die Mehrzahl von zweiten Komponenten MB über eine einzige zweite Relation R2 miteinander assoziiert sein.

Nach dem Identifizieren des fünften Datentyps und des sechsten Datentyps im vierten Identifikationsschritt 239 und dem Identifizieren der zweiten Relation R2 im fünften Identifikationsschritt 241 wird in einem dritten Generierungsschritt 243 eine dritte Migrationsfunktion MIG3 auf Basis des identifizierten fünften Datentyps, des identifizierten sechsten Datentyps, wobei die dritte Migrationsfunktion MIG3 eingerichtet ist, Daten vom fünften Datentyp auf Daten vom sechsten Datentyp abzubilden, indem die dritte Migrationsfunktion MIG3 Daten des fünften Datentyps im ersten Speicherbereich ausliest, die ausgelesenen Daten in den sechsten Datentyp konvertiert und die konvertierten Daten im zweiten Speicherbereich SPB speichert. Bei identischen fünftes und sechsten Datentypen, entfällt die Konvertierung der ausgelesenen Daten und der Wert der ersten Komponente MA kann blockweise an die Stelle PMB der zweiten Komponente MB kopiert werden. Alternativ kann zur Generierung der dritten Migrationsfunktion MIG3 die identifizierte zweite Relation R2 herangezogen werden.

Die generierte dritte Migrationsfunktion MIG3 ist nicht auf ein Abbilden der ersten Komponente MA auf die zweite Komponente MB beschränkt, sondern ist eingerichtet, beliebige Daten des fünften Datentyps auf beliebige Daten des sechsten Datentyps abzubilden. Für den Fall, dass das erste Datenunterelement GA1 eine Mehrzahl von ersten Komponenten MA aufweist, die jeweils vom fünften Datentyp sind, und das zweite Datenunterelement GB1 eine Mehrzahl von zweiten Komponenten MB aufweist, die jeweils vom sechsten Datentyp sind, so ist es ausreichend, lediglich eine dritte Migrationsfunktion MIG3 zu generieren, die eingerichtet ist, Daten vom fünften Datentyp auf Daten vom sechsten Datentyp abzubilden.

Zum Abbilden der Mehrzahl von ersten Komponenten MA auf zweite Komponenten MB kann die eine dritte Migrationsfunktion MIG3 mehrfach ausgeführt werden und jede einzelne erste Komponente MA auf eine zweite Komponente MB abgebildet werden. Für den Fall, dass das erste Datenunterelement GA1 eine Mehrzahl von ersten Komponenten MA aufweist, die jeweils verschiedene Datentypen aufweisen, und das zweite Datenunterelement GB1 eine Mehrzahl von zweiten Komponenten MB aufweist, die jeweils unterschiedliche Datentypen aufweisen, so muss im dritten Generierungsschritt 243 eine Mehrzahl von dritten Migrationsfunktionen MIG3 generiert werden, insbesondere muss für jedes Paar von Datentypen der Mehrzahl von ersten Komponenten MA und zweiten Komponenten MB, für die bislang keine Migrationsfunktion erzeugt wurde, eine dritte Migrationsfunktion MIG3 generiert werden, wobei jede dritte Migrationsfunktion MIG3 jeweils eingerichtet ist, Daten von einem Datentyp der Mehrzahl von ersten Komponenten MA auf Daten von einem Datentyp der Mehrzahl von zweiten Komponenten MB abzubilden.

Wird im zweiten Identifikationsschritt 225 erkannt, dass der dritte Datentyp des ersten Datenunterelements GA1 ein Feldtyp ist und der vierte Datentyp des ersten Datenunterelements GB1 ebenfalls ein Feldtyp ist und das erste Datenunterelement GA1 und das zweite Datenunterelement GB1 eine identische Anzahl von Dimensionen aufweisen, wobei für wenigstens eine Dimension das erste Datenunterelement GA1 erste Elemente aufweist, die gemäß einem ersten Indexbereich [U0,..., UM] indiziert sind, und das zweite Datenunterelement GB1 für wenigstens eine Dimension zweite Elemente aufweist, die gemäß einem zweiten Indexbereich [X0,..., XN] indiziert sind, wobei der erste Indexbereich [U0,..., UM] und der zweite Indexbereich [X0,..., XN] gleich sind, wird in einem sechsten Identifikationsschritt 253 der Datentyp jedes gemäß dem ersten Indexbereich [U0,..., UM] indizierten ersten Elements als ein siebter Datentyp und der Datentyp jedes gemäß dem zweiten Indexbereich [X0,..., XN] indizierten zweiten Elements als ein achter Datentyp identifiziert. Der siebte Datentyp und der achte Datentyp können jeweils beliebige Datentypen sein, einschließlich Feldtypen, Verbundtypen und Skalare, wie Zahlen, Zeiger, oder Zeichenketten.

Darauf folgend wird in einem siebten Identifikationsschritt 255 zwischen jeweils einem gemäß dem ersten Indexbereich [U0,..., UM] indizierten ersten Element und einem gemäß dem zweiten Indexbereich [X0,..., XN] indizierten zweiten Element eine dritte Relation identifiziert, die eine hinreichend genaue Zuordnung zwischen dem ersten Element und dem zweiten Element ermöglicht. Ein erstes Element des ersten Indexbereichs [U0,..., UM] und ein zweites Element des zweiten Indexbereichs [X0,..., XN] stehen zueinander in Relation, wenn das erste Element und das zweite Element gleich indiziert sind. Die dritte Relation zwischen dem ersten Element des ersten Indexbereichs [U0,..., UM] und dem zweiten Element des zweiten Indexbereichs [X0,..., XN] impliziert, dass bei einer Migration des Werts des ersten Datenunterelements GA1 auf das zweite Datenunterelement GB1 der Wert des ersten Elements auch auf das das mit dem ersten Element über die dritte Relation assoziierte zweite Element abgebildet werden muss.

Darauffolgend wird in einem vierten Generierungsschritt 257 auf Basis des identifizierten siebten Datentyps, des identifizierten achten Datentyps und der identifizierten dritten Relation eine vierte Migrationsfunktion MIG4 generiert, die eingerichtet ist, Daten des siebten Datentyps auf Daten des achten Datentyps abzubilden, indem die vierte Migrationsfunktion MIG4 Daten des siebten Datentyps im ersten Speicherbereich SPA ausliest, die ausgelesenen Daten in den achten Datentyp konvertiert und die konvertierten Daten im zweiten Speicherbereich SPB speichert. Sind der siebte Datentyp und der achte Datentyp identisch, so entfällt die Konvertierung der ausgelesenen Daten. Bei identischen siebten Datentypen und achten Datentypen können die Werte der ersten Elemente blockweise an die Stelle der zweiten Elemente kopiert werden.

Sind der erste Indexbereich [U0,..., UM] und der zweite Indexbereich [X0,..., XN] nicht identisch, so wird in einem Indexbestimmungsschritt 259 in den Indexbereichen des ersten Datenunterelements GA1 und des zweiten Datenunterelements GB1 ein Intervall [R, S] bestimmt, für das gilt, R = max [X0, U0] und S = min [XN, UM]. R ist hierbei die größere der beiden unteren Grenzen X0 und U0 während S die kleinere der beiden oberen Grenzen XN und UM ist. Nach Bestimmen des Intervalls [R, S] wird für die gemäß dem Intervall indizierten ersten Elemente und zweiten Elemente, die jeweils gleich indiziert sind, der sechste Identifikationsschritt 253, des siebte Identifikationsschritt 255 und der vierte Generierungsschritt 257 durchgeführt. Enthält das Intervall [R, S] keine ersten Elemente und zweiten Elemente, die identische Indizes aufweisen, so wird keine vierte Migrationsfunktion MIG4 im vierten Generierungsschritt 257 generiert, und eine Datenmigration des Werts des ersten Datenunterelements GA1 auf das zweite Datenunterelement GB1 wird nicht durchgeführt. Alternativ wird eine vierte Migrationsfunktion generiert aber nicht ausgeführt, sodass auch in diesem Fall keine Migration stattfindet.

Nach Beendigung des ersten Generierungsschritts 201 und/oder des zweiten Generierungsschritts 229 und/oder des dritten Generierungsschritts 243 und/oder des vierten Generierungsschritts 257 wird im zweiten Überprüfungsschritt 215 überprüft, ob im ersten Generierungsschritt 201 eine erste Migrationsfunktion MIG1 generiert werden konnte und/oder ob im zweiten Generierungsschritt 229 eine zweite Migrationsfunktion MIG2 generiert werden konnte und/oder ob im dritten Generierungsschritt 243 ein dritte Migrationsfunktion MIG3 generiert werden konnte und/oder ob im vierten Generierungsschritt 257 eine vierte Migrationsfunktion MIG4 generiert werden konnte.

Das erfindungsgemäße Verfahren 200 kann rekursiv ausgeführt werden, indem die ersten Migrationsfunktionen MIG1, die zweiten Migrationsfunktionen MIG2, die dritten Migrationsfunktionen MIG3 und die vierten Migrationsfunktionen MIG4 rekursiv ausführbar sind und Migrationsfunktionen einer Hierarchiestufe jeweils Migrationsfunktionen der nächst niedrigeren Hierarchiestufe aufrufen können, wobei die erste Migrationsfunktion die Migrationsfunktion der höchsten Hierarchiestufe ist.

Die Migrationsfunktionen werden auf Basis der Datentypen der zu migrierenden Datenelemente generiert und sind eingerichtet, Datenelemente eines bestimmten Datentyps auf Datenelemente eines bestimmten Datentyps abzubilden.

Sind das erste Datenelement GA und das zweite Datenelement GB beispielsweise jeweils von einem Verbundtyp, so wird eine erste Migrationsfunktion MIG1 generiert, die eingerichtet ist, ein Datenobjekt von einem Verbundtyp, das wenigstens eine Datenunterelement aufweist, auf ein weiteres Datenobjekt abzubilden, das ebenfalls von einem Verbundtyp ist, und das ebenfalls ein Datenunterelement als Komponenten des Verbundtyps aufweist. Weisen das erste Datenelement GA und/oder das zweite Datenelement GB eine unterschiedliche Anzahl von Komponente auf, so ändert sich der Datentyp des ersten Datenelements GA und/oder des zweiten Datenelements GB und eine generierte erste Migrationsfunktion MIG1 weist andere Eigenschaften auf.

In Abhängigkeit der Datentypen des ersten Datenunterelements GA1 und des zweiten Datenunterelements GB1 wird zum Abbilden des ersten Datenunterelements GA1 auf das zweite Datenunterelement GB1 ferner eine zweite Migrationsfunktion MIG2 generiert, die eingerichtet ist, Datenelemente vom Datentyp des ersten Datenunterelements GA1 auf Datenelemente vom Datentyp des zweiten Datenunterelements GB1 abzubilden. Weisen das erste Datenelement GA und das zweite Datenelement GB jeweils eine Mehrzahl von ersten Datenunterelementen GA1 und von zweiten Datenunterelementen GB1 auf, so kann, wenn die ersten Datenunterelemente GA1 den gleichen Datentyp aufweisen und die zweiten Datenunterelemente GB1 den gleichen Datentyp aufweisen, so kann die zweite Migrationsfunktion MIG2 zum Abbilden der Datenunterelement mehrfach ausgeführt werden. Weisen die ersten Datenunterelemente GA1 unterschiedliche Datentypen auf und/oder weisen die zweiten Datenunterelemente GB1 unterschiedliche Datentypen auf, so werden mehrere zweite Migrationsfunktionen zum Abbilden der Datenunterelemente benötigt.

Sind das erste Datenunterelement GA1 und das zweite Datenunterelement GB1 jeweils von einem Verbundtyp und weisen das erste Datenunterelement GA1 beispielsweise drei erste Komponenten MA und das zweite Datenunterelement GB1 beispielsweise ebenfalls drei zweite Komponenten MB auf, so ist die zweite Migrationsfunktion eingerichtet ein Datenelement von einem Verbundtyp mit drei Komponenten auf ein weiteres Datenelement von einem Verbundtyp mit drei Komponenten abzubilden. Bei einer anderen Anzahl an Komponenten verhält sich der Sachverhalt analog.

Zum Abbilden der drei ersten Komponenten MA auf die drei zweiten Komponenten MB wird wenigstens eine dritte Migrationsfunktion MIG3 generiert, die eingerichtet ist Datenelementen von einem Datentyp der ersten Komponenten MA auf Datenelemente von einem Datentyp der zweiten Komponenten MB abzubilden. Weisen die drei ersten Komponenten MA unterschiedliche Datentypen und/oder die drei zweiten Komponenten MB unterschiedliche Datentypen auf, so müssen mindestens zwei und maximal drei dritte Migrationsfunktionen MIG3 generiert werden. Weisen alle drei ersten Komponenten MA jeweils denselben Datentyp auf und weisen alle drei zweiten Komponenten M B jeweils den gleichen Datentyp auf, so ist eine dritte Migrationsfunkton MIG3 ausreichend, die zum Abbilden der drei ersten Komponenten MA auf die drei zweiten Komponenten MB mehrfach ausgeführt wird.

Im oben beschriebenen Beispiel ist die erste Migrationsfunktion MIG1 eingerichtet, ein Datenelement von einem Verbundtyp, das eine Komponente aufweist, die ebenfalls als ein Datenelement von einem Verbundtyp ausgebildet ist und wiederum drei Komponenten aufweist, auf ein Datenelement abzubilden, das ebenfalls von einem Verbundtyp ist und eine Komponente aufweist, die wiederum als ein Datenelement eines Verbundtyps ausgebildet ist und wiederum drei Komponenten aufweist.

Zum Abbilden des ersten Datenelements GA auf das zweite Datenelement GB wird dann erfindungsgemäß, die erste Migrationsfunktion MIG1 ausgeführt, die eingerichtet ist Datenelemente von einem Verbundtyp des erste Datenelements GA auf Datenelemente von einem Verbundtyp des zweiten Datenelements GB abzubilden.

Zum Abbilden des ersten Datenunterelements GA1 auf das zweite Datenunterelement GB1 ruft die erste Migrationsfunktion MIG1 die zweite Migrationsfunktion MIG2 auf, die eingerichtet ist, Datenelemente des Verbundtyps des ersten Datenunterelements GA1 auf Datenelemente des Verbundtyps des zweiten Datenunterelements GB1 abzubilden.

Zum Abbilden der drei ersten Komponenten MA auf die drei zweiten Komponenten MB ruft die zweite Migrationsfunktion MIG2 wiederum die dritte Migrationsfunktion MIG3 beziehungsweise die dritten Migrationsfunktionen MIG3 auf, die ausgebildet ist/sind Datenelemente vom Datentyp der ersten Komponenten MA auf Datenelemente vom Datentyp der zweiten Komponenten MB abzubilden.

Sind die ersten Komponenten MA und die zweiten Komponenten MB jeweils von einem Skalartyp, so endet mit der dritten Migrationsfunktion MIG3 das rekursive Ausführen der Migrationsfunktionen. Nach Ausführen der dritten Migrationsfunktion/en MIG3 und dem Abbilden der ersten Komponenten MA auf die zweiten Komponenten MB, wird die dritte Migrationsfunktion MIG3 beendet. Wodurch auch die zweite Migration MIG2 das erste Datenunterelement GA1 auf das zweite Datenunterelement GB1 abgebildet hat und diese ebenfalls beendet wird. Wodurch ebenfalls die erste Migrationsfunktion MIG1 das erste Datenelement GA auf das zweite Datenelement GB abgebildet hat und diese ebenfalls beendet wird. Die Datenmigration ist damit abgeschlossen.

Sind die ersten Komponenten MA und die zweiten Komponenten MB nicht von einem Skalartyp, sondern beispielsweise wiederum von einem Verbundtyp und umfassen ebenfalls wiederum weitere erste Komponenten und weitere zweite Komponenten, lässt sich das oben beschriebene erfindungsgemäße Vorgehen beliebig rekursiv fortsetzen. In einem solchen Fall bedarf es wenigstens einer weiteren fünften Migrationsfunktion, die ausgebildet, die weiteren ersten Komponenten der als Verbundtypen ausgebildeten ersten Komponenten MA auf die weiteren zweiten Komponenten der zweiten Komponenten MB abzubilden.

Diese fünfte Migrationsfunktion würde zum Abbilden der ersten Komponenten MA auf die zweiten Komponenten MB von der dritten Migrationsfunktion MIG3 aufgerufen und ausgeführt.

Die fünfte Migrationsfunktion wäre in diesem Fall den Datentypen der weiteren ersten Komponenten und der weiteren zweiten Komponenten entsprechend eingerichtet, Datenelement eines Datentyps der weiteren ersten Komponenten auf Datenelemente eines Datentyps der weiteren zweiten Komponenten abzubilden.

Zum Abbilden einer jeden ersten Komponente MA auf die jeweilige zweite Komponente MB würde die dritte Migrationsfunktion MIG3 die entsprechend eingerichtete fünfte Migrationsfunktion aufrufen, worauf diese wenigstens eine weitere erste Komponente auf eine weitere zweite Komponente abbildet. Bei einer Mehrzahl von weiteren ersten Komponenten mit unterschiedlichem Datentyp und/oder einer Mehrzahl von weiteren zweiten Komponenten mit unterschiedlichem Datentyp müssten eine entsprechende Anzahl von fünften Migrationsfunktionen generiert werden, die wiederum nacheinander durch die dritte Migrationsfunktion aufgerufen und ausgeführt würde.

In Abhängigkeit der Schachtelung der einzelnen Datenelement, bei der Datenelemente als Komponenten von anderen Datenelementen eines Verbundtyps angeordnet sind, die wiederum Komponenten eines weiteren Datenelements eines Verbundtyps sind, usw. kann eine entsprechende Anzahl von Migrationsfunktionen generiert werden, die zum Abbilden der ineinander verschachtelten Datenelemente rekursiv ausgeführt werden.

Der Grad an Rekursion, der durch das erfindungsgemäße Verfahren 200 abgedeckt werden kann, ist durch das Verfahren 200 nicht beschränkt. Eine Einschränkung kann sich lediglich durch die zur Verfügung stehenden Rechenleistung einer das Verfahren 200 ausführenden Datenverarbeitungseinheit ergeben.

Das obige Beispiel ist in Bezug auf den Grad der Schachtelung der Datenelemente beliebig erweiterbar. Darüber hinaus ist eine Anzahl der ersten und zweiten Datenunterelemente, wie auch der ersten und zweiten Komponenten beliebig erweiterbar. Bei einer Mehrzahl erster und zweiter Datenunterelement muss gegebenenfalls eine Mehrzahl zweiter Migrationsfunktionen MIG2 generiert werden.

Im Falle, dass die ersten und zweiten Datenunterelemente oder die ersten und zweiten Komponenten statt von einem Verbundtyp von einem Feldtyp sind, ist das oben beschriebene Vorgehen analog durchzuführen.

Ein Ineinanderschachteln von Datenelementen, die jeweils von einem Feldtyp sind, kann durch das erfindungsgemäß Verfahren 200 analog behandelt werden, indem entsprechende Migrationsfunktion rekursiv aufgerufen und ausgeführt werden.

Eine Besonderheit beim Abbilden von Datenelementen eines Feldtyps weisen die hierzu generierten erfindungsgemäße Migrationsfunktionen im Vergleich zu den Migrationsfunktionen zum Abbilden von Datenelementen eines Verbundtyps jedoch auf.

Sind beispielsweise ein erstes Datenunterelement GA1 und ein zweites Datenunterelement GB1 von einem Feldtyp mit einer gleichen Anzahl von Dimensionen, in denen entsprechend erste und zweite Elemente angeordnet sind, so wird eine zweite Migrationsfunktion MIG2 generiert, die eingerichtet ist, Datenelemente eines Feldtyps mit der Anzahl an Dimensionen und der Anzahl an Elementen des Datentyps der ersten Elemente des ersten Datenunterelements auf Datenelemente eines Feldtyps mit der Anzahl an Dimensionen und der Anzahl an Elementen des Datentyps der zweiten Elemente des zweiten Datenunterelements abzubilden.

Ferner wird eine vierte Migrationsfunktion generiert, die eingerichtet ist, Datenelemente eines Datentyps der ersten Elemente auf Datenelemente eines Datentyps der zweiten Elemente abzubilden. Die vierte Migrationsfunktionen ist ausgebildet, individuell erste Elemente des ersten Datenunterelements GA1 auf entsprechende zweite Elemente des zweiten Datenunterelements GB1 abzubilden, und wird von der zweiten Migrationsfunktion MIG2 aufgerufen und ausgeführt.

Abweichend zu dem oben beschriebenen Beispiel ist im Fall von Feldtypen die zweite Migrationsfunktion MIG2 eingerichtet, die vierte Migrationsfunktion in geschachtelten Schleifen aufzurufen, wobei die Anzahl der geschachtelten Schleifen in Relation zur Anzahl von Dimensionen der ersten und zweiten Datenunterelemente vom Datentyp eines Feldtyps steht.

Durch das Aufrufen der vierten Migrationsfunktion durch die zweite Migrationsfunktion MIG2 in verschachtelten Schleifen wird die vierte Migrationsfunktion für das Abbilden eines ersten Elements auf ein zweites Element aufgerufen, bildet dieses ab und wird wieder beendet, worauf in der Ausführung der Schleife die vierte Migrationsfunktion zum Abbilden des nächsten ersten Elements auf das nächste zweite Element aufgerufen und ausgeführt wird. Durch das Ausführen der vierten Migrationsfunktion in verschachtelten Schleifen können alle abzubildenden ersten Elemente durch ein individuelles Ausführen der vierten Migrationsfunktion auf entsprechende zweite Elemente des zweiten Datenunterelemente abgebildet werden.

Analog zu dem oben ausgeführten Beispiel ist das erfindungsgemäße Verfahren 200 auch für Datenelemente vom Datentyp eines Feldtyps einer beliebigen Schachtelung von Datenelementen anwendbar, in der Datenelemente als Elemente von weiteren Datenelementen vom Datentyp eines Feldtyps angeordnet sind. Zum Ausführen einer Datenmigration müssen gemäß dem erfindungsgemäßen Verfahren 200 gegebenenfalls weitere fünfte, sechste oder weitere Migrationsfunktionen generiert werden, die rekursiv ausführbar sind.

Das erfindungsgemäße Verfahren 200 ist hierbei in der Lage, einen beliebigen Grad von Schachtelungen von Datenelementen zu berücksichtigen. Eine Grenze für die verarbeitbare Schachtelung wird vielmehr durch eine Rechenleistung einer das Verfahren 200 ausführenden Datenverarbeitungseinheit bestimmt.

Das obige Beispiel dient ausschließlich der Erläuterung und das erfindungsgemäße Verfahren 200 soll nicht auf die hier beispielhaft angeführten Ausführungen beschränkt sein. Abweichungen in Bezug auf Anzahl der Datenelemente, Datenunterelemente, Komponenten, Elemente, in Bezug auf die jeweiligen Datentypen der beschriebenen Datenelemente, Datenunterelemente, Komponenten, Elemente, und in Bezug auf den Grad der Schachtelung der Datenelemente, Datenunterelemente, Komponenten und Elemente sind durch das erfindungsgemäße Verfahren 200 abgedeckt.

Die Generierung einer ersten Migrationsfunktion MIG1 kann fehlschlagen, wenn der erste Datentyp des ersten Datenelements GA nicht in den zweiten Datentyp des zweiten Datenelements GB überführt werden kann. Dies ist beispielsweise der Fall, wenn der erste Datentyp und der zweite Datentyp nicht kompatibel sind. Die Generierung einer zweiten Migrationsfunktion MIG2 kann fehlschlagen, wenn der dritte Datentyp des ersten Datenunterelements GA1 und der vierte Datentyps des zweiten Datenunterelements GB1 nicht ineinander überführbar sind. Die Generierung einer dritten Migrationsfunktion kann fehlschlagen, wenn der fünfte Datentyp einer ersten Komponente MA nicht in den sechsten Datentyp der zweiten Komponente MB überführbar ist. Die Generierung einer vierten Migrationsfunktion MIG4 kann fehlschlagen, wenn der siebte Datentyp eines ersten Elements nicht in den achten Datentyp eines zweiten Elements überführbar ist.

Alternativ können in den oben genannten Fällen erste Migrationsfunktionen MIG1, zweite Migrationsfunktionen MIG2, dritte Migrationsfunktionen MIG3 oder vierte Migrationsfunktionen MIG4 generiert werden, jedoch werden diese nicht ausgeführt, da die jeweiligen Datentypen nicht ineinander überführbar sind.

Ein erstes Datenelement GA ist beispielsweise nicht in ein zweites Datenelement GB überführbar, wenn der erste Datentyp des ersten Datenelements GA ein Verbundtyp ist und der zweite Datentyp des zweiten Datenelements GB kein Verbundtyp ist.

Analog ist ein dritter Datentyp des ersten Datenunterelements GA1 nicht in einen vierten Datentyp eines zweiten Datenelements GB1 überführbar, wenn beispielsweise der dritte Datentyp ein Verbundtyp ist und der vierte Datentyp kein Verbundtyp ist. Darüber hinaus ist der dritte Datentyp nicht in den vierten Datentyp überführbar, wenn der vierte Datentyp ein Feldtyp ist und der dritte Datentyp kein Feldtyp oder ebenfalls ein Feldtyp, jedoch mit einer anderen Anzahl an Dimensionen ist.

Darüber hinaus ist der Wert des ersten Datenunterelements GA1 vom dritten Datentyp nicht in das zweite Datenunterelements GB1 vom vierten Datentyp überführbar, wenn der dritte Datentyp und der vierte Datentyp jeweils vom Verbundtyp sind, der vierte Datentyp des zweiten Datenunterelements GB1 jedoch keine zweite Komponente MB aufweist, die mit einer ersten Komponenten MA des ersten Datenunterelements GA1 in Relation steht.

Darüber hinaus ist der dritte Datentyp nicht in den vierten Datentyp überführbar, wenn beide Datentypen vom Feldtyp sind, der vierte Datentyp jedoch kein zweites Element aufweist, das mit einem ersten Element des dritten Datentyps in Relation steht.

Analog ist ein fünfter Datentyp einer ersten Komponente MA nicht in einen sechsten Datentyp einer zweiten Komponente MB überführbar, wenn der fünfte Datentyp und/oder der sechste Datentyp ein Verbundtyp und/oder ein Feldtyp sind.

Sind der fünfte Datentyp der ersten Komponente MA und der sechste Datentyp der zweiten Komponente MB oder der siebte Datentyp des ersten Elements oder der achte Datentyp des zweiten Elements vom Skalartyp, so ist der fünfte Datentyp in den sechsten Datentyp oder der siebte Datentyp in den achten Datentyp konvertierbar, wenn der sechste Datentyp alle Werte des fünften Datentyps oder der achte Datentyp alle Werte des siebten Datentyps repräsentieren kann. Beispielsweise ist ein Integer INT in einen Long Integer LINT konvertierbar. Ein Wert eines vorzeichenbehafteten 16-bit Integer Datentyps ist stets ohne Informationsverlust in einen Wert eines vorzeichenbehafteten 64-bit Integer Datentyps konvertierbar. Gegebenenfalls ist auch ein Long Integer LINT in einen Integer INT konvertierbar, wenn zumindest ein Teil der Werte des Long Integer LINT im Integer INT repräsentiert werden kann. Gegebenenfalls ist auch ein Real in einen Integer INT konvertierbar, wenn im Integer INT wenigstens ein vergleichbarer bzw. ähnlicher Wert wie im Real ausgedrückt werden kann. Umgekehrt ist beispielsweise ein Wert eines vorzeichenbehafteter 64-bit Integer Datentyps nur ohne Informationsverlust in einen Wert eins vorzeichenbehafteten 16-bit Integer Datentyps konvertierbar, wenn er durch letzteren repräsentiert werden kann.

Insbesondere sind die Datentypen Struct, Class und Function_Block, die in der Norm IEC 61131-3 als Verbundtyp definiert sind, ineinander konvertierbar. Beispielsweise ist der Wert eines Struct in den Wert eines Function_Block konvertierbar.

Insbesondere ist ein abzubildendes Datenelement eines Skalartyps hinreichend genau auf ein weiteres Datenelement eines größeren Skalartyps abbildbar, wie beispielsweise ein 16-bit Integer auf einen 64-bit Integer abbildbar ist.

Ferner ist ein abzubildendes Datenelement eines Skalartyps hinreichend genau auf ein weiteres Datenelement eines kleineren Skalartyps abbildbar, wenn der Wert des abzubildenden Datenelements mit größerem Skalartyp im kleiner Skalartyp des weiteren Datenelements repräsentierbar ist. Dies ist der Fall, wenn der Wert des abzubildenden Datenelements in der im kleineren Skalartyp des weiteren Datenelements zur Verfügung stehenden bit-Zahl als Binärzahl darstellbar ist.

Darüber hinaus ist ein abzubildendes Datenelement eines Skalartyps hinreichend genau auf ein weiteres Datenelement eines kleineren Skalartyps abbildbar, wenn der Wert des abzubildenden Datenelements mit größerem Skalartyp im kleineren Skalartyp des weiteren Datenelements zwar nicht repräsentierbar ist, der maximale Wert, der im kleineren Skalartyp des weiteren Datenelements darstellbar ist, mit ausreichender Genauigkeit den Wert des abzubildenden Datenelements wiedergibt. Hierzu kann vor der Migration für das abzubildende Datenelement ein Grenzwert bestimmt werden, der angibt, ab welcher Größe des Werts des abzubildenden Datenelements eine Repräsentation des Werts durch das weitere Datenelement nicht mehr mit ausreichender Genauigkeit möglich ist. Das hier beschriebene gilt für alle ersten Datenelemente GA, zweiten Datenelemente GB, Datenunterelemente GA1, zweiten Datenunterelemente GB1, ersten Komponenten MA, zweiten Komponenten MB, ersten Elemente und zweiten Elemente, die von einem Skalartyp sind.

Darüber hinaus kann die Generierung einer ersten Migrationsfunktion MIG1, einer zweiten Migrationsfunktion MIG2, einer dritten Migrationsfunktion MIG3 oder einer vierten Migrationsfunktion MIG4 fehlschlagen, wenn zwischen dem ersten Datenelement GA und dem zweiten Datenelement GB oder dem ersten Datenunterelement GA1 und dem zweiten Datenunterelement GB1 oder einer ersten Komponente MA und einer zweiten Komponente MB oder zwischen einem ersten Element und einem zweiten Element keine Relation identifiziert werden kann. Alternativ kann eine dritte Migrationsfunktion MIG3 generiert werden, die dann aber nicht ausgeführt wird, da keine Relation identifiziert wurde.

Konnten die erste Migrationsfunktion MIG1 und/oder die zweite Migrationsfunktion MIG2 und/oder die dritte Migrationsfunktion MIG3 und/oder die vierte Migrationsfunktion MIG4 generiert werden, so wird das Verfahren 200 gemäß dem zu Fig. 3 und Fig. 4 beschriebenen Unterbrechungsschritt 203 und ersten Bestimmungsschritt 205 und dem Migrationsschritt 207 fortgesetzt.

Das Verfahren wird solange fortgesetzt, bis alle erste Datenunterelemente GA1 auf alle zweite Datenunterelemente GB1 abgebildet sind, beziehungsweise alle ersten Komponenten MA auf zweite Komponenten MB beziehungsweise alle ersten Elemente auf zweite Elemente abgebildet sind, die gemäß der jeweiligen Datentypen aufeinander abbildbar sind. Hierzu werden von der ersten Migrationsfunktion MIG1 nacheinander zweite Migrationsfunktionen MIG2 aufgerufen, die wiederum, falls nötig, nacheinander entsprechende dritte Migrationsfunktionen MIG3 und/oder vierte Migrationsfunktionen MIG4 aufrufen.

Abweichend zu den in Fig. 3 und Fig. 4 dargestellten Ausführungsformen umfasst der Migrationsschritt 207 der Ausführungsform in Fig. 5 das Aufrufen und Ausführen der ersten Migrationsfunktion MIG1 auf das erste Datenelement GA und das zweite Datenelement GB. Das Ausführen der ersten Migrationsfunktion MIG1 auf das erste Datenelement GA und das zweite Datenelement GB umfasst das Auslesen des Werts des ersten Datenelements GA an einer Stelle PGA des ersten Datenelements GA im ersten Speicherbereich SPA in einem ersten Leseschritt 217, das Konvertieren des Werts in den zweiten Datentyp in einem ersten Konvertierungsschritt 219 und das Schreiben des in dem zweiten Datentyp konvertierten Werts an eine Stelle PGB des zweiten Datenelements GB im zweiten Speicherbereich SPB in einem ersten Schreibschritt 221.

Sind das erste Datenelement GA und das zweite Datenelement GB von einem Verbundtyp und umfasst das erste Datenelement GA wenigstens ein erstes Datenunterelement GA1 und umfasst das zweite Datenelement GB wenigstens ein zweites Datenunterelement GB1, so umfasst der Migrationsschritt 207 ferner einen ersten Teilmigrationsschritt 231. Im ersten Teilmigrationsschritt 231 wird eine zweite Migrationsfunktion MIG2 zum Abbilden des ersten Datenunterelements GB1 auf das zweite Datenunterelement GB2 durch die erste Migrationsfunktion MIG1 aufgerufen. Beim Aufrufen der zweiten Migrationsfunktion MIG2 übergibt die erste Migrationsfunktion MIG1 die Speicherstellen, an der das erste Datenunterelement GA1 im ersten Speicherbereich SPA und das zweite Datenunterelement GB1 im zweiten Speicherbereich SPB gespeichert sind.

Nach Aufrufen der zweiten Migrationsfunktion MIG2 umfasst der erste Teilmigrationsschritt 231 das Auslesen eines Werts des ersten Datenunterelements GA1 an einer Stelle PGA1 des ersten Datenunterelements GA1 im ersten Speicherbereich SPA in einem zweiten Leseschritt 233, das Konvertieren des ausgelesenen Werts in einen Wert des vierten Datentyps in einem zweiten Konvertierungsschritt 235 und das Schreiben des in den vierten Datentyp konvertieren Werts an eine Stelle PGB1 des zweiten Datenunterelements GB im zweiten Speicherbereich SPB in einem zweiten Schreibschritt 237.

Sind das erste Datenunterelement GA1 und das zweite Datenunterelement GB1 jeweils von einem Verbundtyp und umfasst das erste Datenunterelement GA1 wenigstens eine erste Komponente MA und umfasst das zweite Datenunterelement GB1 wenigstens eine zweite Komponente MB, so umfasst der Migrationsschritt 207 ferner einen zweiten Teilmigrationsschritt 245, in dem die zweite Migrationsfunktion MIG2 die dritte Migrationsfunktion MIG3 zum Abbilden der ersten Komponente MA auf die zweite Komponente MB aufruft. Beim Aufrufen der dritten Migrationsfunktion MIG3 übergibt die zweite Migrationsfunktion MIG2 die Adressen der ersten Komponente MA im ersten Speicherbereich SPA und der zweiten Komponente MB im zweiten Speicherbereich SPB.

Nach Aufrufen der dritten Migrationsfunktion MIG3 umfasst der zweite Teilmigrationsschritt 245 das Auslesen eines Werts der ersten Komponente MA an einer Stelle PMA der ersten Komponente MA im ersten Speicherbereich SPA in einem dritten Leseschritt 247, das Konvertieren des ausgelesenen Werts in einen Wert des sechsten Datentyps der zweiten Komponente MB in einem dritten Konvertierungsschritt 249 und das Schreiben des in den sechsten Datentyp konvertieren Werts der ersten Komponente MA an eine Stelle PMB der zweiten Komponente MB im zweiten Speicherbereich SPB in einem dritten Schreibschritt 251.

Sind das erste Datenunterelement GA1 und das zweite Datenunterelement GB1 jeweils von einem Feldtyp mit einer identischen Anzahl von Dimensionen und umfasst das erste Datenunterelement GA1 in wenigstens einer Dimension in einem ersten Indexbereich [U0,..., UM] indizierte erste Elemente und umfasst das zweite Datenunterelement GB1 in wenigstens einer Dimension in einem zweiten Indexbereich [X0,..., XN] indizierte zweite Elemente, so umfasst der Migrationsschritt 207 einen dritten Teilmigrationsschritt 261, in dem die zweite Migrationsfunktion MIG2 eine vierte Migrationsfunktion MIG4 aufruft zum Abbilden der ersten Elemente auf die zweiten Elemente. Beim einem Aufruf der vierten Migrationsfunktion MIG4 übergibt die zweite Migrationsfunktion MIG2 die Speicherstellen eines ersten Elements im ersten Speicherbereich SPA und die Speicherstelle eines in Relation stehenden zweiten Elements im zweiten Speicherbereich SPB.

Ist die vierte Migrationsfunktion MIG4 durch die zweite Migrationsfunktion MIG2 aufgerufen, so umfasst der dritte Teilmigrationsschritt 261 das Auslesen eines Werts eines ersten Elements an einer Stelle des ersten Elements im ersten Speicherbereich SPA in einem vierten Leseschritt 263, das Konvertieren des ausgelesenen Werts in einen Wert des achten Datentyps des zweiten Elements in einem vierten Konvertierungsschritt 265 und das Schreiben des in den achten Datentyp konvertierten Werts an eine Stelle des zweiten Elements im zweiten Speicherbereich SPB in einem vierten Schreibschritt 267.

Umfasst das erste Datenelement GA und das zweite Datenelement GB jeweils eine Mehrzahl von ersten Datenunterelementen GA1 und eine Mehrzahl von zweiten Datenunterelementen GB1, für die jeweils erste Relationen R1 identifiziert worden sind und deren erste Datentypen und zweite Datentypen ineinander konvertierbar sind, und weist die Mehrzahl von ersten Datenunterelementen GA1 verschiedene zweite Datentypen auf und weist die Mehrzahl von zweiten Datenunterelementen GB1 eine Mehrzahl von verschiedenen vierten Datentypen auf, so ruft die erste Migrationsfunktion MIG1 im ersten Teilmigrationsschritt 231 eine Mehrzahl verschiedener zweiter Migrationsfunktionen MIG2 zum Abbilden der Mehrzahl von ersten Datenunterelementen GA1 auf die Mehrzahl von zweiten Datenunterelementen GB1 auf. Die Mehrzahl von zweiten Migrationsfunktionen MIG2 unterscheidet sich jeweils bezüglich der verschiedenen dritten Datentypen und der verschiedenen vierten Datentypen. Jede zweite Migrationsfunktion MIG2 durchläuft zum Abbilden der ersten Datenunterelemente GA1 auf die zweiten Datenunterelemente GB1 jeweils den zweiten Leseschritt 233, den zweiten Konvertierungsschritt 235 und den zweiten Schreibschritt 237.

Umfasst ein erstes Datenunterelement GA1 jeweils eine Mehrzahl von ersten Komponenten MA und umfasst ein zweites Datenunterelement GB1 jeweils eine Mehrzahl von zweiten Komponenten MB und weist die Mehrzahl von ersten Komponenten MA eine Mehrzahl von unterschiedlichen fünften Datentypen auf und weist die Mehrzahl von zweiten Komponenten MB eine Mehrzahl von unterschiedlichen sechsten Datentypen auf, so ruft im zweiten Teilmigrationsschritt 245 die zweite Migrationsfunktion MIG2 eine Mehrzahl von dritten Migrationsfunktionen MIG3 zum Abbilden der Mehrzahl von ersten Komponenten MA auf die Mehrzahl von zweiten Komponenten MB auf, wobei jede der dritten Migrationsfunktionen MIG3 sich bezüglich der jeweils abzubildenden fünften Datentypen und sechsten Datentypen unterscheidet. Im zweiten Teilmigrationsschritt 245 führt jede dritte Migrationsfunktion MIG3 zum Abbilden einer ersten Komponente MA auf eine zweite Komponente MB den dritten Leseschritt 247, den dritten Konvertierungsschritt 249 und den dritten Schreibschritt 251 aus.

Umfasst ein erstes Datenunterelement GA1 eine Mehrzahl von ersten Elementen und umfasst ein zweites Datenunterelement GB1 eine Mehrzahl von zweiten Elementen, so wird zum Abbilden der Mehrzahl von ersten Elementen auf die zweiten Elemente im dritten Teilmigrationsschritt 261 die vierte Migrationsfunktion MIG4 mehrfach nacheinander durch die zweite Migrationsfunktion MIG2 aufgerufen, um jedes erste Element um das gemäß einer dritten Relation assoziierte zweite Elemente abzubilden. Für jedes Abbilden führt die vierte Migrationsfunktion MIG4 im dritten Teilmigrationsschritt 261 den vierten Leseschritt 263, den vierten Konvertierungsschritt 265 und den vierten Schreibschritt 267 aus. Alternativ können über die dritte Relation zusammenhängende erste Indexbereiche mit zusammenhängenden zweiten Indexbereichen assoziiert werden.

In einer Ausführungsform enthält MIG2 ineinander geschachtelte Schleifen (je eine pro Dimension), wobei in der innersten Schleife MIG4 aufgerufen wird. Der Vorteil hiervon ist, dass die Code-Größe von der zweiten Migrationsfunktion MIG 2 linear in der Anzahl der Dimensionen des Feldtyps ist und nicht linear mit der Größe des Feldtyps ansteigt. Würde ohne Schleife oder Schleifen für jedes Element des Feldtyps ein Aufruf der vierten Migrationsfunktion MIG4 erzeugt, so würde der Code der zweiten Migrationsfunktion MIG2 bei großen Feldtypen schnell eine problematische Größe erreichen und könnte nicht mehr oder nur schwerlich ausgeführt werden.

Alternativ kann zum Abbilden einer Mehrzahl von ersten Elementen auf eine Mehrzahl von zweiten Elementen eine Mehrzahl von vierten Migrationsfunktionen MIG4 generiert sein, sodass zum Abbilden der Mehrzahl von ersten Elementen auf die Mehrzahl von zweiten Elementen nacheinander die Mehrzahl von vierten Migrationsfunktionen MIG4 durch die zweite Migrationsfunktion MIG2 aufgerufen wird, sodass jedes erste Element auf ein gemäß der dritten Relation assoziiertes zweites Element gemäß einer individuellen vierten Migrationsfunktion MIG4 abgebildet wird. Jede individuelle vierte Migrationsfunktion MIG4 durchläuft zum Abbilden des entsprechenden ersten Elements auf das entsprechende zweite Element im dritten Teilmigrationsschritt 261 den vierten Leseschritt 263, den vierten Konvertierungsschritt 265 und den vierten Schreibschritt 267.

Nach Abschluss des Migrationsschritts 207 wird das Verfahren 200 gemäß der Ausführungsform in Fig. 4 mit dem ersten Überprüfungsschritt 209, dem Ersetzungsschritt 202 und dem ersten Steuerschritt 211 bzw. dem zweiten Steuerschritt 213 fortgesetzt.

Gemäß einer Ausführungsform umfasst das Automatisierungssystem 100 ein Übersetzermodul 109, das eingerichtet ist, ein Steuerprogramm des Automatisierungssystems 100 zu interpretieren. Darüber hinaus ist das Übersetzermodul 109 eingerichtet, den ersten Generierungsschritt 201, den ersten Identifikationsschritt 223, den zweiten Identifikationsschritt 225, den dritten Identifikationsschritt 227, den zweiten Generierungsschritt 229, den vierten Identifikationsschritt 239, den fünften Identifikationsschritt 241, den dritten Generierungsschritt 243, den sechsten Identifikationsschritt 253, den siebten Identifikationsschritt 255, den vierten Generierungsschritt 257 und den Indexbestimmungsschritt 259 auszuführen.

Gemäß einer weiteren Ausführungsform kann das zweite Datenelement GB vor Ausführung des Migrationsschritts 207 initialisiert sein. Durch die Initialisierung des zweiten Datenelements GB wird der Wert des zweiten Datenelements GB inklusive der Werte aller zweiten Datenunterelemente GB1 bzw. der Werte aller zweiten Komponenten MB oder aller zweiten Elemente auf einen Initialwert festgesetzt.

Beim Durchführen des Migrationsschritts 207 inklusive des ersten Teilmigrationsschritts 231, des zweiten Teilmigrationsschritts 245 und des dritten Teilmigrationsschritts 261 werden für die zweiten Datenunterelemente GB1, zweiten Komponenten MB und/oder zweiten Elemente, für die eine erste Relation R1, eine zweite Relation R2 und/oder eine dritte Relation zu einem entsprechenden ersten Datenunterelement GA1, einer entsprechenden ersten Komponenten MA und/oder einem entsprechenden ersten Elementen identifiziert wurde und für die eine zweite Migrationsfunktion MIG2, eine dritte Migrationsfunktion MIG3 und/oder eine vierte Migrationsfunktion MIG4 generiert werden konnte, die jeweiligen Initialwerte durch die entsprechenden migrierten Werte der über die identifizierten Relationen assoziierten ersten Datenunterelemente GA1, ersten Komponenten MA und/oder ersten Elemente überschrieben. Für die zweiten Datenunterelement GB1, zweiten Komponenten MB und/oder zweiten Elemente, für die keine Relationen zu einem der ersten Datenunterelemente GA1, ersten Komponenten MA und/oder ersten Elemente identifiziert werden konnte, bleibt der jeweilige Initialwert nach Beendigung des Migrationsschritts 207 erhalten.

Die Objekte des zweiten Datenelements GB, für die keine Entsprechung im ersten Datenelement GA in Form einer ersten Relation R1, einer zweiten Relation R2 und/oder einer dritten Relation identifiziert werden konnte, werden bei zyklischer Ausführung des zweiten Steuerprogramms B auf Basis des zweiten Datenelements GB im ersten Steuerschritt 211 unter Berücksichtigung des für das jeweilige Objekt entsprechend assoziiertem Initialwert verwendet.

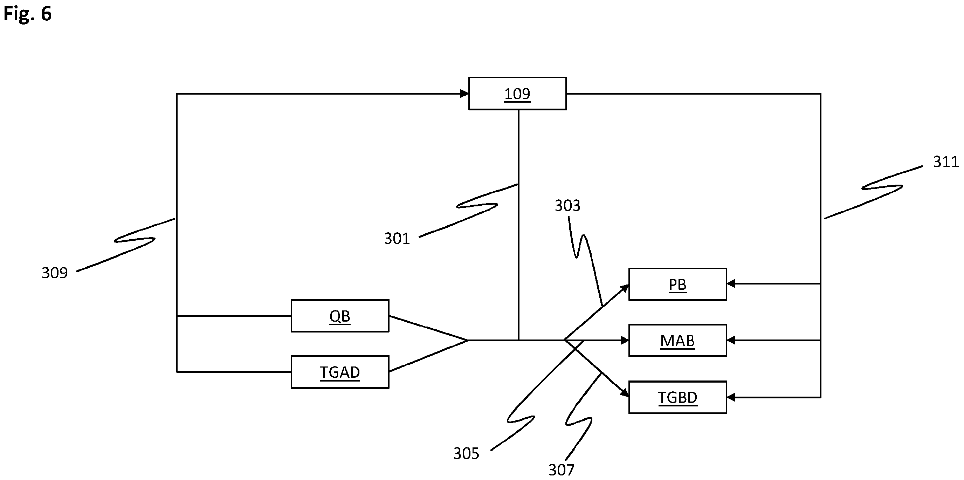

Fig. 6 zeigt eine schematische Darstellung eines Generierungsvorgangs eines zweiten Steuerprogramms B als eine aktualisierte Version eines ersten Steuerprogramms A eines Automatisierungssystems 100 gemäß einer Ausführungsform.

Gemäß der in Figur 6 dargestellten Ausführungsform berücksichtigt das Übersetzermodul 109 zum Generieren des zweiten Steuerprogramms B als aktualisierte Version des ersten Steuerprogramms A einen Quelltext QB des zweiten Steuerprogramms B. Hierzu liest das Übersetzermodul 109 Quelltext QB des zweiten Steuerprogramms B in einem Eingabeschritt 309 ein. In einem Übersetzungsschritt 303 des Kompiliervorgangs 301 übersetzt das Übersetzermodul 109 den Quelltext QB des zweiten Steuerprogramms B in einen ausführbaren Code PB des zweiten Steuerprogramms B, der von der Steuerung 101 des Automatisierungssystems 100 zum Steuern des Automatisierungssystems 100 auf Basis des zweiten Steuerprogramms B ausgeführt werden kann. Der ausführbare Code PB des zweiten Steuerprogramms B gibt das Übersetzermodul 109 in einem Ausgabeschritt 311 aus.

Im Kompiliervorgang 301 berücksichtigt das Übersetzermodul 109 ferner eine Definition des ersten Datentyps TGAD, die das Übersetzermodul im Eingabeschritt 309 einliest. In der Definition des ersten Datentyps TGAD des ersten Datenelements GA sind der erste Datentyp des ersten Datenelements GA sowie alle dritten Datentypen aller ersten Datenunterelemente GA1, alle fünften Datentypen aller ersten Komponenten MA aller ersten Datenunterelemente GA1 und alle siebten Datentypen aller ersten Elemente aller ersten Datenunterelemente GA1 des ersten Datenelements GA definiert. Die Definition des ersten Datentyps TGAD umfasst somit alle ersten Datentypen, alle dritten Datentypen, alle fünften Datentypen TMA und alle siebten Datentypen aller Objekte des ersten Datenelements GA.

Darüber hinaus erzeugt das Übersetzermodul 109 im Kompiliervorgang 301 aus dem Quelltext QB des zweiten Steuerprogramms B in einem zweiten Erzeugungsschritt 307 eine Definition des zweiten Datentyps TGBD, die im Ausgabeschritt 311 ausgegeben wird. Analog zur Definition des ersten Datentyps TGAD umfasst die Definition des zweiten Datentyps TGBD den zweiten Datentyp des zweiten Datenelements GB sowie alle vierten Datentypen aller zweiten Datenunterelemente GB1 sowie alle sechsten Datentypen aller zweiten Komponenten MB aller zweiten Datenunterelemente GB1 sowie aller achten Datentypen aller zweiten Elemente aller zweiten Datenunterelemente GB1 des zweiten Datenelements GB. Analog zur Definition des ersten Datentyps TGAD umfasst die Definition des zweiten Datentyps TGBD alle zweiten Datentypen, alle vierten Datentypen, alle sechsten Datentypen und alle achten Datentypen aller Objekte des zweiten Datenelements GB.

Ferner erzeugt das Übersetzermodul 109 im Kompiliervorgang 301 in einem ersten Erzeugungsschritt 305 einen Migrationscode MAB, der im Ausgabeschritt 311 ausgegeben wird. Der Migrationscode MAB umfasst alle ersten Migrationsfunktionen MIG1, alle zweiten Migrationsfunktionen MIG2, alle dritten Migrationsfunktionen MIG3 und alle vierten Migrationsfunktionen MIG4, die jeweils im ersten Generierungsschritt 201, im zweiten Generierungsschritt 229, im dritten Generierungsschritt 243 und im vierten Generierungsschritt 257 generiert wurden. Zur Durchführung des ersten Erzeugungsschritts 305 und der damit verbundenen ersten Generierungsschritte 201, zweiten Generierungsschritte 229, dritten Generierungsschritte 243 und vierten Generierungsschritte 257 berücksichtigt das Übersetzermodul 109 die Definition des ersten Datentyps TGAD und die im zweiten Erzeugungsschritt 307 erzeugte Definition des zweiten Datentyps TGBD.

Auf Basis der Definition des ersten Datentyps TGAD, in der alle ersten Datentypen, alle dritten Datentypen, alle fünften Datentypen TGMA und alle siebten Datentypen aller Objekte des ersten Datenelements GA enthalten sind, und unter Berücksichtigung der Definition des zweiten Datentyps TGBD, in der alle zweiten Datentypen, alle vierten Datentypen, alle sechsten Datentypen TGMB und alle achten Datentypen aller Objekte des zweiten Datenelements GB enthalten sind, werden durch das Übersetzermodul 109 im ersten Generierungsschritt 201 die erste Migrationsfunktion MIG1, im zweiten Generierungsschritt 229 die zweite Migrationsfunktion MIG2, im dritten Generierungsschritt 243 die dritten Migrationsfunktionen MIG3 und im vierten Generierungsschritt 257 die vierten Migrationsfunktionen MIG4 generiert. Alternativ kann das Übersetzermodul 109 die Information zur Generierung der Migrationsfunktionen auch direkt dem Quelltext QB des zweiten Steuerprogramms B entnehmen. Neben allen ersten Migrationsfunktionen MIG1, allen zweiten Migrationsfunktionen MIG2, allen dritten Migrationsfunktionen MIG3 und allen vierten Migrationsfunktionen MIG4 umfasst der im ersten Erzeugungsschritt 305 vom Übersetzermodul 109 erzeugte Migrationscode MAB Ausführungsvorschriften, wie die einzelnen ersten Migrationsfunktionen MIG1, zweiten Migrationsfunktionen MIG2, dritten Migrationsfunktionen MIG3 und vierten Migrationsfunktionen MIG4 zur Migration der entsprechenden Objekte des ersten Datenelements GA auf die entsprechenden Objekte des zweiten Datenelements GB aufzurufen und auszuführen sind.

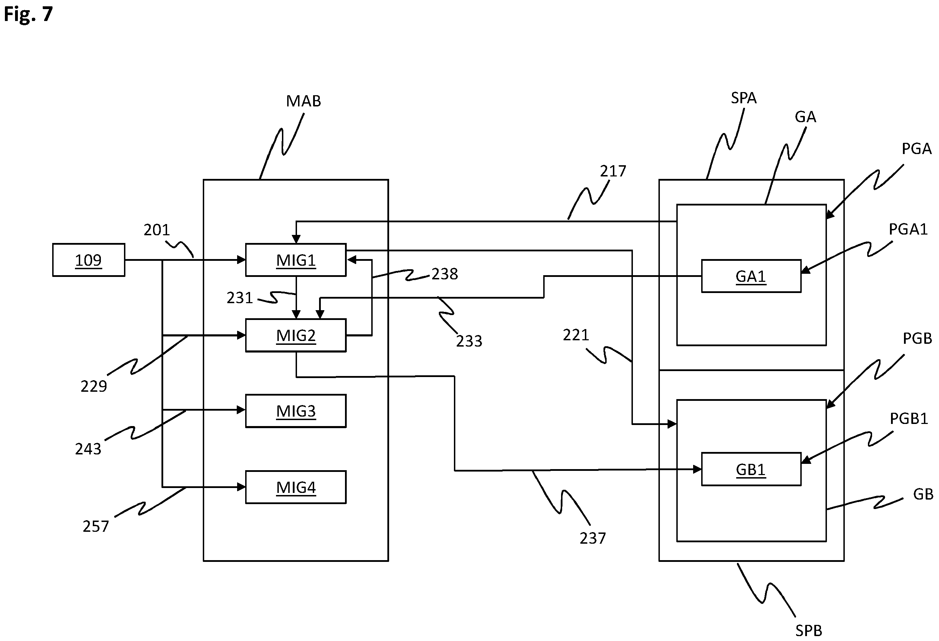

Fig. 7 zeigt eine schematische Darstellung eines Migrationsvorgangs von Datenelementen eines Steuerprogramms A eines Automatisierungssystems 100 gemäß einer Ausführungsform.

In Fig. 7 ist ein Migrationsvorgang eines ersten Datenelements GA auf ein zweites Datenelement GB dargestellt, wobei das erste Datenelement GA ein erstes Datenunterelement GA1 und das zweite Datenelement GB ein zweites Datenunterelement GB1 umfassen. Der dargestellte Migrationsvorgang umfasst das Erzeugen von Migrationsfunktionen in den oben beschriebenen Generierungsschritten und das Durchführen der Abbildung der zu migrierenden Objekte durch die Anwendung entsprechender Migrationsfunktionen.

Zunächst generiert das Übersetzermodul 109 im ersten Generierungsschritt 201 eine erste Migrationsfunktion MIG1, im zweiten Generierungsschritt 229 eine zweite Migrationsfunktion MIG2, im dritten Generierungsschritt 243 eine dritte Migrationsfunktion MIG3 und im vierten Generierungsschritt 257 eine vierte Migrationsfunktion MIG4. Die Migrationsfunktionen sind Bestandteil des Migrationscodes MAB.

Die erste Migrationsfunktion MIG1 ist ausgebildet, das erste Datenelement GA auf das zweite Datenelement GB abzubilden. Die zweite Migrationsfunktion MIG2 ist eingerichtet, das erste Datenunterelement GA1 auf das zweite Datenunterelement GB1 abzubilden. Die gezeigte Ausführungsform ist auf die Abbildung des ersten Datenelements GA auf das zweite Datenelement GB und die Abbildung des ersten Datenunterelements GA1 auf das zweite Datenunterelement GB1 beschränkt. Weitere erste Komponenten MA, zweite Komponenten MB, erste Elemente und zweite Elemente sind nicht dargestellt. Würde das erste Datenunterelemente GA1 keine erste Komponenten MA oder erste Elemente oder das zweite Datenunterelemente GB1 keine zweite Komponenten MB oder zweite Elemente aufweisen, würden die dritte Migrationsfunktion MIG3 und die vierte Migrationsfunktion MIG4 nicht generiert werden.

Zur Ausführung der Migration liest die aufgerufene erste Migrationsfunktion MIG1 in einem ersten Leseschritt 217 den Wert des ersten Datenelements GA im ersten Speicherbereich SPA aus. Hierbei identifiziert die erste Migrationsfunktion MIG1, der der erste Datentyp des ersten Datenelements GA bekannt ist, das erste Datenunterelement GA1 des ersten Datenelements GA. Die Identifikation kann umfassen, dass die erste Migrationsfunktion MIG1 aus der gegebenen Adresse von GA die Adresse von GA1 ableitet. Die erste Migrationsfunktion MIG1 kennt ferner den zweiten Datentyp des zweiten Datenelements GB und identifiziert das zweite Datenunterelement GB1 des zweiten Datenelements GB. Ferner kennt die erste Migrationsfunktion MIG1 die Speicherstelle PGA des ersten Datenelements GA und die Speicherstelle PGA1 des ersten Datenunterelements GA1 im ersten Speicherbereich SPA. Alternativ wird der ersten Migrationsfunktion MIG1 beim Aufrufen der ersten Migrationsfunktion MIG1 die Speicherstelle PGA des ersten Datenelements GA und die Speicherstelle PGA1 des ersten Datenunterelements GA1 im ersten Speicherbereich SPA und/oder die Speicherstelle PGB des zweiten Datenelements GB und die Speicherstelle PGB1 des zweiten Datenunterelements GB1 im zweiten Speicherbereich SPB übergeben. Alternativ kann die erste Migrationsfunktion MIG1 basierend auf der Speicherstelle PGA des ersten Datenelements GA und der Speicherstelle PGB des zweiten Datenelements GB die Speicherstelle PGA1 des ersten Datenunterelements GA1 und die Speicherstelle PGB1 des zweiten Datenunterelements GB1 ableiten. Ferner kennt die erste Migrationsfunktion MIG1 die Speicherstelle PGB des zweiten Datenelements GB und die Speicherstelle PGB1 des zweiten Datenunterelements GB1 im zweiten Speicherbereich SPB.

Darauffolgend ruft die erste Migrationsfunktion MIG1 zum Abbilden des ersten Datenunterelements GA1 auf das zweite Datenunterelement GB1 in einem ersten Teilmigrationsschritt 231 die zweite Migrationsfunktion MIG2 auf. Ferner übergibt die erste Migrationsfunktion MIG1 die Speicherstelle PGA1 des ersten Datenunterelements GA1 im ersten Speicherbereich SPA und die Speicherstelle PGB1 des ersten Datenunterelements GB1 im zweiten Speicherbereich SPB an die zweite Migrationsfunktion MIG2 weiter.

Daraufhin liest die zweite Migrationsfunktion MIG2 in einem zweiten Leseschritt 233 den Wert des ersten Datenunterelements GA1 an der Stelle PGA1 des ersten Datenunterelements GA1 im ersten Speicherbereich SPA aus. Darauffolgend konvertiert die zweite Migrationsfunktion MIG2 in einem zweiten Konvertierungsschritt 235 (in Fig. 7 nicht gezeigt) den ausgelesenen Wert des ersten Datenunterelements GA1 vom dritten Datentyp in einen Wert des vierten Datentyp des zweiten Datenunterelements GB1.

Im Folgenden schreibt die zweite Migrationsfunktion MIG2 in einem zweiten Schreibschritt 237 den konvertierten Wert des ersten Datenunterelements GA1 an die Speicherstelle PGB1 des zweiten Datenunterelements GB1 im zweiten Speicherbereich SPB. Damit ist der Wert des ersten Datenunterelements GA1 auf das zweite Datenunterelement GB1 abgebildet.

Im Folgenden wird die zweite Migrationsfunktion MIG2 in einem ersten Beendungsschritt 238 beendet und die erste Migrationsfunktion MIG1 wird weiter ausgeführt.

Im Folgenden schreibt die erste Migrationsfunktion MIG1 in einem ersten Schreibschritt 221 den Wert des ersten Datenelements GA an die Speicherstelle PGB des zweiten Datenelements GB im zweiten Speicherbereich SPB. Damit ist der Wert des ersten Datenelements GA auf das zweite Datenelement GB abgebildet und der Migrationsvorgang abgeschlossen. In der vorliegenden Ausführungsform umfasst das erste Datenelement GA lediglich ein erstes Datenunterelement GA1 und das zweite Datenelement GB lediglich ein zweites Datenunterelement GB1. Das erfindungsgemäße Verfahren 200 soll nicht hierauf beschränkt sein, und sowohl das erste Datenelement GA als auch das zweite Datenelement GB können eine komplexere Datenstruktur aufweisen und jeweils eine Mehrzahl von ersten Datenunterelementen GA1 und zweiten Datenunterelementen GB1 umfassen, die wiederum eine komplexe Datenstruktur aufweisen können und einerseits eine Mehrzahl von ersten Komponenten MA und/oder ersten Elementen bzw. eine Mehrzahl von zweiten Komponenten MB und/oder eine Mehrzahl von zweiten Elementen umfassen.

Das Verfahren 200 wird rekursiv fortgesetzt, was aus Gründen der Übersichtlichkeit in Fig. 7 nicht dargestellt ist. Bei einer Mehrzahl von ersten Datenunterelementen GA1 und zweiten Datenunterelementen GB1 werden durch die erste Migrationsfunktion MIG1 nacheinander mehrfach zweite Migrationsfunktionen MIG1 aufgerufen. Alternativ wird eine zweite Migrationsfunktion MIG2 mehrfach hintereinander aufgerufen. Die zweite Migrationsfunktionen rufen darauf gegebenenfalls mehrfach dritte Migrationsfunktionen MIG3 und/oder vierte Migrationsfunktionen MIG4 auf. Die zweiten Migrationsfunktionen MIG2 werden solange ausgeführt bis alle dritten Migrationsfunktionen MIG3 und/oder vierte Migrationsfunktionen MIG4 beendet sind. Die erste Migrationsfunktion MIG1 wird solange ausgeführt, bis alle zweiten Migrationsfunktionen MIG2 beendet sind.

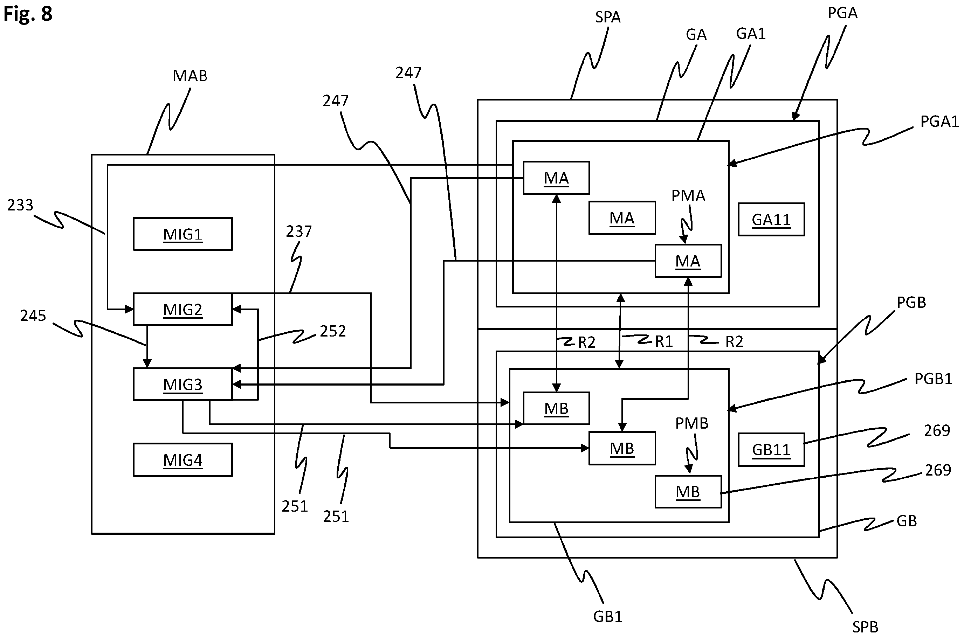

Fig. 8 zeigt eine schematische Darstellung eines Migrationsvorgangs von Datenelementen eines Steuerprogramms A eines Automatisierungssystems 100 gemäß einer weiteren Ausführungsform.

In Fig. 8 ist eine weitere Ausführungsform des Migrationsvorgangs dargestellt. Abweichend zu der Ausführungsform in Fig. 7 umfasst das erste Datenelement GA in Fig. 8 ein erstes Datenunterelemente GA1 und ein weiteres erstes Datenunterelement GA11, von denen das erste Datenunterelement GA1 von einem Verbundtyp ist und drei erste Komponenten MA umfasst. Das weitere erste Datenunterelement GA11 ist von einem anderen, dritten Datentyp, der in der folgenden Erläuterung keine Rolle spielt und daher unberücksichtigt bleibt.

Das zweite Datenunterelement GB umfasst ebenfalls ein zweites Datenunterelement GB1 und ein weiteres zweites Datenunterelement GB11, von denen ebenfalls das zweite Datenunterelement GB1 von einem Verbundtyp ist und drei zweite Komponenten MB umfasst. Das weitere zweite Datenunterelement GB11 ist wiederum von einem anderen, vierten Datentyp, der in der weiteren Erläuterung keine Rolle spielt und somit unberücksichtigt bleibt.

Das erste Datenunterelement GA1 und das zweite Datenunterelement GB1 sind jeweils über eine erste Relation R1 zueinander assoziiert. Das weitere erste Datenunterelement GA11 ist weder mit dem zweiten Datenunterelemente GB1 noch mit dem weiteren zweiten Datenunterelemente GB11 über eine Relation assoziiert. Gleiches gilt für das weitere zweite Datenunterelement GB11, das ebenfalls weder mit dem ersten Datenunterelemente GA1 noch mit dem weiteren ersten Datenunterelemente GA11 assoziiert ist.

Zwei erste Komponenten MA des ersten Datenunterelements GA1 sind über eine zweite Relation R2 mit zwei zweiten Komponenten MB des zweiten Datenunterelements GB1 assoziiert. Eine erste Komponente MA des ersten Datenunterelements GA1 ist mit keiner zweiten Komponente MB des zweiten Datenunterelements GB1 assoziiert. Gleiches gilt für eine zweite Komponente MB des zweiten Datenunterelements GB1, die wiederum mit keiner ersten Komponente MA des ersten Datenunterelements GA1 assoziiert ist.

Zum Abbilden des ersten Datenunterelements GA1 auf das zu diesem ersten Datenunterelement GA1 über die erste Relation R1 assoziierte zweite Datenunterelement GB1 ruft die zweite Migrationsfunktion MIG2 für jedes über R2 assoziierte Paar erster Komponenten MA und zweiter Komponenten MB jeweils eine dritte Migrationsfunktion MIG3 auf, wobei hierbei die Speicheradressen der jeweiligen ersten Komponenten MA und zweiten Komponenten MB übergeben werden. Zuvor wurde die zweite Migrationsfunktion MIG2, wie zu Fig. 7 erläutert, von der ersten Migrationsfunktion MIG1 aufgerufen, wobei hierbei der zweiten Migrationsfunktion MIG2 die entsprechenden Speicherstellen des ersten Datenunterelements GA1 und des zweiten Datenunterelements GB1 übermittelt wurden, dies ist in Fig. 8 der Übersicht halber nicht dargestellt.

Die zweite Migrationsfunktion MIG2 wurde unter Kenntnis der Datentypen der ersten Komponenten MA des ersten Datenunterelements GA1 und der zweiten Komponenten MB des zweiten Datenunterelements GB1 generiert und ruft folglich in Kenntnis der Datentypen der ersten Komponenten MA des ersten Datenunterelements GA1 und der Datentypen der zweiten Komponenten MB des zweiten Datenunterelements GB1 in einem zweiten Teilmigrationsschritt 245 eine entsprechende dritte Migrationsfunktion MIG3 zum Abbilden der ersten Komponente MA des ersten Datenunterelements GA1 auf die erste zweite Komponente MB des zweiten Datenunterelements GB1 auf. Die dritte Migrationsfunktion MIG3 bildet zunächst eine erste Komponente MA auf eine zweite Komponente MB ab, beispielsweise die linke erste Komponenten MA auf die linke zweite Komponente MB, und wird darauf zunächst beendet. Sind die ersten Komponenten MA und die zweiten Komponenten MB jeweils vom gleichen Datentyp, wird die dritte Migrationsfunktion MIG2 erneut aufgerufen und bildet die rechte erste Komponente MA auf die mittlere zweite Komponente MB ab. Darauf wird die dritte Migrationsfunktion MIG3 in einem zweiten Beendigungsschritt 252 beendet und die zweite Migrationsfunktion MIG2 wird weiter ausgeführt. Sind die ersten Komponenten MA und die zweiten Komponenten MB jeweils nicht vom gleichen Datentyp, werden zum Abbilden der ersten Komponenten MA auf die zweiten Komponenten MB zwei verschiedene dritte Migrationsfunktionen aufgerufen.

Die dritte Migrationsfunktion MIG3 erhält von der zweiten Migrationsfunktion MIG2 die Speicherstellen der linken ersten Komponente MA im ersten Speicherbereich SPA und die Speicherstelle der linken zweiten Komponenten MB im zweiten Speicherbereich SPB. Abgebildet werden von der dritten Migrationsfunktion MIG3 nur die linke erste Komponenten MA, die über die zweite Relation R2 mit den linken zwei zweiten Komponenten MB des zweiten Datenunterelements GB1 in Relation steht. Darauf wird die dritte Migrationsfunktion MIG3 beendet und von der zweiten Migrationsfunktion MIG2 erneut aufgerufen, um die rechte erste Komponente MA auf die mittlere zweite Komponente MB abzubilden. Hierzu erhält die dritte Migrationsfunktion MIG3 von der zweiten Migrationsfunktion MIG2 die Speicherstellen der rechten ersten Komponente MA im ersten Speicherbereich SPA und die Speicherstelle der mittleren zweiten Komponenten MB im zweiten Speicherbereich SPB. Abgebildet wird in dieser Ausführung der dritten Migrationsfunktion MIG3 nur die rechte erste Komponente MA.

Zum Abbilden liest die dritte Migrationsfunktion MIG3 in beiden Fällen in einem dritten Leseschritt 247 jeweils einen Wert einer ersten Komponente MA des ersten Datenunterelements GA1 aus. In einem dritten Konvertierungsschritt 249 (in Figur 8 nicht gezeigt) konvertiert die dritte Migrationsfunktion den ausgelesenen Wert der ersten Komponente MA in den sechsten Datentyp der zweiten Komponente MB des zweiten Datenunterelements GB1. In einem dritten Schreibschritt 251 schreibt die dritte Migrationsfunktion MIG3 den konvertierten Wert an eine Stelle der zweiten Komponente MB im zweiten Speicherbereich SPB. Hierdurch ist der Wert der ersten Komponente MA auf die zweite Komponente MB abgebildet.

Die mittlere erste Komponente MA, die über keine zweite Relation R2 mit einer zweiten Komponente MB des zweiten Datenunterelements GB1 assoziiert ist, wird nicht über eine dritte Migrationsfunktion MIG3 auf das zweite Datenunterelement GB1 abgebildet. Die Information der mittleren ersten Komponente MA kann somit nicht in das zweite Datenelement GB übertragen werden.

Nach Abbilden der beiden ersten Komponenten MA auf die beiden zweiten Komponenten MB wird die dritte Migrationsfunktion MIG3 im zweiten Beendigungsschritt 252 beendet und die zweite Migrationsfunktion MIG2 wird weiter ausgeführt. Sind weitere erste Komponenten MA auf weitere zweite Komponenten MB oder weitere erste Elemente auf weitere zweite Elemente abzubilden, führt die zweite Migrationsfunktion MIG2 dies aus und ruft weitere dritte Migrationsfunktionen MIG3 und/oder vierte Migrationsfunktionen MIG4 auf. Sind keine weiteren Komponenten oder Elemente zu migrieren wird die zweite Migrationsfunktion MIG2 im ersten Beendigungsschritt 238 beendet. Hierdurch ist der Wert des ersten Datenunterelements GA1 auf das zweite Datenunterelement GB1 abgebildet.

Das weitere erste Datenunterelement GA11, das mit keinem der zwei zweiten Datenunterelemente GB1, GB11 über eine erste Relation R1 assoziiert ist, wird in der Datenmigration nicht auf ein zweites Datenunterelement GB1, GB11 abgebildet. Die Information des weiteren ersten Datenunterelements GA11 kann somit nicht in das zweite Datenelement GB übertragen werden.

Das weitere zweite Datenunterelement GB11, das mit keinem der ersten Datenunterelemente GA1 assoziiert ist, und die rechte zweite Komponente MB, die mit keiner der ersten Komponenten MA assoziiert ist, werden in einem Initialisierungsschritt 269 initialisiert, und der Wert des weiteren zweiten Datenunterelements GB11 und der Wert der zweiten Komponente MB werden auf einen Initialwert gesetzt. Alternativ können alle zweiten Datenunterelemente GB1, zweiten Komponenten MB und/oder zweiten Elemente des zweiten Datenelements GB vor dem Ausführen der Migrationsfunktionen initialisiert werden. Durch die Migration beziehungsweise das Ausführen der Migrationsfunktionen werden die Initialwerte der zweiten Datenunterelemente GB1, zweiten Komponenten MB und/oder zweiten Elemente des zweiten Datenelements GB mit Werten entsprechender erster Datenunterelemente GA1, erster Komponenten MA und/oder erster Elemente des ersten Datenelements GA überschrieben.

Hiermit ist die Migration des ersten Datenunterelements GA1 auf das zweite Datenunterelement GB1 abgeschlossen. Durch die Anwendung der zweiten Migrationsfunktion und der dritten Migrationsfunktion auf das erste Datenunterelement GA1, das vom Verbundtyp ist, konnte ein Teil des globalen Zustands des ersten Steuerprogramms A, der durch den Wert des ersten Datenelements GA dargestellt ist, auf das zweite Datenelement GB abgebildet werden. Die Objekte des ersten Datenelements GA, für die im zweiten Datenelement GB keine Entsprechung vorhanden ist, insbesondere das dargestellte weitere erste Datenunterelement GA11, das mit keinem zweiten Datenunterelement GB1 über eine erste Relation R1 assoziiert ist, und die dargestellte mittlere erste Komponente MA, die mit keiner zweiten Komponente MB über eine zweite Relation R2 assoziiert ist, konnten im Migrationsvorgang nicht abgebildet werden.

Das zweite Datenelement GB umfasst nach Abschluss des Migrationsvorgangs Werte von Objekten des ersten Elements, die durch Anwendung der entsprechenden Migrationsfunktionen abgebildet werden konnten, und Objekte, deren Werte einen Initialwert enthalten, insbesondere das weitere zweite Datenunterelement GB11, das mit keinem ersten Datenunterelement GA1 über eine erste Relation R1 assoziiert ist, und die rechte zweite Komponente MB, die zu keiner ersten Komponente MA über eine zweite Relation R2 assoziiert ist.

Weitere Schritte, die ggf. zur vollständigen Migration des durch den Wert des ersten Datenelements GA dargestellten globalen Zustands des ersten Steuerprogramms A und des Automatisierungssystems 100 zum Zeitpunkt des zuletzt auf Basis des ersten Steuerprogramms A ausgeführten Steuerzyklus sind in Fig. 8 nicht beschrieben. Eine Datenmigration eines ersten Datenunterelements GA1 von einem Feldtyp auf ein zweites Datenunterelement GB1 ebenfalls von einem Feldtyp wird analog zu den in Fig. 8 beschriebenen Migrationsvorgang durchgeführt. Ein Unterschied zu der oben beschriebenen Migration eines Verbundtyps ergibt sich dadurch, dass die ersten Elemente eines Datenunterelements GA1 vom Feldtyp alle den gleichen Datentyp haben, was ebenfalls für die ersten Elemente eines Datenunterelements GA1 vom Feldtyp gilt, sodass nur eine vierte Migrationsfunktion MIG4 benötigt wird, die in einer Schleife oder in geschachtelten Schleifen ausgeführt wird und nacheinander einzeln erste Elemente auf zweite Elemente abbildet.

### Bezugszeichenliste

- 100: Automatisierungssystem
- 101: Steuerung
- 103: Masterteilnehmer
- 105: Slaveteilnehmer
- 107: Bussystem
- 109: Compilermodul

- A: erstes Steuerprogramm
- PA: erster ausführbarer Code
- MAB: Migrationscode
- SP: Speicher
- SPA: erster Speicherbereich
- GA: erstes Datenelement
- PGA: Speicherstelle des ersten Datenelements
- TGAD: Definition des ersten Datentyps
- GA1: erstes Datenunterelement
- GA11: weiteres erstes Datenunterelement
- PGA1: Speicherstelle des ersten Datenunterelements
- MA: erste Komponente
- PMA: Speicherstelle der ersten Komponente
- B: zweites Steuerprogramm
- QB: Quelltext des zweiten Steuerprogramms
- PB: zweiter ausführbarer Code
- SPB: erster Speicherbereich
- GB: zweites Datenelement
- PGB: Speicherstelle des zweiten Datenelements
- TGBD: Definition des zweiten Datentyps
- GB1: zweites Datenunterelement
- GB11: weiteres zweites Datenunterelement
- PGB1: Speicherstelle des zweiten Datenunterelements
- MB: zweite Komponente
- PMB: Speicherstelle der zweiten Komponente
- R1: erste Relation
- R2: zweite Relation
- MIG1: erste Migrationsfunktion
- MIG2: zweite Migrationsfunktion
- MIG3: dritte Migrationsfunktion
- MIG4: vierte Migrationsfunktion

- 200: Verfahren zur Aktualisierung eines Steuerprogramms
- 201: erster Generierungsschritt
- 202: Ersetzungsschritt
- 203: Unterbrechungsschritt
- 204: erster Lese/Schreibschritt
- 205: erster Bestimmungsschritt
- 206: zweiter Lese/Schreibschritt
- 207: Migrationsschritt
- 209: erster Überprüfungsschritt
- 211: erster Steuerschritt
- 213: zweiter Steuerschritt
- 215: zweiter Überprüfungsschritt
- 217: erster Leseschritt
- 219: erster Konvertierungsschritt
- 221: erster Schreibschritt
- 223: erster Identifikationsschritt
- 225: zweiter Identifikationsschritt
- 227: dritter Identifikationsschritt
- 229: zweiter Generierungsschritt
- 231: erster Teilmigrationsschritt
- 233: zweiter Leseschritt
- 235: zweiter Konvertierungsschritt
- 237: zweiter Schreibschritt
- 238: erster Beendigungsschritt
- 239: vierter Identifikationsschritt
- 241: fünfter Identifikationsschritt
- 243: dritter Generierungsschritt
- 245: zweiter Teilmigrationsschritt
- 247: dritter Leseschritt
- 249: dritter Konvertierungsschritt
- 251: dritter Schreibschritt
- 252: zweiter Beendigungsschritt
- 253: sechster Identifikationsschritt
- 255: siebter Identifikationsschritt
- 257: vierter Generierungsschritt
- 259: Indexbestimmungsschritt
- 261: dritter Teilmigrationsschritt
- 263: vierter Leseschritt
- 265: vierter Konvertierungsschritt
- 267: vierter Schreibschritt
- 268: dritter Rückgabeschritt
- 269: Initialisierungsschritt

- 301: Kompiliervorgang
- 303: Übersetzungsschritt
- 305: erster Erzeugungsschritt
- 307: zweiter Erzeugungsschritt
- 309: Eingabeschritt
- 311: Ausgabeschritt

## Patentansprüche

1. Verfahren (200) zum Aktualisieren eines Steuerprogramms eines Automatisierungssystems (100) mit Datenmigration eines Programmzustands des Steuerprogramms, wobei eine Steuerung (101) des Automatisierungssystems (100) ein erstes Steuerprogramm (A) und ein zweites Steuerprogramm (B) umfasst, wobei das erste Steuerprogramm (A) zum Steuern des Automatisierungssystems (100) ausgeführt wird, wobei das zweite Steuerprogramm (B) eine Aktualisierung des ersten Steuerprogramms (A) ist, wobei das erste Steuerprogramm (A) ein erstes Datenelement (GA) von einem ersten Datentyp umfasst, das einen Programmzustand des ersten Steuerprogramms (A) beschreibt und in einem ersten Speicherbereich (SPA) der Steuerung (101) gespeichert ist, wobei das erste Datenelement (GA) eine Mehrzahl von ersten Datenunterelementen (GA1) umfasst, die zur Ausführung des ersten Steuerprogramms (A) benötigt werden, wobei das zweite Steuerprogramm (B) ein zweites Datenelement (GB) eines zweiten Datentyps umfasst, das einen Programmzustand des zweiten Steuerprogramms (B) beschreibt und in einem zweiten Speicherbereich (SPB) gespeichert ist, und wobei das zweite Datenelement (GB) eine Mehrzahl von zweiten Datenunterelementen (GB1) umfasst, die zur Ausführung des zweiten Steuerprogramms (B) benötigt werden, umfassend:
Initialisieren des zweiten Datenelements (GB) in einem Initialisierungsschritt (269), wobei das Initialisieren ein Setzen eines Werts des zweiten Datenelements (GB) auf einen vorbestimmten Initialwert umfasst, und wobei das Initialisieren des zweiten Datenelements (GB) ein Initialisieren aller zweiten Datenunterelemente (GB1) des zweiten Datenelements umfasst;
Generieren einer ersten Migrationsfunktion (MIG1) zum Abbilden des ersten Datenelements (GA) auf das zweite Datenelement (GB) in einem ersten Generierungsschritt (201),
Unterbrechen des Ausführens des ersten Steuerprogramms (A) in einem Unterbrechungsschritt (203),
Bestimmen eines Werts des ersten Datenelements (GA) in einem ersten Bestimmungsschritt (205), wobei der bestimmte Wert des ersten Datenelements (GA) einen Programmzustand des ersten Steuerprogramms (A) zum Zeitpunkt der Unterbrechung beschreibt, und
Abbilden des Werts des ersten Datenelements (GA) auf das zweite Datenelement (GB) und Schreiben von Werten von ersten Datenunterelementen (GA1) in zweite Datenunterelemente (GB1), die mit einem Initialwert initiiert sind,
durch Ausführen der ersten Migrationsfunktion (MIG1) in einem Migrationsschritt (207), **dadurch gekennzeichnet, dass** das Steuerprogramm (A) zyklisch ausgeführt wird, und dass der Initialisierungsschritt (269) zeitlich vor dem Migrationsschritt (207) ausgeführt wird.

2. Verfahren (200) nach Anspruch 1, ferner umfassend:
Überprüfen, ob der Wert des ersten Datenelements (GA) hinreichend genau auf das zweite Datenelement (GB) abbildbar ist, in einem ersten Überprüfungsschritt (209), wobei der Wert des ersten Datenelements (GA) hinreichend genau auf das zweite Datenelement (GB) abbildbar ist, wenn der Wert des ersten Datenelements (GA) in dem zweiten Datentyp darstellbar ist,
Falls der Wert des ersten Datenelements (GA) auf das zweite Datenelement (GB) abbildbar ist, zyklisches Aufrufen des zweiten Steuerprogramms (B) unter Berücksichtigung des zweiten Datenelements (GB) und Steuern des Automatisierungssystems (100) auf Basis des zweiten Steuerprogramms (B) in einem ersten Steuerschritt (211), und
Falls der Wert des ersten Datenelements (GA) nicht auf das zweite Datenelement (GB) abbildbar ist, Fortsetzen des zyklischen Aufrufens des ersten Steuerprogramms (A) unter Berücksichtigung des ersten Datenelements (GA) und Steuern des Automatisierungssystems (100) auf Basis des ersten Steuerprogramms (A) in einem zweiten Steuerschritt (213).

3. Verfahren (200) nach Anspruch 1 oder 2, wobei der Wert des ersten Datenelements (GA) ferner nicht hinreichend genau auf das zweite Datenelement (GB) abbildbar ist, wenn ein Abbilden des Werts des ersten Datenelements (GA) auf das zweite Datenelement (GB) im Migrationsschritt (207) einen vorbestimmten Zeitabschnitt überschreitet.

4. Verfahren (200) nach Anspruch 1, 2 oder 3, ferner umfassend:
Überprüfen, ob im ersten Generierungsschritt (201) die erste Migrationsfunktion (MIG1) generiert werden konnte, in einem zweiten Überprüfungsschritt (215), und
Falls im ersten Generierungsschritt (201) die erste Migrationsfunktion (MIG1) nicht generiert werden konnte, Fortsetzen des zyklischen Aufrufens des ersten Steuerprogramms (A) unter Berücksichtigung des ersten Datenelements (GA) und Steuern des Automatisierungssystems (100) auf Basis des ersten Steuerprogramms (A) in einem zweiten Steuerschritt (213).

5. Verfahren (200) nach einem der voranstehenden Ansprüche, wobei die erste Migrationsfunktion (MIG1) eingerichtet ist, Daten des ersten Datentyps im ersten Speicherbereich (SPA) auszulesen, ausgelesene Daten des ersten Datentyps in Daten des zweiten Datentyps zu konvertieren und in den zweiten Datentyp konvertierte Daten im zweiten Speicherbereich (SPB) zu speichern, und wobei der Migrationsschritt (207) umfasst:
Auslesen des Werts des ersten Datenelements (GA) an einer Speicherstelle (PGA) des ersten Datenelements (GA) im ersten Speicherbereich (SPA) durch die erste Migrationsfunktion (MIG1) in einem ersten Leseschritt (217),
Konvertieren des Werts des ersten Datenelements (GA) in einen Wert des zweiten Datentyps durch die erste Migrationsfunktion (MIG1) in einem ersten Konvertierungsschritt (219), und
Schreiben des in den zweiten Datentyp umgewandelten Werts des ersten Datenelements (GA) an eine Speicherstelle (PGB) des zweiten Datenelements (GB) im zweiten Speicherbereich (SPB) durch die erste Migrationsfunktion (MIG1) in einem ersten Schreibschritt (221).

6. Verfahren nach einem der voranstehenden Ansprüche, wobei der erste Generierungsschritt (201) ferner umfasst:
Identifizieren des Datentyps des ersten Datenelements (GA) als den ersten Datentyp und identifizieren des Datentyps des zweiten Datenelements (GB) als den zweiten Datentyp in einem ersten Identifikationsschritt (223), und wobei die erste Migrationsfunktion (MIG1) auf Basis des identifizierten ersten Datentyps und des identifizierten zweiten Datentyps generiert wird.

7. Verfahren nach einem der voranstehenden Ansprüche, wobei der erste Generierungsschritt (201) ferner umfasst:
Falls der erste Datentyp des ersten Datenelements (GA) und der zweite Datentyp des zweiten Datenelements (GB) jeweils ein Verbundtyp ist und falls das erste Datenelement (GA) wenigstens ein erstes Datenunterelement (GA1) von einem dritten Datentyp und das zweite Datenelement (GB) wenigstens ein zweites Datenunterelement (GB1) von einem vierten Datentyp umfassen,
Identifizieren des Datentyps des ersten Datenunterelements (GA1) als den dritten Datenuntertyp und des Datentyps des zweiten Datenunterelements (GB1) als den vierten Datentyp in einem zweiten Identifikationsschritt (225),
Generieren einer zweiten Migrationsfunktion (MIG2) zum Abbilden des ersten Datenunterelements (GA1) auf das zweite Datenunterelement (GB1) auf Basis des identifizierten dritten Datentyps, des identifizierten vierten Datentyps in einem zweiten Generierungsschritt (229), wobei die zweite Migrationsfunktion (MIG2) eingerichtet ist, Datenelemente des dritten Datentyps im ersten Speicherbereich (SPA) auszulesen, ausgelesene Daten des dritten Datentyps in den vierten Datentyp zu konvertieren und in den vierten Datentyp konvertierte Daten im zweiten Speicherbereich (SPB) zu speichern.

8. Verfahren nach Anspruch 7, wobei der Migrationsschritt (207) umfasst:
Aufrufen der zweiten Migrationsfunktion (MIG2) durch die erste Migrationsfunktion (MIG1) und Ausführen der zweiten Migrationsfunktion (MIG2) zum Abbilden eines Werts des ersten Datenunterelements (GA1) auf das zweite Datenunterelement (GB1) in einem ersten Teilmigrationsschritt (231), und wobei der erste Teilmigrationsschritt (231) umfasst:
Auslesen eines Werts des ersten Datenunterelements (GA1) an einer Speicherstelle (PGA1) des ersten Datenunterelements (GA1) im ersten Speicherbereich (SPA) durch die zweite Migrationsfunktion (MIG2) in einem zweiten Leseschritt (233),
Konvertieren des Werts des ersten Datenunterelements (GA1) in den vierten Datentyp durch die zweite Migrationsfunktion (MIG2) in einem zweiten Konvertierungsschritt (235), und
Schreiben des in den vierten Datentyp umgewandelten Werts des ersten Datenunterelements (GA1) an eine Speicherstelle (PGB1) des zweiten Datenunterelements (GB) im zweiten Speicherbereich (SPB) durch die zweite Migrationsfunktion (MIG2) in einem zweiten Schreibschritt (237).

9. Verfahren nach Anspruch 7 oder 8, wobei der erste Generierungsschritt (201) ferner umfasst:
Falls der dritte Datentyp des ersten Datenunterelements (GA1) und der vierte Datentyp des zweiten Datenunterelements (GB1) ein Verbundtyp sind, und falls das erste Datenunterelement (GA1) wenigstens eine erste Komponente (MA) eines fünften Datentyps und das zweite Datenunterelement (GB1) wenigstens eine zweite Komponente (MB) eines sechsten Datentyps umfassen, Identifizieren des Datentyps der ersten Komponente (MA) als den fünften Datentyp und des Datentyps der zweiten Komponente (MB) als den sechsten Datentyp in einem vierten Identifikationsschritt (239), und
Generieren einer dritten Migrationsfunktion (MIG3) zum Abbilden der ersten Komponente (MA) auf die zweite Komponente (MB) auf Basis des identifizierten fünften Datentyps und sechsten Datentyps in einem dritten Generierungsschritt (243), wobei die dritte Migrationsfunktion (MIG3) eingerichtet ist, Daten des fünften Datentyps im ersten Speicherbereich (SPA) auszulesen, ausgelesene Daten in den sechsten Datentyp zu konvertieren und in den sechsten Datentyp (MB) konvertierte Daten im zweiten Speicherbereich (SPB) zu speichern.

10. Verfahren nach Anspruch 9, wobei der Migrationsschritt (207) umfasst:
Aufrufen der dritten Migrationsfunktion (MIG3) durch die zweite Migrationsfunktion (MIG2) und Ausführen der dritten Migrationsfunktion (MIG3) in einem zweiten Teilmigrationsschritt (245), und wobei der zweite Teilmigrationsschritt (245) umfasst:
Auslesen eines Werts der ersten Komponente (MA) an einer Speicherstelle (PMA) der ersten Komponente (MA) im ersten Speicherbereich (SPA) durch die dritte Migrationsfunktion (MIG3) in einem dritten Leseschritt (247),
Konvertieren des Werts der ersten Komponente (MA) in den sechsten Datentyp durch die dritte Migrationsfunktion (MIG3) in einem dritten Konvertierungsschritt (249), und
Schreiben des in den sechsten Datentyp konvertierten Werts der ersten Komponente (MA) an eine Speicherstelle (PMB) der zweiten Komponente (MB) im zweiten Speicherbereich (SPB) durch die dritte Migrationsfunktion (MIG3) in einem dritten Schreibschritt (251).

11. Verfahren nach einem der voranstehenden Ansprüche 7 bis 10, wobei der erste Generierungsschritt (201) ferner umfasst:
Falls der dritte Datentyp und der vierte Datentyp ein Feldtyp sind, und
Falls das erste Datenunterelement (GA1) und das zweite Datenunterelement (GB1) eine identische Anzahl von Dimensionen umfassen, wobei das erste Datenunterelement (GA1) in wenigstens einer Dimension gemäß einem ersten Indexbereich [U0,..., UM] indizierte erste Elemente von einem siebten Datentyp und das zweite Datenunterelement (GB1) in wenigstens einer Dimension gemäß einem zweiten Indexbereich [X0,..., XN] indizierte zweite Elemente von einem achten Datentyp aufweisen, und
Falls für die wenigstens eine Dimension der erste Indexbereich [U0,..., UM] und der zweite Indexbereich [X0,..., XN] gleich sind,
Identifizieren des Datentyps jedes gemäß dem ersten Indexbereich [U0,..., UM] indizierten ersten Elements als den siebten Datentyp und den Datentyp jedes gemäß dem zweiten Indexbereich [X0,..., XN] indizierten zweiten Elements als den achten Datentyp, in einem sechsten Identifikationsschritt (253),
Generieren einer vierten Migrationsfunktion zum Abbilden von ersten Elementen auf zweite Elemente auf Basis des identifizierten siebten Datentyps und achten Datentyps in einem vierten Generierungsschritt (257), wobei die vierte Migrationsfunktion eingerichtet ist, Daten des siebten Datentyps im ersten Speicherbereich (SPA) auszulesen, ausgelesene Daten in einen Wert des achten Datentyps umzuwandeln und umgewandelte Daten im zweiten Speicherbereich (SPB) zu speichern.

12. Verfahren nach Anspruch 11, wobei der erste Generierungsschritt (201) ferner umfasst:
Falls der erste Indexbereich [U0,..., UM] und der zweite Indexbereich [X0,..., XN] nicht gleich sind, Bestimmen eines Intervalls [R, S] in den Indexbereichen des ersten Datenunterelements (GA1) und des zweiten Datenunterelements (GB1) mit R = max(X0, U0) und S = min(XN, UM) in einem Indexbestimmungsschritt (259), wobei R dem Maximum der beiden Werte X0 und U0 und S dem Minimum der beiden Werte XN und UM entspricht,
Identifizieren des Datentyps jedes gemäß dem Intervall [R, S] oder dem ersten Indexbereich [U0,..., UM] indizierten ersten Elements als den siebten Datentyp und den Datentyp jedes gemäß einem Intervall [R, S] oder dem zweiten Indexbereich [X0,..., XN] indizierten zweiten Elements als den achten Datentyp in einem sechsten Identifikationsschritt (253), und ,
Generieren einer vierten Migrationsfunktion zum Abbilden von ersten Elementen auf zweite Elemente auf Basis des identifizierten siebten Datentyps und des achten Datentyps in einem vierten Generierungsschritt (257), wobei die vierte Migrationsfunktion eingerichtet ist, Daten des siebten Datentyps im ersten Speicherbereich (SPA) auszulesen, ausgelesene Daten in den achten Datentyp zu konvertieren und in den achten Datentypkonvertierte Daten im zweiten Speicherbereich (SPB) zu speichern.

13. Verfahren nach Anspruch 11 oder 12, wobei der erste Teilmigrationsschritt (231) umfasst:
Aufrufen der vierten Migrationsfunktion durch die zweite Migrationsfunktion (MIG2) und Ausführen der vierten Migrationsfunktion (MIG4) zum Abbilden der ersten Elemente auf die zweiten Elemente in einem dritten Teilmigrationsschritt (261), und wobei der dritte Teilmigrationsschritt (261) umfasst:
Auslesen eines Werts eines ersten Elements an einer Speicherstelle des ersten Elements im ersten Speicherbereich (SPA) durch die vierte Migrationsfunktion in einem vierten Leseschritt (263),
Konvertieren des Werts des ersten Elements in den achten Datentyp durch die vierte Migrationsfunktion in einem vierten Konvertierungsschritt (265), und
Schreiben des in den achten Datentyp konvertierten Werts des ersten Elements an eine Speicherstelle des zweiten Elements im zweiten Speicherbereich (SPB) durch die vierte Migrationsfunktion in einem vierten Schreibschritt (267).

14. Verfahren (200) nach einem der voranstehenden Ansprüche 2 bis 13, wobei der Wert des ersten Datenelements (GA) ferner nicht hinreichend genau auf einen Wert des zweiten Datentyps abbildbar ist, wenn ein Wert eines ersten Datenunterelements (GA1) nicht hinreichend genau auf ein zweites Datenunterelement (GB1) abbildbar ist, und/oder wenn ein Wert einer ersten Komponente (MA) nicht hinreichend genau auf eine zweite Komponente (MB) abbildbar ist, und/oder wenn ein Wert eines ersten Elements nicht hinreichend genau auf ein zweites Element abbildbar ist, und wobei der erste Überprüfungsschritt (209) ferner umfasst:
Überprüfen, ob ein Wert eines ersten Datenunterelements (GA1) hinreichend genau auf ein zweites Datenunterelement (GB1) abbildbar ist, Überprüfen, ob ein Wert einer ersten Komponente (MA) hinreichend genau auf eine zweite Komponente (MB) abbildbar ist, und
Überprüfen, ob ein Wert eines ersten Elements hinreichend genau auf ein zweites Element abbildbar ist.

15. Verfahren nach einem der voranstehenden Ansprüche, wobei die Steuerung ferner ein Übersetzermodul (109) zum Übersetzen eines Steuerprogramms umfasst, und wobei der erste Generierungsschritt (201) durch das Übersetzermodul (109) ausgeführt wird.

## Claims

1. Method (200) for updating a control program of an automation system (100) with data migration of a program state of the control program, wherein a controller (101) of the automation system (100) comprises a first control program (A) and a second control program (B), wherein the first control program (A) is executed for controlling the automation system (100), wherein the second control program (B) is an update of the first control program (A), wherein the first control program (A) comprises a first data element (GA) of a first data type, which describes a program state of the first control program (A) and is stored in a first memory area (SPA) of the controller (101), wherein the first data element (GA) comprises a plurality of first data sub-elements (GA1) required for executing the first control program (A), wherein the second control program (B) comprises a second data element (GB) of a second data type, which describes a program state of the second control program (B) and is stored in a second memory area (SPB), and wherein the second data element (GB) comprises a plurality of second data sub-elements (GB1) required for executing the second control program (B), comprising:
initializing the second data element (GB) in an initialization step (269), wherein the initializing comprises setting a value of the second data element (GB) to a predetermined initial value, and wherein initializing the second data element (GB) comprises initializing all second data sub-elements (GB1) of the second data element;
generating a first migration function (MIG1) for mapping the first data element (GA) to the second data element (GB) in a first generation step (201), interrupting the execution of the first control program (A) in an interruption step (203),
determining a value of the first data element (GA) in a first determination step (205), wherein the determined value of the first data element (GA) describes a program state of the first control program (A) at the time of the interruption, and
mapping the value of the first data element (GA) to the second data element (GB) and writing values of first data sub-elements (GA1) to second data sub-elements (GB1), which are initiated with an initial value, by executing the first migration function (MIG1) in a migration step (207), **characterized in that** the control program (A) is executed cyclically, and **in that** the initialization step (269) is executed at a time before the migration step (207).

2. Method (200) according to Claim 1, furthermore comprising:
checking whether the value of the first data element (GA) is mappable sufficiently accurately to the second data element (GB) in a first checking step (209), wherein the value of the first data element (GA) is mappable sufficiently accurately to the second data element (GB) if the value of the first data element (GA) is representable in the second data type,
if the value of the first data element (GA) is mappable to the second data element (GB), cyclically calling the second control program (B) taking account of the second data element (GB) and controlling the automation system (100) on the basis of the second control program (B) in a first control step (211), and
if the value of the first data element (GA) is not mappable to the second data element (GB), continuing the cyclic calling of the first control program (A) taking account of the first data element (GA) and controlling the automation system (100) on the basis of the first control program (A) in a second control step (213).

3. Method (200) according to Claim 1 or 2, wherein the value of the first data element (GA) is furthermore not mappable sufficiently accurately to the second data element (GB) if mapping the value of the first data element (GA) to the second data element (GB) in the migration step (207) exceeds a predetermined time period.

4. Method (200) according to Claim 1, 2 or 3, furthermore comprising:
checking whether the first migration function (MIG1) was able to be generated in the first generation step (201), in a second checking step (215), and
if the first migration function (MIG1) was not able to be generated in the first generation step (201), continuing the cyclic calling of the first control program (A) taking account of the first data element (GA) and controlling the automation system (100) on the basis of the first control program (A) in a second control step (213).

5. Method (200) according to any one of the preceding claims, wherein the first migration function (MIG1) is configured to read out data of the first data type in the first memory area (SPA), to convert read-out data of the first data type into data of the second data type and to store data converted into the second data type in the second memory area (SPB), and wherein the migration step (207) comprises:
reading out the value of the first data element (GA) at a memory location (PGA) of the first data element (GA) in the first memory area (SPA) by way of the first migration function (MIG1) in a first read step (217) ,
converting the value of the first data element (GA) into a value of the second data type by way of the first migration function (MIG1) in a first conversion step (219), and
writing the value of the first data element (GA) that has been converted into the second data type to a memory location (PGB) of the second data element (GB) in the second memory area (SPB) by way of the first migration function (MIG1) in a first write step (221).

6. Method according to any one of the preceding claims, wherein the first generation step (201) furthermore comprises:
identifying the data type of the first data element (GA) as the first data type and identifying the data type of the second data element (GB) as the second data type in a first identification step (223), and wherein the first migration function (MIG1) is generated on the basis of the identified first data type and the identified second data type.

7. Method according to any one of the preceding claims, wherein the first generation step (201) furthermore comprises:
if the first data type of the first data element (GA) and the second data type of the second data element (GB) are each a composite type and if the first data element (GA) comprises at least one first data sub-element (GA1) of a third data type and the second data element (GB) comprises at least one second data sub-element (GB1) of a fourth data type, identifying the data type of the first data sub-element (GA1) as the third data sub-type and the data type of the second data sub-element (GB1) as the fourth data type in a second identification step (225) ,
generating a second migration function (MIG2) for mapping the first data sub-element (GA1) to the second data sub-element (GB1) on the basis of the identified third data type, the identified fourth data type in a second generation step (229), wherein the second migration function (MIG2) is configured to read out data elements of the third data type in the first memory area (SPA), to convert read-out data of the third data type into the fourth data type and to store data converted into the fourth data type in the second memory area (SPB).

8. Method according to Claim 7, wherein the migration step (207) comprises:
calling the second migration function (MIG2) by way of the first migration function (MIG1) and executing the second migration function (MIG2) for mapping a value of the first data sub-element (GA1) to the second data sub-element (GB1) in a first partial migration step (231), and wherein the first partial migration step (231) comprises:
reading out a value of the first data sub-element (GA1) at a memory location (PGA1) of the first data sub-element (GA1) in the first memory area (SPA) by way of the second migration function (MIG2) in a second read step (233),
converting the value of the first data sub-element (GA1) into the fourth data type by way of the second migration function (MIG2) in a second conversion step (235), and
writing the value of the first data sub-element (GA1) that has been converted into the fourth data type at a memory location (PGB1) of the second data sub-element (GB) in the second memory area (SPB) by way of the second migration function (MIG2) in a second write step (237).

9. Method according to Claim 7 or 8, wherein the first generation step (201) furthermore comprises:
if the third data type of the first data sub-element (GA1) and the fourth data type of the second data sub-element (GB1) are a composite type, and
if the first data sub-element (GA1) comprises at least one first component (MA) of a fifth data type and the second data sub-element (GB1) comprises at least one second component (MB) of a sixth data type,
identifying the data type of the first component (MA) as the fifth data type and the data type of the second component (MB) as the sixth data type in a fourth identification step (239), and
generating a third migration function (MIG3) for mapping the first component (MA) to the second component (MB) on the basis of the identified fifth data type and sixth data type in a third generation step (243), wherein the third migration function (MIG3) is configured to read out data of the fifth data type in the first memory area (SPA), to convert read-out data into the sixth data type and to store data converted into the sixth data type (MB) in the second memory area (SPB).

10. Method according to Claim 9, wherein the migration step (207) comprises:
calling the third migration function (MIG3) by way of the second migration function (MIG2) and executing the third migration function (MIG3) in a second partial migration step (245), and wherein the second partial migration step (245) comprises:
reading out a value of the first component (MA) at a memory location (PMA) of the first component (MA) in the first memory area (SPA) by way of the third migration function (MIG3) in a third read step (247) ,
converting the value of the first component (MA) into the sixth data type by way of the third migration function (MIG3) in a third conversion step (249), and
writing the value of the first component (MA) that has been converted into the sixth data type at a memory location (PMB) of the second component (MB) in the second memory area (SPB) by way of the third migration function (MIG3) in a third write step (251) .

11. Method according to any one of the preceding Claims 7 to 10, wherein the first generation step (201) furthermore comprises:
if the third data type and the fourth data type are a field type, and
if the first data sub-element (GA1) and the second data sub-element (GB1) comprise an identical number of dimensions, wherein in at least one dimension the first data sub-element (GA1) comprises first elements of a seventh data type indexed according to a first index range [U0,..., UM], and in at least one dimension the second data sub-element (GB1) comprises second elements of an eighth data type indexed according to a second index range [X0,..., XN], and
if the first index range [U0,..., UM] and the second index range [X0,..., XN] are identical for the at least one dimension,
identify the data type of each first element indexed according to the first index range [U0,..., UM] as the seventh data type and the data type of each second element indexed according to the second index range [X0,..., XN] as the eighth data type, in a sixth identification step (253),
generating a fourth migration function for mapping first elements to second elements on the basis of the identified seventh data type and eighth data type in a fourth generation step (257), wherein the fourth migration function is configured to read out data of the seventh data type in the first memory area (SPA), to convert read-out data into a value of the eighth data type and to store converted data in the second memory area (SPB).

12. Method according to Claim 11, wherein the first generation step (201) furthermore comprises:
if the first index range [U0,..., UM] and the second index range [X0,..., XN] are not identical, determining an interval [R, S] in the index ranges of the first data sub-element (GA1) and the second data sub-element (GB1) where R = max(X0, U0) and S = min(XN, UM) in an index determination step (259), wherein R corresponds to the maximum of the two values X0 and U0 and S corresponds to the minimum of the two values XN and UM,
identifying the data type of each first element indexed according to the interval {R, S] or the first index range [U0,..., UM] as the seventh data type and the data type of each second element indexed according to an interval [R, S] or the second index range [X0,..., XN] as the eighth data type in a sixth identification step (253), and
generating a fourth migration function for mapping first elements to second elements on the basis of the identified seventh data type and the eighth data type in a fourth generation step (257), wherein the fourth migration function is configured to read out data of the seventh data type in the first memory area (SPA), to convert read-out data into the eighth data type and to store data converted into the eighth data type in the second memory area (SPB).

13. Method according to Claim 11 or 12, wherein the first partial migration step (231) comprises:
calling the fourth migration function by way of the second migration function (MIG2) and executing the fourth migration function (MIG4) for mapping the first elements to the second elements in a third partial migration step (261), and wherein the third partial migration step (261) comprises:
reading out a value of a first element at a memory location of the first element in the first memory area (SPA) by way of the fourth migration function in a fourth read step (263),
converting the value of the first element into the eighth data type by way of the fourth migration function in a fourth conversion step (265), and
writing the value of the first element that has been converted into the eighth data type at a memory location of the second element in the second memory area (SPB) by way of the fourth migration function in a fourth write step (267).

14. Method (200) according to any one of the preceding Claims 2 to 13, wherein the value of the first data element (GA) is furthermore not mappable sufficiently accurately to a value of the second data type if a value of a first data sub-element (GA1) is not mappable sufficiently accurately to a second data sub-element (GB1), and/or if a value of a first component (MA) is not mappable sufficiently accurately to a second component (MB), and/or if a value of a first element is not mappable sufficiently accurately to a second element, and wherein the first checking step (209) furthermore comprises:
checking whether a value of a first data sub-element (GA1) is mappable sufficiently accurately to a second data sub-element (GB1), checking whether a value of a first component (MA) is mappable sufficiently accurately to a second component (MB), and
checking whether a value of a first element is mappable sufficiently accurately to a second element.

15. Method according to any one of the preceding claims, wherein the controller furthermore comprises a translator module (109) for translating a control program, and wherein the first generation step (201) is executed by the translator module (109).

## Revendications

1. Procédé (200) permettant de mettre à jour un programme de commande d'un système d'automatisation (100) avec une migration de données d'un état de programme du programme de commande, dans lequel une commande (101) du système d'automatisation (100) comprend un premier programme de commande (A) et un deuxième programme de commande (B), dans lequel le premier programme de commande (A) est exécuté pour commander le système d'automatisation (100), dans lequel le deuxième programme de commande (B) est une mise à jour du premier programme de commande (A), dans lequel le premier programme de commande (A) comprend un premier élément de données (GA) d'un premier type de données qui décrit un état de programme du premier programme de commande (A) et est mémorisé dans une première zone de mémoire (SPA) de la commande (101), dans lequel le premier élément de données (GA) comprend une pluralité de premiers sous-éléments de données (GA1) qui sont nécessaires à l'exécution du premier programme de commande (A), dans lequel le deuxième programme de commande (B) comprend un deuxième élément de données (GB) d'un deuxième type de données qui décrit un état de programme du deuxième programme de commande (B) et est mémorisé dans une deuxième zone de mémoire (SPB), et dans lequel le deuxième élément de données (GB) comprend une pluralité de deuxièmes sous-éléments de données (GB1) qui sont nécessaires à l'exécution du deuxième programme de commande (B), comprenant :
l'initialisation du deuxième élément de données (GB) dans une étape d'initialisation (269), dans lequel l'initialisation comprend un réglage d'une valeur du deuxième élément de données (GB) sur une valeur initiale prédéterminée, et dans lequel l'initialisation du deuxième élément de données (GB) comprend une initialisation de tous les deuxièmes sous-éléments de données (GB1) du deuxième élément de données ;
la génération d'une première fonction de migration (MIG1) pour mapper le premier élément de données (GA) sur le deuxième élément de données (GB) dans une première étape de génération (201),
l'interruption de l'exécution du premier programme de commande (A) dans une étape d'interruption (203),
la détermination d'une valeur du premier élément de données (GA) dans une première étape de détermination (205), dans lequel la valeur déterminée du premier élément de données (GA) décrit un état de programme du premier programme de commande (A) à l'instant de l'interruption, et
le mappage de la valeur du premier élément de données (GA) sur le deuxième élément de données (GB) et l'écriture de valeurs de premiers sous-éléments de données (GA1) dans des deuxièmes sous-éléments de données (GB1) qui sont initialisés avec une valeur initiale par l'exécution de la première fonction de migration (MIG1) dans une étape de migration (207),
**caractérisé en ce que** le programme de commande (A) est exécuté de manière cyclique et **en ce que** l'étape d'initialisation (269) est exécutée chronologiquement avant l'étape de migration (207).

2. Procédé (200) selon la revendication 1, comprenant en outre :
la vérification si la valeur du premier élément de données (GA) peut être mappée de manière suffisamment précise sur le deuxième élément de données (GB), dans une première étape de vérification (209), dans lequel la valeur du premier élément de données (GA) peut être mappée de manière suffisamment précise sur le deuxième élément de données (GB) lorsque la valeur du premier élément de données (GA) peut être représentée dans le deuxième type de données,
si la valeur du premier élément de données (GA) peut être mappée sur le deuxième élément de données (GB), l'appel cyclique du deuxième programme de commande (B) en tenant compte du deuxième élément de données (GB) et la commande du système d'automatisation (100) sur la base du deuxième programme de commande (B) dans une première étape de commande (211), et
si la valeur du premier élément de données (GA) ne peut pas être mappée sur le deuxième élément de données (GB), la poursuite de l'appel cyclique du premier programme de commande (A) en tenant compte du premier élément de données (GA) et la commande du système d'automatisation (100) sur la base du premier programme de commande (A) dans une deuxième étape de commande (213) .

3. Procédé (200) selon la revendication 1 ou 2, dans lequel en outre la valeur du premier élément de données (GA) ne peut pas être mappée de manière suffisamment précise sur le deuxième élément de données (GB) lorsqu'un mappage de la valeur du premier élément de données (GA) sur le deuxième élément de données (GB) à l'étape de migration (207) dépasse un laps de temps prédéterminé.

4. Procédé (200) selon la revendication 1, 2 ou 3, comprenant en outre :
la vérification si à la première étape de génération (201), la première fonction de migration (MIG1) a pu être générée dans une deuxième étape de vérification (215), et
si à la première étape de génération (201) la première fonction de migration (MIG1) n'a pas pu être générée, la poursuite de l'appel cyclique du premier programme de commande (A) en tenant compte du premier élément de données (GA) et la commande du système d'automatisation (100) sur la base du premier programme de commande (A) dans une deuxième étape de commande (213).

5. Procédé (200) selon l'une quelconque des revendications précédentes, dans lequel la première fonction de migration (MIG1) est conçue pour lire des données du premier type de données dans la première zone de mémoire (SPA), convertir des données lues du premier type de données en données du deuxième type de données, et mémoriser des données converties en deuxième type de données dans la deuxième zone de mémoire (SPB), et dans lequel l'étape de migration (207) comprend :
la lecture de la valeur du premier élément de données (GA) à un emplacement de mémoire (PGA) du premier élément de données (GA) dans la première zone de mémoire (SPA) par la première fonction de migration (MIG1) dans une première étape de lecture (217),
la conversion de la valeur du premier élément de données (GA) en une valeur du deuxième type de données par la première fonction de migration (MIG1) dans une première étape de conversion (219), et
l'écriture de la valeur, convertie en deuxième type de données, du premier élément de données (GA) à un emplacement de mémoire (PGB) du deuxième élément de données (GB) dans la deuxième zone de mémoire (SPB) par la première fonction de migration (MIG1) dans une première étape d'écriture (221).

6. Procédé selon l'une quelconque des revendications précédentes, dans lequel la première étape de génération (201) comprend en outre :
l'identification du type de données du premier élément de données (GA) comme premier type de données, et l'identification du type de données du deuxième élément de données (GB) comme deuxième type de données dans une première étape d'identification (223), et dans lequel la première fonction de migration (MIG1) est générée sur la base du premier type de données identifié et du deuxième type de données identifié.

7. Procédé selon l'une quelconque des revendications précédentes, dans lequel la première étape de génération (201) comprend en outre :
si le premier type de données du premier élément de données (GA) et le deuxième type de données du deuxième élément de données (GB) sont respectivement des types composites, et si le premier élément de données (GA) comprend au moins un premier sous-élément de données (GA1) d'un troisième type de données, et le deuxième élément de données (GB) comprend au moins un deuxième sous-élément de données (GB1) d'un quatrième type de données,
l'identification du type de données du premier sous-élément de données (GA1) comme troisième sous-type de données et du type de données du deuxième sous-élément de données (GB1) comme quatrième type de données dans une deuxième étape d'identification (225),
la génération d'une deuxième fonction de migration (MIG2) pour mapper le premier sous-élément de données (GA1) sur le deuxième sous-élément de données (GB1) sur la base du troisième type de données identifié, du quatrième type de données identifié dans une deuxième étape de génération (229), dans lequel la deuxième fonction de migration (MIG2) est conçue pour lire des éléments de données du troisième type de données dans la première zone de mémoire (SPA), convertir des données lues du troisième type de données en quatrième type de données, et mémoriser des données converties en quatrième type de données dans la deuxième zone de mémoire (SPB).

8. Procédé selon la revendication 7, dans lequel l'étape de migration (207) comprend :
l'appel de la deuxième fonction de migration (MIG2) par la première fonction de migration (MIG1) et l'exécution de la deuxième fonction de migration (MIG2) pour mapper une valeur du premier sous-élément de données (GA1) sur le deuxième sous-élément de données (GB1) dans une première étape de migration partielle (231), et dans lequel la première étape de migration partielle (231) comprend :
la lecture d'une valeur du premier sous-élément de données (GA1) à un emplacement de mémoire (PGA1) du premier sous-élément de données (GA1) dans la première zone de mémoire (SPA) par la deuxième fonction de migration (MIG2) dans une deuxième étape de lecture (233) ,
la conversion de la valeur du premier sous-élément de données (GA1) en quatrième type de données par la deuxième fonction de migration (MIG2) dans une deuxième étape de conversion (235), et
l'écriture de la valeur convertie en quatrième type de données du premier sous-élément de données (GA1) à un emplacement de mémoire (PGB1) du deuxième sous-élément de données (GB) dans la deuxième zone de mémoire (SPB) par la deuxième fonction de migration (MIG2) dans une deuxième étape d'écriture (237).

9. Procédé selon la revendication 7 ou 8, dans lequel la première étape de génération (201) comprend en outre :
si le troisième type de données du premier sous-élément de données (GA1) et le quatrième type de données du deuxième sous-élément de données (GB1) sont des types composites, et si le premier sous-élément de données (GA1) comprend au moins une première composante (MA) d'un cinquième type de données et le deuxième sous-élément de données (GB1) comprend au moins une deuxième composante (MB) d'un sixième type de données,
l'identification du type de données de la première composante (MA) comme cinquième type de données et du type de données de la deuxième composante (MB) comme sixième type de données dans une quatrième étape d'identification (239), et
la génération d'une troisième fonction de migration (MIG3) pour mapper la première composante (MA) sur la deuxième composante (MB) sur la base du cinquième type de données et du sixième type de données identifiés dans une troisième étape de génération (243), dans lequel la troisième fonction de migration (MIG3) est conçue pour lire des données du cinquième type de données dans la première zone de mémoire (SPA), convertir des données lues en sixième type de données, et mémoriser des données converties en sixième type de données (MB) dans la deuxième zone de mémoire (SPB).

10. Procédé selon la revendication 9, dans lequel l'étape de migration (207) comprend :
l'appel de la troisième fonction de migration (MIG3) par la deuxième fonction de migration (MIG2) et l'exécution de la troisième fonction de migration (MIG3) dans une deuxième étape de migration partielle (245), et dans lequel la deuxième étape de migration partielle (245) comprend :
la lecture d'une valeur de la première composante (MA) à un emplacement de mémoire (PMA) de la première composante (MA) dans la première zone de mémoire (SPA) par la troisième fonction de migration (MIG3) dans une troisième étape de lecture (247),
la conversion de la valeur de la première composante (MA) en sixième type de données par la troisième fonction de migration (MIG3) dans une troisième étape de conversion (249), et
l'écriture de la valeur convertie en sixième type de données de la première composante (MA) à un emplacement de mémoire (PMB) de la deuxième composante (MB) dans la deuxième zone de mémoire (SPB) par la troisième fonction de migration (MIG3) dans une troisième étape d'écriture (251).

11. Procédé selon l'une quelconque des revendications précédentes 7 à 10, dans lequel la première étape de génération (201) comprend en outre :
si le troisième type de données et le quatrième type de données sont des types de champ, et
si le premier sous-élément de données (GA1) et le deuxième sous-élément de données (GB1) comprennent un nombre identique de dimensions,
dans lequel le premier sous-élément de données (GA1) présente dans au moins une dimension des premiers éléments indexés selon une première plage d'index [U0, ..., UM] d'un septième type de données, et le deuxième sous-élément de données (GB1) présente dans au moins une dimension des deuxièmes éléments indexés selon une deuxième plage d'index [X0, ..., XN] d'un huitième type de données, et
si pour ladite au moins une dimension la première plage d'index [U0, ..., UM] et la deuxième plage d'index [X0, ..., XN] sont identiques,
l'identification du type de données de chaque premier élément indexé selon la première plage d'index [U0, ..., UM] comme septième type de données, et du type de données de chaque deuxième élément indexé selon la deuxième plage d'index [X0, ..., XN] comme huitième type de données, dans une sixième étape d'identification (253) ,
la génération d'une quatrième fonction de migration pour mapper des premiers éléments sur des deuxièmes éléments sur la base du septième type de données et du huitième type de données identifiés dans une quatrième étape de génération (257), dans lequel la quatrième fonction de migration est conçue pour lire des données du septième type de données dans la première zone de mémoire (SPA), convertir des données lues en une valeur du huitième type de données, et mémoriser les données converties dans la deuxième zone de mémoire (SPB).

12. Procédé selon la revendication 11, dans lequel la première étape de génération (201) comprend en outre :
si la première plage d'index [U0, ..., UM] et la deuxième plage d'index [X0, ..., XN] ne sont pas identiques, la détermination d'un intervalle [R, S] dans les plages d'index du premier sous-élément de données (GA1) et du deuxième sous-élément de données (GB1), où R = max(X0, U0) et S = min(XN, UM), dans une étape de détermination d'index (259), R correspondant au maximum des deux valeurs X0 et U0 et S correspondant au minimum des deux valeurs XN et UM,
l'identification du type de données de chaque premier élément indexé selon l'intervalle [R, S] ou la première plage d'index [U0, ..., UM] comme septième type de données, et du type de données de chaque deuxième élément indexé selon un intervalle [R, S] ou la deuxième plage d'index [X0, ..., XN] comme huitième type de données, dans une sixième étape d'identification (253), et
la génération d'une quatrième fonction de migration pour mapper des premiers éléments sur des deuxièmes éléments sur la base du septième type de données et du huitième type de données identifiés dans une quatrième étape de génération (257), dans lequel la quatrième fonction de migration est conçue pour lire des données du septième type de données dans la première zone de mémoire (SPA), convertir des données lues en huitième type de données, et mémoriser des données converties en huitième type de données dans la deuxième zone de mémoire (SPB).

13. Procédé selon la revendication 11 ou 12, dans lequel la première étape de migration partielle (231) comprend :
l'appel de la quatrième fonction de migration par la deuxième fonction de migration (MIG2) et l'exécution de la quatrième fonction de migration (MIG4) pour mapper les premiers éléments sur les deuxièmes éléments dans une troisième étape de migration partielle (261), et dans lequel la troisième étape de migration partielle (261) comprend :
la lecture d'une valeur d'un premier élément à un emplacement de mémoire du premier élément dans la première zone de mémoire (SPA) par la quatrième fonction de migration dans une quatrième étape de lecture (263),
la conversion de la valeur du premier élément en huitième type de données par la quatrième fonction de migration dans une quatrième étape de conversion (265), et
l'écriture de la valeur, convertie en huitième type de données, du premier élément à un emplacement de mémoire du deuxième élément dans la deuxième zone de mémoire (SPB) par la quatrième fonction de migration dans une quatrième étape d'écriture (267).

14. Procédé (200) selon l'une quelconque des revendications précédentes 2 à 13, dans lequel en outre la valeur du premier élément de données (GA) ne peut pas être mappée de manière suffisamment précise sur une valeur du deuxième type de données lorsqu'une valeur d'un premier sous-élément de données (GA1) ne peut pas être mappée de manière suffisamment précise sur un deuxième sous-élément de données (GB1), et/ou lorsqu'une valeur d'une première composante (MA) ne peut pas être mappée de manière suffisamment précise sur une deuxième composante (MB), et/ou lorsqu'une valeur d'un premier élément ne peut pas être mappée de manière suffisamment précise sur un deuxième élément, et dans lequel la première étape de vérification (209) comprend en outre :
la vérification si une valeur d'un premier sous-élément de données (GA1) peut être mappée de façon suffisamment précise sur un deuxième sous-élément de données (GB1), la vérification si une valeur d'une première composante (MA) peut être mappée de manière suffisamment précise sur une deuxième composante (MB), et
la vérification si une valeur d'un premier élément peut être mappée de manière suffisamment précise sur un deuxième élément.

15. Procédé selon l'une quelconque des revendications précédentes, dans lequel la commande comprend en outre un module de traduction (109) pour traduire un programme de commande, et dans lequel la première étape de génération (201) est effectuée par le module de traduction (109).
